# EUROPÄISCHE PATENTSCHRIFT

(11) **EP 4 303 620 B1**
(45) Veröffentlichungstag und Bekanntmachung des Hinweises auf die Patenterteilung: **01.07.2026**
(21) Anmeldenummer: 23212139.2
(22) Anmeldetag: 10.11.2016
(51) Int. Cl.: G01S 7/481, G01S 17/42, G01S 17/89, G01S 7/497, G01S 17/86, G01S 7/51, F16B 21/16

(54) **LASERSCANNER**
LASER SCANNER
DISPOSITIF DE BALAYAGE LASER

(43) Veröffentlichungstag der Anmeldung: 10.01.2024
(62) Teilanmeldung aus: 16794345.5
(73) Patentinhaber: LEICA GEOSYSTEMS AG, 9435 Heerbrugg (CH)
(72) Erfinder: MARK, Simon, 9425 Thal (CH); BEREUTER, Klaus, 6861 Alberschwende (AT); MÜLLER, Benjamin, 9000 St.Gallen (CH); STEFFEN, Roman, 9445 Rebstein (CH); BÖCKEM, Burkhard, 8916 Jonen AG (CH); DOLD, Jürgen, 6204 Sempach (CH); SCHEJA, Jochen, 6845 Hohenems (AT); HEINZLE, Lukas, 8820 Wädenswil (CH); DUMOULIN, Charles Leopold Elisabeth, 9436 Balgach (CH)
(74) Vertreter: Kaminski Harmann

(56) Entgegenhaltungen:
- EP-A2- 2 506 035

## Beschreibung

Die Erfindung bezieht sich auf Laserscanner zur optischen Vermessung und zur Darstellung einer Umgebung, insbesondere zur Erzeugung und Darstellung einer eingefärbten 3D-Punktwolke.

Eine dreidimensionale Vermessung von Räumen und Umgebungen ist beispielsweise für Handwerker und Architekten von grossem Interesse, da auf diese Weise ein Ist-Zustand und/oder ein Baufortschritt von Räumen oder von einer Baustelle schnell erfasst und anstehende Arbeiten geplant werden können. Mittels einer Visualisierung in Form einer Punktwolke, beispielsweise in Kombination mit mehreren zeitlichen Ebenen mittels einer erweiterten Realität und/oder in Form einer virtuellen Realität, können anschliessend unterschiedliche Optionen für weitere Schritte oder Ausbaumöglichkeiten geprüft werden und gegebenenfalls einem Mitarbeiter oder Kunden auf einfache Weise präsentiert werden. Ein Laserscanner des Standes der Technik ist in EP 2 506 035 A2 gezeigt.

Eine Umgebung kann mittels eines Laserscanners optisch abgetastet und vermessen werden. Ein gängiger Ansatz ist dabei eine Abtastung der Umgebung mittels gepulster elektromagnetischer Strahlung, wie z.B. Laserlicht, wobei ein Echo von einem rückstreuenden Oberflächenpunkt der Umgebung empfangen wird und beispielsweise anhand der Laufzeit, der Form, und/oder der Phase des Pulses eine Distanz zum Oberflächenpunkt abgeleitet wird und jeweils mit der räumlichen Position des Oberflächenpunktes verknüpft wird, beispielsweise mittels Winkelinformationen zum Zeitpunkt der Messung und mittels des bekannten Standorts des Laserscanners.

Wesentliche Unterschiede in der Bauform eines Laserscanners ergeben sich insbesondere dadurch, ob der Laserscanner für eine optische Abtastung in Form einer Rasterabtastung oder in Form einer scannenden Abtastung vorgesehen ist, wobei sich die vorliegende Erfindung hauptsächlich auf scannende Laserscanner bezieht, im Speziellen auf Laserscanner mit einer mit grosser Geschwindigkeit rotierenden Strahlumlenkeinheit.

Bei einer Rasterabtastung erfolgt die optische Abtastung beispielsweise mittels einer spezifischen Einzelabtastung mehrerer Oberflächenpunkte, z.B. anhand eines vorgegebenen Abtastrasters für die abzutastende Umgebung, also mittels spezifischen Anzielens einzelner vordefinierter Rasterpunkte.

Bei einer scannenden Abtastung wird typischerweise mittels mindestens eines rotierenden Strahlumlenkelements zur Ausrichtungsvariation der Emissionsrichtung des Distanzmesstrahls, z.B. ein bezüglich einer Drehachse geneigter Planspiegel, eine Vielzahl von Messpunkten erfasst und räumlich vermessen, wobei beispielsweise eine gewünschte Punkt-Zu-Punkt-Auflösung mittels Einstellung der Pulsrate des Distanzmesstrahls und/oder mittels Anpassung der Rotationsgeschwindigkeit des Strahlumlenkelements erfolgt. Anschliessend kann die Umgebung basierend auf der Vielzahl von Messpunkten mittels gängiger Datenverarbeitungsschritten und/oder Darstellungsmöglichkeiten, insbesondere als 3D-Punktwolke, analysiert und/oder unterschiedlich dargestellt werden.

Typischerweise weisen scannende Laserscanner eine oder zwei zueinander orthogonale Drehachsen auf, beispielsweise eine vertikale Drehachse für eine vergleichsweise langsame Rotation des gesamten Laserscanners, oft auch "Azimutachse" oder "langsame Achse" genannt, und eine dazu senkrecht stehende horizontale Drehachse für ein mit hoher Geschwindigkeit rotierendes Strahlumlenkelement. Aufgrund der oft verwendeten hohen Rotationsgeschwindigkeit des Strahlumlenkelements wird die zweite Achse auch als "die schnelle Achse" bezeichnet.

Für eine Abtastung von linearen oder linear befahrbaren Strukturen und Umgebungen, wie beispielsweise Gleisanlagen, Strassen, Tunnelsysteme oder Flugfelder, wird anstelle einer Rotation um die Azimutachse oft eine translatorische Bewegung des gesamten Laserscanners ausgenutzt, beispielsweise indem der Laserscanner auf einem Fahrzeug montiert wird. Solche, lediglich die schnelle Achse aufweisende, Laserscanner werden auch Profiler genannt.

Derartige Laserscanner mit einer schnellen Achse, und gegebenenfalls mit einer Azimutachse oder in Kombination mit einer Translationsbewegung, befähigen einen Benutzer grosse Oberflächen und Objekte mit einem relativ geringen Zeitaufwand abzutasten.

Für zusätzliche Informationen können die Informationen und Abtastdaten zum Beispiel mit Kameradaten kombiniert und verarbeitet werden, insbesondere RGB-Kameradaten oder Infrarotdaten.

Gegebenenfalls weisen in Laserscannern zur räumlichen Vermessung verwendete Distanzmessmodule eine Intensitätsempfindlichkeit auf, jedoch keine Farbempfindlichkeit, weshalb die erzeugte 3D-Punktwolke ohne Zuhilfenahme von zusätzlichen Daten in Graustufen dargestellt werden. Mittels einer Referenzierung der "grauen" 3D-Punktwolke mit RGB-Daten einer Farbkamera kann zum Beispiel eine "farbige" 3D-Punktwolke erzeugt werden, wodurch beispielsweise die Darstellung für das menschliche Auge deutlich erleichtert wird. Die Referenzierung von unterschiedlichen Daten und Datensätzen, beispielsweise von zeitlich und örtlich variierenden Messkampagnen, erfolgt heutzutage zunehmend standardisiert.

Laserscanner können zudem mit einem Positions- und Orientierungssystem ausgebildet sein, beispielsweise mittels eines Trägheitssystems, Neigungssensoren oder eines Empfängers für ein globales Satelliten-Navigationssystem, beispielsweise wobei lokale Abtastdaten automatisch mit einem globalen 3D-Koordinatensystem referenziert werden.

Es ist eine Aufgabe der Erfindung, einen verbesserten Laserscanner und ein verbessertes System zur Vermessung und zur Darstellung einer Umgebung mittels eines Laserscanners zur Verfügung zu stellen.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Vermessungssystem zur optischen Vermessung und zur Darstellung einer Umgebung, mit einem Laserscanner zur Erfassung von Messdaten, einer Verarbeitungseinheit zur Verarbeitung von Teilen der Messdaten in verarbeitete Messdaten und einem Display für eine Darstellung von Teilen der verarbeiteten Messdaten, welche zumindest einen Teilbereich der Umgebung repräsentieren; wobei der Laserscanner umfasst eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, einen flächigen Sensor zur Erfassung von Flächensensordaten, insbesondere mindestens eine Farb-Kamera zur Aufnahme von Bilddaten, wobei durch den Sensor eine optische Achse des Sensors und eine Blickrichtung des Sensors entlang der optischen Achse definiert ist, eine Basis, eine Stütze, welche um eine Stütz-Drehachse, insbesondere eine langsame Drehachse, drehbar auf der Basis befestigt ist, eine Strahllenkeinheit für die Distanzmessstrahlung, welche um eine zur Stütz-Drehachse im Wesentlichen orthogonale Strahl-Drehachse, insbesondere eine schnelle Drehachse, drehbar an der Stütze befestigt ist, einen ersten Winkelencoder zur Erfassung von ersten Winkeldaten bezüglich einer Drehung der Stütze um die Stütz-Drehachse und einen zweiten Winkelencoder zur Erfassung von zweiten Winkeldaten bezüglich einer Drehung der Strahllenkeinheit um die Strahl-Drehachse, wobei die Distanzmessdaten, die Flächensensordaten und die ersten und zweiten Winkeldaten, nachfolgend Messdaten genannt (wobei die Distanzmessdaten in Kombination mit den ersten und zweiten Winkeldaten oft auf Abtastmessdaten genannt werden), im Rahmen eines Messvorgangs erfasst werden, welcher umfasst eine scannende Abtastung mittels der Distanzmessvorrichtung mit einer definierten fortlaufenden, insbesondere kontinuierlichen, Drehung der Stütze um die Stütz-Drehachse, einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung, und ein mehrmaliges Auslesen des flächigen Sensors bezüglich unterschiedlicher Blickrichtungen des Sensors.

Ein optionaler Aspekt bezieht sich beispielsweise darauf, dass die Verarbeitungseinheit auf einem zum Laserscanner separaten Rechengerät, insbesondere Computer oder Tablet, angeordnet ist, und der Laserscanner und das Rechengerät derart konfiguriert sind, dass eine Übertragung der Messdaten vom Laserscanner auf das Rechengerät erfolgt, insbesondere drahtlos, im Speziellen mittels WLAN- oder Bluetooth-Verbindung, die Übertragung der Messdaten während des Messvorgangs erfolgt, mittels eines bezüglich dem Start des Messvorgangs gleichzeitig oder zumindest zeitnah gestarteten Datenstreamings von Teilen der Messdaten, eine zumindest initiale Verarbeitung der Teile der Messdaten bezüglich einer Verknüpfung der Flächensensordaten mit den Distanzmessdaten und den ersten und zweiten Winkeldaten während dem Messvorgang erfolgt, und die Darstellung von Teilen der verarbeiteten Messdaten während dem Messvorgang erfolgt und fortlaufend, insbesondere kontinuierlich, basierend auf den verarbeiteten Messdaten aktualisiert wird, insbesondere ergänzt und/oder erneuert, im Speziellen wobei für die Darstellung ein mit dem Rechengerät gekoppeltes oder integriertes Display vorgesehen ist.

Eine Ausführungsform bezieht sich beispielsweise darauf, dass durch eine fiktive 360-Grad-Drehung der Strahllenkeinheit um die Strahl-Drehachse eine Abtastebene der Distanzmessstrahlung definiert ist, und der flächige Sensor an der Stütze angeordnet und derart ausgerichtet ist, dass sich seine azimutale Blickrichtung und die azimutale Ausrichtung der Abtastebene unterscheiden, das heisst, dass eine fiktive rückwärtige Verlängerung der optischen Achse des flächigen Sensors die Abtastebene unter einem definierten Schnittwinkel schneidet, insbesondere wobei der Schnittwinkel mindestens 45 Grad beträgt, im Speziellen wobei die Abtastebene nicht vom Gesichtsfeld des flächigen Sensors erfasst wird, wobei ein erster vorprogrammierter Messvorgang mit definierten Schritten entsprechend der nachstehenden zeitlichen Reihenfolge durchgeführt wird:
- Bereitstellen von Flächensensordaten umfassend
   ∘ Drehung der Stütze um die Stütz-Drehachse,
   ∘ Auslesen des flächigen Sensors zur Erfassung von Flächensensordaten, und
   ∘ Datenstreaming eines Teils der erfassten Flächensensordaten auf das Rechengerät,
   insbesondere wobei basierend auf dem Datenstreaming eine initiale Verarbeitung und Darstellung der erfassten Flächensensordaten erfolgt,
- Bereitstellen von Abtastmessdaten, nämlich Distanzmessdaten und zugehörige erste und zweite Winkeldaten, umfassend,
   ∘ Drehung der Stütze um die Stütz-Drehachse,
   ∘ Drehung der Strahllenkeinheit um die Strahl-Drehachse,
   ∘ Aussenden der Distanzmessstrahlung und Empfangen von zurückkommenden Teilen der Distanzmessstrahlung zur Erfassung von Distanzmessdaten, wobei im Rahmen der Erfassung der Distanzmessdaten zugehörige erste und zweite Winkeldaten erfasst werden, und
   ∘ Datenstreaming eines Teils der erfassten Abtastmessdaten auf das Rechengerät,
- initiale Verarbeitung der mittels Datenstreaming übertragenen Teile der Flächensensordaten und Abtastmessdaten, und
- Darstellung der verknüpften mittels Datenstreaming übertragenen Teile der Flächensensordaten und Abtastmessdaten in Form einer eingefärbten 3D-Punktwolke.

Eine weitere Ausführungsform bezieht sich darauf, dass ein zweiter vorprogrammierter Messvorgang mit einer definierten zeitlichen Abfolge von folgenden Schritten durchgeführt wird:
- Bereitstellen eines ersten Satzes von Flächensensordaten, insbesondere Flächensensordaten mit reduzierter Auflösung, umfassend
   ∘ Drehung der Stütze um die Stütz-Drehachse,
   ∘ Auslesen des flächigen Sensors zur Erfassung von Flächensensordaten, und
   ∘ Datenstreaming eines Teils der erfassten Flächensensordaten auf das Rechengerät,
   insbesondere wobei basierend auf dem Datenstreaming eine initiale Verarbeitung und Darstellung des ersten Satzes von Flächensensordaten erfolgt,
- Ableitung eines Satzes von Flächensensor-Belichtungszeiten basierend auf dem ersten Satz von Flächensensordaten, und
- Bereitstellen eines zweiten Satzes von Flächensensordaten, basierend auf dem Satz von Flächensensor-Belichtungszeiten, umfassend
   ∘ Drehung der Stütze um die Stütz-Drehachse,
   ∘ Auslesen des flächigen Sensors zur Erfassung von Flächensensordaten, und
   o Datenstreaming eines Teils der erfassten Flächensensordaten auf das Rechengerät,
   insbesondere wobei basierend auf dem Datenstreaming eine initiale Verarbeitung und Darstellung des zweiten Satzes von Flächensensordaten erfolgt.

Eine weitere Ausführungsform bezieht sich darauf, dass ein dritter vorprogrammierter Messvorgang mit einer definierten zeitlichen Abfolge von folgenden Schritten durchgeführt wird:
- Bereitstellen von Flächensensordaten umfassend
   ∘ Drehung der Stütze um die Stütz-Drehachse,
   ∘ Auslesen des flächigen Sensors zur Erfassung von Flächensensordaten, insbesondere wobei die Erfassung der Flächensensordaten eine Datenverarbeitung von ausschliesslich ausgelesenen, nämlich unbearbeiteten, Flächensensor-Rohdaten umfasst, und
   ∘ Datenstreaming eines Teils der erfassten Flächensensordaten auf das Rechengerät,
   insbesondere wobei basierend auf dem Datenstreaming eine initiale Verarbeitung und Darstellung der erfassten Flächensensordaten erfolgt,
- Bereitstellen von Abtastmessdaten umfassend,
   ∘ Drehung der Stütze um die Stütz-Drehachse,
   ∘ Drehung der Strahllenkeinheit um die Strahl-Drehachse,
   ∘ Aussenden der Distanzmessstrahlung und Empfangen von zurückkommenden Teilen der Distanzmessstrahlung zur Erfassung von Distanzmessdaten, wobei im Rahmen der Erfassung der Distanzmessdaten zugehörige erste und zweite Winkeldaten erfasst werden und die Erfassung der Distanzmessdaten eine Datenverarbeitung von ausschliesslich empfangenen, nämlich unbearbeiteten, Distanzmess-Rohdaten umfasst, und
   ∘ Datenstreaming eines Teils der erfassten Abtastmessdaten auf das Rechengerät,
- initiale Verarbeitung der mittels Datenstreaming übertragenen Teile der Flächensensordaten und Abtastmessdaten, und
- Darstellung der verknüpften mittels Datenstreaming übertragenen Teile der Flächensensordaten und Abtastmessdaten in Form einer eingefärbten 3D-Punktwolke,
insbesondere wobei die Datenverarbeitung der Distanzmess-Rohdaten eine Berücksichtigung von von den ersten und/oder zweiten Winkeldaten abhängigen Parametern im Rahmen einer Referenzierung der Messdaten bezüglich eines gemeinsamen Koordinatensystems umfasst.

Eine weitere Ausführungsform bezieht sich darauf, dass der Laserscanner und das Rechengerät derart konfiguriert sind, dass mittels einer Kontroll- und Steuereinheit auf dem Rechengerät Kontrollsignale auf den Laserscanner übertragen werden können, insbesondere drahtlos, im Speziellen mittels WLAN- oder Bluetooth-Verbindung.

Eine weitere Ausführungsform bezieht sich darauf, dass das Rechengerät mit einem Trägheitsmesssystem und/oder Neigungssensoren ausgestattet ist, sodass aufgrund einer Lage des Rechengeräts, insbesondere eine Position und/oder Orientierung, eine Einstellung einer Drehlage der Stütze um die Stütz-Drehachse und/oder eine Einstellung einer Drehlage der Strahllenkeinheit um die Strahl-Drehachse erfolgt, insbesondere im Wesentlichen synchron mit einer Lageänderung des Rechengeräts, insbesondere wobei mittels Einstellung mindestens einer ersten Lage des Rechengeräts mindestens ein Interessensbereich der Umgebung definiert werden kann, insbesondere wobei für den mindestens einen Interessensbereich definierte Einstellungen für die Erfassung von Messdaten und/oder definierte Einstellungen für die Darstellung von Teilen der verarbeiteten Messdaten vorgenommen werden können, insbesondere wobei die definierte Einstellung für die Erfassung von Messdaten eine Messauflösung des Flächensensors und/oder eine Messgenauigkeit der Distanzmessvorrichtung und/oder eine Abtast-Auflösung der Distanzmessvorrichtung umfasst, und/oder die definierte Einstellung für die Darstellung von Teilen der verarbeiteten Messdaten eine Darstellungsauflösung und/oder eine Farbeinstellung und/oder eine Grauwerteinstellung und/oder eine definierte Hervorhebung bezüglich eines Unterbereichs innerhalb des Interessensbereichs umfasst.

Eine weitere Ausführungsform bezieht sich darauf, dass das Rechengerät derart konfiguriert ist, dass für die Verarbeitung der Messdaten und/oder für die Darstellung von Teilen der verarbeiteten Messdaten auf Hilfsdaten zugegriffen werden kann, insbesondere wobei die Hilfsdaten für eine Visualisierung in Form einer erweiterten Realität und/oder in Form einer virtuellen Realität herangezogen werden.

Eine weitere Ausführungsform bezieht sich darauf, dass der Laserscanner eine Lagebestimmungseinheit zur Bereitstellung von Referenzierungsdaten umfasst, insbesondere Position- und/oder Orientierung des Laserscanners, mit mindestens einem Element der folgenden Gruppe einem Trägheitsmesssystem, einem Neigungssensor zur Erfassung mindestens einer Neigung gegenüber der Richtung der Schwerkraft, einem Empfänger für ein globales Satelliten-Navigatinssystem und/oder für ein Pseudo-Satelliten-Navigationssystem, einem Kompass, insbesondere einen elektronischen Kompass, und einem Barometer, wobei die Messdaten die Referenzierungsdaten mit umfassen, und/oder die Datenverarbeitung auf einem Verfahren zur simultanen Lokalisation und Kartenerstellung (SLAM) basiert.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, einen flächigen Sensor zur Erfassung von Flächensensordaten, insbesondere mindestens eine Farb-Kamera zur Aufnahme von Bilddaten, wobei durch den Sensor eine optische Achse des Sensors und eine Blickrichtung des Sensors entlang der optischen Achse definiert ist, eine Basis, eine Stütze, welche um eine Stütz-Drehachse, insbesondere eine langsame Drehachse, drehbar auf der Basis befestigt ist, eine Strahllenkeinheit für die Distanzmessstrahlung, welche um eine zur Stütz-Drehachse im Wesentlichen orthogonale Strahl-Drehachse, insbesondere eine schnelle Drehachse, drehbar an der Stütze befestigt ist, einen ersten Winkelencoder zur Erfassung von ersten Winkeldaten bezüglich einer Drehung der Stütze um die Stütz-Drehachse, und einen zweiten Winkelencoder zur Erfassung von zweiten Winkeldaten bezüglich einer Drehung der Strahllenkeinheit um die Strahl-Drehachse, wobei die Distanzmessdaten, die Flächensensordaten und die ersten und zweiten Winkeldaten, nachfolgend Messdaten genannt, im Rahmen eines Messvorgangs erfasst werden, welcher umfasst eine scannende Abtastung mittels der Distanzmessvorrichtung mit einer definierten fortlaufenden, insbesondere kontinuierlichen, Drehung der Stütze um die Stütz-Drehachse, einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung, und ein mehrmaliges Auslesen des flächigen Sensors bezüglich unterschiedlicher Blickrichtungen des Sensors.

Dieser optionale Aspekt ist dadurch gekennzeichnet, dass durch eine virtuelle 360-Grad-Drehung der Strahllenkeinheit um die Strahl-Drehachse eine Abtastebene der Distanzmessstrahlung definiert ist, und der flächige Sensor an der Stütze angeordnet und derart ausgerichtet ist, dass sich seine azimutale Blickrichtung und die azimutale Ausrichtung der Abtastebene unterscheiden, insofern, dass eine fiktive rückwärtige Verlängerung der optischen Achse des flächigen Sensors die Abtastebene unter einem definierten Schnittwinkel schneidet, insbesondere wobei der Schnittwinkel mindestens 45 Grad beträgt, im Speziellen wobei die Abtastebene nicht vom Gesichtsfeld des flächigen Sensors erfasst wird, wobei ein voll automatisierter erster vorprogrammierter Messvorgang mit definierten Schritten entsprechend der nachstehenden zeitlichen Reihenfolge durchgeführt wird:
- Aufnahme von Flächensensordaten umfassend
   ∘ Drehung der Stütze um die Stütz-Drehachse, und
   ∘ Auslesen des flächigen Sensors zur Erfassung von Flächensensordaten,
   insbesondere wobei eine initiale Verarbeitung und Darstellung der erfassten Flächensensordaten erfolgt,
- Aufnahme von Abtastmessdaten, nämlich Distanzmessdaten und zugehörige erste und zweite Winkeldaten, umfassend,
   ∘ Drehung der Stütze um die Stütz-Drehachse,
   ∘ Drehung der Strahllenkeinheit um die Strahl-Drehachse, und
   ∘ Aussenden der Distanzmessstrahlung und Empfangen von zurückkommenden Teilen der Distanzmessstrahlung zur Erfassung von Distanzmessdaten, wobei im Rahmen der Erfassung der Distanzmessdaten zugehörige erste und zweite Winkeldaten erfasst werden.

Eine Ausführungsform bezieht sich darauf, dass ein zweiter vorprogrammierter Messvorgang mit definierten Schritten entsprechend der nachstehenden zeitlichen Reihenfolge durchgeführt wird:
- Bereitstellen eines ersten Satzes von Flächensensordaten, insbesondere Flächensensordaten mit reduzierter Auflösung, umfassend
   ∘ Drehung der Stütze um die Stütz-Drehachse, und
   ∘ Auslesen des flächigen Sensors zur Erfassung von Flächensensordaten,
- Ableitung einer Flächensensor-Belichtungszeit basierend auf dem ersten Satz von Flächensensordaten, und
- Bereitstellen eines zweiten Satzes von Flächensensordaten, basierend auf der Flächensensor-Belichtungszeit, umfassend
   ∘ Drehung der Stütze um die Stütz-Drehachse, und
   ∘ Auslesen des flächigen Sensors zur Erfassung von Flächensensordaten.

Eine weitere Ausführungsform bezieht sich darauf, dass eine zumindest initiale Verarbeitung von Teilen der Messdaten zeitlich während dem Messvorgang erfolgt, insbesondere eine Verknüpfung der Abtastmessdaten und der Flächensensordaten, insbesondere wobei die Darstellung von Teilen der verarbeiteten Messdaten zeitlich während dem Messvorgang erfolgt und fortlaufend, insbesondere kontinuierlich, basierend auf den verarbeiteten Messdaten aktualisiert wird, insbesondere ergänzt und/oder erneuert, im Speziellen wobei für die Darstellung ein mit dem Laserscanner gekoppeltes oder integriertes Display vorgesehen ist.

Eine weitere Ausführungsform bezieht sich darauf, dass basierend auf den Flächensensordaten mindestens ein Interessensbereich der Umgebung definiert werden kann, insbesondere wobei für den mindestens einen Interessensbereich definierte Einstellungen für die Erfassung von Messdaten und/oder definierte Einstellungen für die Darstellung von Teilen der verarbeiteten Messdaten vorgenommen werden können.

Eine weitere Ausführungsform bezieht sich darauf, dass im Rahmen des Messvorgangs erst eine komplette Erfassung sämtlicher für den Messvorgang benötigter Flächensensordaten erfolgt, bevor die Erfassung von Abtastmessdaten beginnt, insbesondere wobei basierend auf den erfassten Flächensensordaten eine 2D-Panoramadarstellung von zumindest einem Teilbereich der Umgebung erzeugt wird oder eine 2D-Ganzkuppeldarstellung erzeugt wird.

Ein weiterer optionaler Aspekt betrifft ein Vermessungssystem zur optischen Vermessung einer Umgebung, mit einem Laserscanner zur Erfassung von Messdaten, einer Verarbeitungseinheit zur Verarbeitung von Teilen der Messdaten in verarbeitete Messdaten, und einer Darstellungseinheit für eine definierte Darstellung von Teilen der verarbeiteten Messdaten, welche zumindest einen Teilbereich der Umgebung repräsentieren, wobei der Laserscanner umfasst eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Stütze, eine Strahllenkeinheit für die Distanzmessstrahlung, welche um eine Strahl-Drehachse, insbesondere eine schnelle Drehachse, drehbar an der Stütze befestigt ist, einen Winkelencoder zur Erfassung von Winkeldaten bezüglich einer Drehung der Strahllenkeinheit um die Strahl-Drehachse, wobei die Messdaten die Distanzmessdaten und die Winkeldaten umfassen.

Der optionale Aspekt ist dadurch gekennzeichnet, dass ein zentraler Bezugspunkt des Laserscanners als Ursprung für Distanz- und Winkelmessung definiert ist, insbesondere durch den Schnittpunkt der Strahl-Drehachse mit einer Stütz-Drehachse für eine Drehung der Stütze um eine Basis, an der Stütze ein im infraroten Wellenlängenbereich empfindlicher Infrarot-Sensor integriert angeordnet ist, wobei durch den Infrarot-Sensor eine optische Achse des Infrarot-Sensors und eine Blickrichtung des Infrarot-Sensors entlang der optischen Achse definiert ist, und eine Position des Infrarot-Sensors und eine Ausrichtung seiner optischen Achse bezüglich der Strahllenkeinheit und dem zentralen Bezugspunkt bekannt ist, die Messdaten mit dem Infrarot-Sensor erfasste Infrarotdaten umfassen, und die Messdaten mit den Infrarotdaten verknüpft werden, insbesondere, sodass Temperaturinformationen für die Darstellung von Teilen der verarbeiteten Messdaten berücksichtigt werden.

Eine Ausführungsform bezieht sich darauf, dass die Darstellung von Teilen der verarbeiteten Messdaten in Form einer eingefärbten 3D-Punktwolke erzeugt wird und die Temperaturinformationen in der 3D-Punktwolke hinterlegt sind und/oder mit einer definierten Farbcodierung dargestellt werden.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Stütze, eine Strahllenkeinheit für die Distanzmessstrahlung, welche um eine Strahl-Drehachse, insbesondere eine schnelle Drehachse, drehbar an der Stütze befestigt ist, und einen Winkelencoder zur Erfassung von Winkeldaten bezüglich einer Drehung der Strahllenkeinheit um die Strahl-Drehachse, wobei die Distanzmessdaten und die Winkeldaten, nachfolgend Messdaten genannt, im Rahmen eines Messvorgangs erfasst werden, welcher eine scannende Abtastung mittels der Distanzmessvorrichtung umfasst mit einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Dieser optionale Aspekt ist dadurch gekennzeichnet, dass der Laserscanner lediglich ein einziges integriertes Bedienelement (z.B. einen einzigen Knopf, auch als Touch-Screen-Knopf oder ein einziger Schalter) aufweist, das Bedienelement lediglich einen einzigen aktivierten und einen einzigen unaktivierten Zustand aufweist und über eine äussere Wirkung schaltbar ist um den aktivierten oder unaktivierten Zustand einzunehmen, ein Satz von definierten Messprogrammen und/oder Aktionen des Laserscanners gespeichert ist, und einzelne Messprogramme und/oder Aktionen aus dem Satz von definierten Messprogrammen und/oder Aktionen ausgelöst werden basierend auf mindestens einem Element der folgenden Gruppe:
- Wechsel des Zustands des Bedienelements vom unaktiven in den aktiven Zustand,
- Wechsel des Zustands des Bedienelements vom aktiven in den unaktiven Zustand,
- Schalten des Bedienelements mittels einer andauernden äusseren Wirkung während eines definierten Zeitraums,
- eine codierte Abfolge von Zustandsänderungen des Bedienelements zwischen dem aktiven und unaktiven Zustand, und
- eine codierte Abfolge von zeitlich andauernden äusseren Wirkungen auf das Bedienelement über definierte Zeiträume.

Eine Ausführungsform bezieht sich beispielsweise darauf, dass der Satz von definierten Messprogrammen und/oder Aktionen des Laserscanners ein Aktivieren des Laserscanners umfasst, sowie mindestens ein Element der folgenden Gruppe: Deaktivieren des Laserscanners, Start des Messvorgangs, Unterbruch des Messvorgangs, Abbruch des Messvorgangs, und Neustart des Messvorgangs; insbesondere wobei ein Satz von unterschiedlichen Einstellungen für den Messvorgang gespeichert ist und/oder definiert werden kann und der Satz von definierten Messprogrammen und/oder Aktionen des Laserscanners ferner mindestens ein Element der folgenden Gruppe umfasst Setzen einer Einstellung aus dem Satz von Einstellungen für den Messvorgang, Start des Messvorgangs mit einer Einstellung aus dem Satz von Einstellungen für den Messvorgang, und Wiederherstellung einer Standardeinstellung des Laserscanners, insbesondere einer Standard-Startkonfiguration des Laserscanners.

Eine weitere Ausführungsform bezieht sich beispielsweise darauf, dass die codierte Abfolge von Zustandsänderungen des Bedienelements durch eine definierte Anzahl Zustandsänderungen während eines definierten Zeitintervalls zwischen dem aktiven und unaktiven Zustand definiert ist, und/oder die codierte Abfolge von zeitlich andauernden äusseren Wirkungen durch ein oder mehrere unterschiedlich definierte Zeiträume für eine Aufrechterhaltung der äusseren Wirkung definiert ist.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, einen flächigen Sensor zur Erfassung von Flächensensordaten, insbesondere mindestens eine Farb-Kamera zur Aufnahme von Bilddaten, wobei durch den Sensor eine optische Achse des Sensors und eine Blickrichtung des Sensors entlang der optischen Achse definiert ist, eine Stütze, eine Strahllenkeinheit für die Distanzmessstrahlung, welche um eine Strahl-Drehachse, insbesondere eine schnelle Drehachse, drehbar an der Stütze befestigt ist, einen Winkelencoder zur Erfassung von Winkeldaten bezüglich einer Drehung der Strahllenkeinheit um die Strahl-Drehachse, wobei die Distanzmessdaten, die Flächensensordaten und die Winkeldaten, nachfolgend Messdaten genannt, im Rahmen eines Messvorgangs erfasst werden, welcher umfasst eine scannende Abtastung mittels der Distanzmessvorrichtung mit einer definierten fortlaufenden, insbesondere kontinuierlichen Drehung der Strahllenkeinheit um die schnelle Drehachse, und einem fortlaufenden Aussenden der Distanzmessstrahlung und einem fortlaufenden Empfangen von zurückkommenden Teilen der Distanzmessstrahlung, und ein mehrmaliges Auslesen des flächigen Sensors bezüglich unterschiedlichen Blickrichtungen des Sensors.

Dieser optionale Aspekt ist dadurch gekennzeichnet, dass ein zentraler Bezugspunkt des Laserscanners als Ursprung für Distanz- und Winkelmessung definiert ist, insbesondere durch den Schnittpunkt der Strahl-Drehachse mit einer Stütz-Drehachse für eine Drehung der Stütze um eine Basis, der flächige Sensor fix an der Stütze mit relativ zur Stütze fest stehendem und von der Stütze wegblickenden Blickfeld angeordnet ist, insofern, dass sich das Blickfeld des Sensors im Rahmen des Messvorgangs nur bei einer Bewegung der Stütze, insbesondere einer Drehung der Stütze um die Strahl-Drehachse, ändert, und eine fiktive rückwärtige Verlängerung der optischen Achse des flächigen Sensors durch den zentralen Bezugspunkt verläuft.

Eine Ausführungsform bezieht sich beispielsweise darauf, dass eine Mehrzahl von flächigen Sensoren an der Stütze angeordnet sind, wobei jeweils für jeden einzelnen der Mehrzahl von flächigen Sensoren die fiktive rückwärtige Verlängerung seiner optischen Achse im Wesentlichen durch den zentralen Bezugspunkt verläuft.

Eine weitere Ausführungsform bezieht sich beispielsweise darauf, dass durch eine fiktive 360-Grad-Drehung der Strahllenkeinheit um die Strahl-Drehachse eine Abtastebene der Distanzmessstrahlung definiert ist, und einer der Mehrzahl von flächigen Sensoren derart angeordnet ist, dass sein Gesichtsfeldkegel die Abtastebene schneidet, insbesondere wobei die Stütze um eine Stütz-Drehachse, insbesondere eine langsame Drehachse, drehbar auf einer Basis befestigt ist und sich der Gesichtsfeldkegel des flächigen Sensors mit der steilsten elevativen Ausrichtung der optischen Achse mit einer fiktiven Verlängerung der Stütz-Drehachse schneidet.

Eine weitere Ausführungsform bezieht sich beispielsweise darauf, dass die Stütze um eine Stütz-Drehachse, insbesondere eine langsame Drehachse, drehbar auf einer Basis befestigt ist, der Laserscanner einen weiteren Winkelencoder zur Erfassung von weiteren Winkeldaten als Messdaten bezüglich einer Drehung der Stütze um die Stütz-Drehachse umfasst, der Messvorgang ferner ein mehrmaliges Auslesen der Mehrzahl von flächigen Sensoren bezüglich unterschiedlichen azimutalen Blickrichtungen der einzelnen Sensoren umfasst, und die Mehrzahl von flächigen Sensoren derart angeordnet sind, dass sie im Rahmen des Messvorgangs eine Ganzkuppelmessung ermöglichen, insbesondere wobei sich der Gesichtsfeldkegel des flächigen Sensors mit der steilsten elevativen Ausrichtung der optischen Achse mit einer fiktiven Verlängerung der Stütz-Drehachse schneidet, wobei durch die Mehrzahl von flächigen Sensoren ein minimaler Erfassungsradius für die Ganzkuppelmessung derart definiert wird, dass durch den zentralen Bezugspunkt und den minimalen Erfassungsradius eine Kugelfläche mit dem zentralen Bezugspunkt im Zentrum definiert ist, und im Rahmen des Messvorgangs durch die Mehrzahl von flächigen Sensoren mindestens eine durch die Kugelfläche definierte Halbkugelfläche gerade noch abgetastet werden kann, insbesondere wobei durch die Mehrzahl von flächigen Sensoren eine Teilfläche der Kugel abgetastet werden kann, die grösser ist als die Halbkugelfläche.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, einen flächigen Sensor zur Erfassung von Flächensensordaten, insbesondere mindestens eine Farb-Kamera zur Aufnahme von Bilddaten, wobei durch den Sensor eine optische Achse des Sensors und eine Blickrichtung des Sensors entlang der optischen Achse definiert ist, eine Stütze, eine Strahllenkeinheit für die Distanzmessstrahlung, welche um eine Strahl-Drehachse, insbesondere eine schnelle Drehachse, drehbar an der Stütze befestigt ist, einen Winkelencoder zur Erfassung von Winkeldaten bezüglich einer Drehung der Strahllenkeinheit um die Strahl-Drehachse, wobei die Distanzmessdaten, die Flächensensordaten und die Winkeldaten, nachfolgend Messdaten genannt, im Rahmen eines Messvorgangs erfasst werden, welcher umfasst eine scannende Abtastung mittels der Distanzmessvorrichtung mit einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung, und ein mehrmaliges Auslesen des flächigen Sensors bezüglich unterschiedlichen Blickrichtungen des Sensors.

Dieser optionale Aspekt ist dadurch gekennzeichnet, dass ein zentraler Bezugspunkt des Laserscanners als Ursprung für Distanz- und Winkelmessung definiert ist, insbesondere durch den Schnittpunkt der Strahl-Drehachse mit einer Stütz-Drehachse für eine Drehung der Stütze um eine Basis, eine Mehrzahl von flächigen Sensoren mit unterschiedlicher elevativer Ausrichtung der optischen Achsen fix an der Stütze angeordnet sind, insofern, dass sich die Blickfelder der Sensoren im Rahmen des Messvorgangs nur bei einer Bewegung der Stütze, insbesondere einer Drehung der Stütze um die Strahl-Drehachse, ändern, und jeweils für jeden einzelnen der Vielzahl von flächigen Sensoren die fiktive rückwärtige Verlängerung seiner optischen Achse im Wesentlichen durch den zentralen Bezugspunkt verläuft.

Eine Ausführungsform bezieht sich beispielsweise darauf, dass die Mehrzahl von flächigen Sensoren mit derselben azimutalen Richtung angeordnet sind, insbesondere wobei durch eine fiktive 360-Grad-Drehung der Strahllenkeinheit um die Strahl-Drehachse eine Abtastebene der Distanzmessstrahlung definiert ist und die optischen Achsen der Mehrzahl von flächigen Sensoren in einer Ebene ausserhalb der Abtastebene angeordnet sind.

Eine weitere Ausführungsform bezieht sich beispielsweise darauf, dass sich der Gesichtsfeldkegel des flächigen Sensors mit der steilsten elevativen Ausrichtung der optischen Achse mit der Abtastebene in einem Abstand von zwischen 0.25 und 7m vom zentralen Bezugspunkt schneidet.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, einen flächigen Sensor zur Erfassung von Flächensensordaten, insbesondere mindestens eine Farb-Kamera zur Aufnahme von Bilddaten, wobei durch den Sensor eine optische Achse des Sensors und eine Blickrichtung des Sensors entlang der optischen Achse definiert ist, eine Stütze, eine Strahllenkeinheit für die Distanzmessstrahlung, welche um eine Strahl-Drehachse, insbesondere eine schnelle Drehachse, drehbar an der Stütze befestigt ist, einen Winkelencoder zur Erfassung von Winkeldaten bezüglich einer Drehung der Strahllenkeinheit um die Strahl-Drehachse, wobei die Distanzmessdaten, die Flächensensordaten und die Winkeldaten, nachfolgend Messdaten genannt, im Rahmen eines Messvorgangs erfasst werden, welcher umfasst eine scannende Abtastung mittels der Distanzmessvorrichtung mit einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung, und ein mehrmaliges Auslesen des flächigen Sensors bezüglich unterschiedlichen Blickrichtungen des Sensors.

Dieser optionale Aspekt ist dadurch gekennzeichnet, dass der Laserscanner eine das Blickfeld des Flächensensors erhellende Leuchte umfasst, insbesondere eine oder mehrere LEDs, wobei durch die Leuchte eine optische Achse der Leuchte und eine Ausleuchtungsrichtung der Leuchte entlang der optischen Achse der Leuchte definiert ist, und die Leuchte für eine spezifisch ansteuerbare, im Wesentlichen auf das Blickfeld des flächigen Sensors gerichtete, Ausleuchtung eingesetzt wird.

Eine Ausführungsform bezieht sich beispielsweise darauf, dass der flächige Sensor an der Stütze angeordnet ist und die Leuchte direkt neben dem flächigen Sensor an der Stütze angeordnet ist, insbesondere mit einem maximalen lateralen Versatz zwischen der optischen Achse der Leuchte und der optischen Achse des flächigen Sensors von 4 cm.

Eine weitere Ausführungsform bezieht sich beispielsweise darauf, dass die Leuchte im Wesentlichen weisses Licht aussendet, das heisst breitbandiges Licht im sichtbaren Wellenlängenbereich, insbesondere indem die Leuchte als Dual-LED ausgebildet ist, nämlich als LED-Pärchen mit zwei sich bezüglich ihres ausgesendeten Spektralbereichs unterscheidenden einzelnen LEDs.

Eine weitere Ausführungsform bezieht sich beispielsweise darauf, dass eine Mehrzahl von flächigen Sensoren an der Stütze angeordnet sind, wobei jeweils jedem einzelnen der Mehrzahl von flächigen Sensoren zu diesem Sensor spezifisch ansteuerbare, im Wesentlichen das Blickfeld dieses Sensors erhellende Leuchten zugeordnet sind.

Eine weitere Ausführungsform bezieht sich beispielsweise darauf, dass ein erster Satz von Flächensensordaten erfasst wird, insbesondere Flächensensordaten mit reduzierter Auflösung, basierend auf dem ersten Satz von Flächensensordaten ein Satz von Beleuchtungseinstellungen für die Leuchte abgeleitet wird, und basierend auf dem Satz von Beleuchtungseinstellungen ein zweiter Satz von Flächensensordaten aufgenommen wird, insbesondere wobei der erste Satz von Flächensensordaten ohne Verwendung der Leuchte oder unter Verwendung einer einheitlichen Beleuchtung durch die Leuchte erfasst wird.

Der Haupt-Aspekt der Erfindung betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Basis, eine Stütze, welche um eine Stütz-Drehachse, insbesondere eine langsame Drehachse, drehbar auf der Basis befestigt ist, eine Strahllenkeinheit für die Distanzmessstrahlung, welche um eine zur Stütz-Drehachse im Wesentlichen orthogonale Strahl-Drehachse, insbesondere eine schnelle Drehachse, drehbar an der Stütze befestigt ist, einen ersten Winkelencoder zur Erfassung von ersten Winkeldaten bezüglich einer Drehung der Stütze um die Stütz-Drehachse, und einen zweiten Winkelencoder zur Erfassung von zweiten Winkeldaten bezüglich einer Drehung der Strahllenkeinheit um die Strahl-Drehachse, wobei die Distanzmessdaten und die ersten und zweiten Winkeldaten, nachfolgend Messdaten genannt, im Rahmen eines Messvorgangs erfasst werden, welcher umfasst eine scannende Abtastung mittels der Distanzmessvorrichtung mit einer definierten fortlaufenden, insbesondere kontinuierlichen, Drehung der Stütze um die Stütz-Drehachse, einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Der Haupt-Aspekt der Erfindung ist dadurch gekennzeichnet, dass die Basis axial entlang der Stütz-Drehachse ausschliesslich einen insgesamt wirksamen Stabilisationsbereich umfasst mittels welchem eine Stabilisation der Stütze bezüglich einer Verkippung der Stütze zur Basis erwirkt wird, der Stabilisationsbereich eine erste Ausdehnung axial entlang der Stütz-Drehachse und eine zweite zur Stütz-Drehachse senkrechte und bezüglich der Stütz-Drehachse im Wesentlichen radialsymmetrische Ausdehnung hat, und die zweite Ausdehnung grösser ist als die erste Ausdehnung.

Ferner ist der Haupt-Aspekt der Erfindung dadurch gekennzeichnet, dass die Basis bezüglich einer Drehung der Stütze um die Stütz-Drehachse ausschliesslich als passives Element ausgebildet ist, insofern, als dass sämtliche für die Motorisierung der Drehung um die Stütz-Drehachse benötigte aktive Elektronik ausschliesslich in der Stütze angeordnet ist und mit der Stütze um die Stütz-Drehachse mitdreht. Insbesondere können dabei folgende Komponenten jeweils als Ganzes in der Stütze angeordnet sein und mit der Stütze um die Stütz-Drehachse mitdrehen: ein aktives Antriebselement für die Drehung der Stütze um die Stütz-Drehachse, insbesondere ein Drehmotor mit einer an den Motor gekoppelten Antriebswelle oder ein elektrisches Spulenelement für eine bezüglich der Stütz-Drehachse radiale Wechselwirkung zwischen dem elektrischen Spulenelement und einem passiven Magnetelement in der Basis, und eine Energieversorgungseinheit für das aktive Antriebselement.

Eine Ausführungsform bezieht sich beispielsweise darauf, dass die Stütze durch einen einzigen Lagerkranz um die Stütz-Drehachse gegenüber der Basis drehbar gelagert ist, wobei die Stabilisation ausschliesslich durch den einzigen Lagerkranz erwirkt wird.

Eine weitere Ausführungsform bezieht sich beispielsweise darauf, dass der Lagerkranz als einreihiges Vierpunkt-Wälzlager ausgebildet ist, oder der Lagerkranz als einreihiges Gleitlager mit einem Aussen- und Innenring ausgebildet ist und der Aussen- mit dem Innenring zwei bezüglich der Stütz-Drehachse axial beabstandete Kontaktläufe, insbesondere zwei Lauflinien oder zwei Laufflächen, bildet.

Eine weitere Ausführungsform bezieht sich beispielsweise darauf, dass die Stabilisation mittels einer zur Stütz-Drehachse radial wirkenden Vorspannung auf den Lagerkranz erzeugt wird.

Eine weitere Ausführungsform bezieht sich beispielsweise darauf, dass die zweite Ausdehnung mindestens um einen Faktor zwei grösser ist als die erste Ausdehnung, insbesondere wobei die zweite Ausdehnung mindestens um einen Faktor fünf grösser ist als die erste Ausdehnung, im Speziellen wobei die zweite Ausdehnung mindestens um einen Faktor zehn grösser ist als die erste Ausdehnung.

Eine weitere Ausführungsform bezieht sich beispielsweise darauf, dass entlang eines zu einem Kontaktlauf im Wesentlichen parallelen Grenzbereichs eine Schmiermittel abweisende Emulsion aufgebracht ist, sodass eine Ausbreitung eines Schmiermittels für den Lagerkranz durch die Oberflächenspannung der Schmiermittel abweisenden Emulsion im Wesentlichen durch den Grenzbereich begrenzt ist, oder der Lagerkranz als ein Vierpunkt-Wälzlager in Form eines Trockenlaufringlagers mit Keramik-Wälzkörpern ausgebildet ist.

Eine weitere Ausführungsform bezieht sich beispielsweise darauf, dass für die Drehung der Stütze um die Stütz-Drehachse ein in der Stütze angeordneter Drehmotor mit einer an den Motor gekoppelten Antriebswelle ausgebildet ist, die Antriebswelle mit einem Versatz zur Stütz-Drehachse axial im Wesentlichen parallel zur Stütz-Drehachse verläuft, die Basis eine um die Stütz-Drehachse kreissymmetrische Lauffläche umfasst, an der Antriebswelle ein Laufrad angeordnet ist, insbesondere mit Gummiring, das derart mit der Lauffläche in Wirkverbindung steht, dass bei Drehung der Antriebswelle das Laufrad entlang der Lauffläche läuft und sich damit die Stütze gegenüber der Basis um die Stütz-Drehachse dreht, insbesondere wobei die Lauffläche einen fiktiven Kreis definiert und das Laufrad innerhalb des Kreises angeordnet ist.

Eine weitere Ausführungsform bezieht sich beispielsweise darauf, dass ferner folgende Komponenten jeweils als Ganzes in der Stütze angeordnet sind und mittels der Energieversorgungseinheit betrieben werden: die optische Distanzmessvorrichtung, der flächige Sensor, eine Kontroll- und Steuereinheit, und Elektronik des ersten und zweiten Winkelencoders, insbesondere wobei die Basis und die Stütze derart ausgebildet sind, dass im Rahmen des Messvorgangs zwischen der Basis und der Stütze keine elektrische Leistungsübertragung und keine elektrische Signalübertragung erfolgt.

Eine weitere Ausführungsform bezieht sich beispielsweise darauf, dass der Laserscanner insgesamt nur eine Energieversorgungseinheit umfasst, nämlich die Energieversorgungseinheit für das aktive Antriebselement, welche in der Stütze angeordnet ist, insbesondere wobei die Basis dauerhaft und unüberwindbar elektrisch von der Stütze entkoppelt ist, dass keine elektrische Leistungsübertragung zwischen der Stütze und der Basis erfolgt.

Eine weitere Ausführungsform bezieht sich beispielsweise darauf, dass der Laserscanner eine drahtlose Signalübertragungseinheit umfasst, insbesondere basierend auf einer WLAN- oder Bluetooth-Verbindung, wobei die Signalübertragungseinheit als Ganzes in der Stütze angeordnet ist, wobei zwischen dem Laserscanner und einer externen Kontrolleinheit ein beidseitiger Austausch von Steuersignalen vorgesehen ist und/oder eine Übertragung eines Teils der Messdaten vom Laserscanner auf eine externe Rechen- und/oder Speichereinheit vorgesehen ist, insbesondere wobei eine beidseitige Übertragung von Messdaten und/oder Hilfsdaten zwischen dem Laserscanner und der externen Rechen- und/oder Speichereinheit vorgesehen ist.

Eine weitere Ausführungsform bezieht sich beispielsweise darauf, dass die Übertragung der Mess- und/oder Hilfsdaten mittels eines bezüglich des Starts des Messvorgangs gleichzeitig oder zumindest zeitnah gestarteten Datenstreamings von Teilen der Messdaten im Wesentlichen parallel zum Messvorgang erfolgt.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Basis, eine Stütze, welche um eine Stütz-Drehachse, insbesondere eine langsame Drehachse, drehbar auf der Basis befestigt ist, eine Strahllenkeinheit für die Distanzmessstrahlung, welche um eine zur Stütz-Drehachse im Wesentlichen orthogonale Strahl-Drehachse, insbesondere eine schnelle Drehachse, drehbar an der Stütze befestigt ist, einen ersten Winkelencoder zur Erfassung von ersten Winkeldaten bezüglich einer Drehung der Stütze um die Stütz-Drehachse, und einen zweiten Winkelencoder zur Erfassung von zweiten Winkeldaten bezüglich einer Drehung der Strahllenkeinheit um die Strahl-Drehachse, wobei die Distanzmessdaten und die ersten und zweiten Winkeldaten, nachfolgend Messdaten genannt, im Rahmen eines Messvorgangs erfasst werden, welcher umfasst: eine scannende Abtastung mittels der Distanzmessvorrichtung mit einer definierten fortlaufenden, insbesondere kontinuierlichen, Drehung der Stütze um die Stütz-Drehachse, einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Dieser optionale Aspekt ist dadurch gekennzeichnet, dass für die Drehung der Stütze um die Stütz-Drehachse ein in der Stütze angeordneter Drehmotor mit einer an den Motor gekoppelten Antriebswelle ausgebildet ist, die Antriebswelle mit einem Versatz zur Stütz-Drehachse axial im Wesentlichen parallel zur Stütz-Drehachse verläuft, die Basis eine um die Stütz-Drehachse kreissymmetrische Lauffläche umfasst, an der Antriebswelle ein Laufrad angeordnet ist, insbesondere mit Gummiring, das derart mit der Lauffläche in Wirkverbindung steht, dass bei Drehung der Antriebswelle das Laufrad entlang der Lauffläche läuft und sich damit die Stütze gegenüber der Basis um die Stütz-Drehachse dreht, insbesondere wobei die Lauffläche einen fiktiven Kreis definiert und das Laufrad innerhalb des Kreises angeordnet ist.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Stütze, eine Strahllenkeinheit für die Distanzmessstrahlung, welche um eine Strahl-Drehachse, insbesondere eine schnelle Drehachse, drehbar an der Stütze befestigt ist, und einen Winkelencoder zur Erfassung von Winkeldaten bezüglich einer Drehung der Strahllenkeinheit um die Strahl-Drehachse.

Dieser optionale Aspekt ist dadurch gekennzeichnet, dass die Strahllenkeinheit mit einer in der Stütze gelagerten Welle entlang der Strahl-Drehachse verbunden ist, insbesondere wobei die Welle mit einer definierten Eindringtiefe in die Strahllenkeinheit eindringt oder mit der Strahllenkeinheit einstückig ausgebildet ist, an der Welle ein Glockenelement angeordnet ist, insbesondere wobei das Glockenelement fix an der Welle befestigt oder mit der Welle einstückig ausgebildet ist, wobei durch das Glockenelement ein Glockenbauch und ein Glockenrücken definiert ist, im Glockenbauch passive Magnetelemente eines Antriebs zur Drehung der Welle angeordnet sind, in der Stütze verankert aktive Antriebselemente des Antriebs zur Erzeugung einer elektro-magnetischen Wechselwirkung mit den passiven Magnetelementen angeordnet sind, insbesondere elektrische Spulenelemente, wobei die aktiven Antriebselemente zumindest teilweise in den Glockenbauch ragen, und die Welle und damit die Strahllenkeinheit durch eine radiale Wechselwirkung zwischen den aktiven Antriebselementen und den passiven Magnetelementen eine definierte Drehbewegung um die Strahl-Drehachse erfahren.

Eine Ausführungsform bezieht sich beispielsweise darauf, dass die aktiven Antriebselemente komplett im Glockenbauch versinken.

Eine weitere Ausführungsform bezieht sich beispielsweise darauf, dass zumindest ein Kranz des Lagers für die Lagerung der Welle in der Stütze in den Glockenbauch ragt.

Eine weitere Ausführungsform bezieht sich beispielsweise darauf, dass der in den Glockenbauch ragende Kranz des Lagers als Wälzlagerkranz ausgebildet ist und Wälzkörper des Wälzlagerkranzes zumindest teilweise in den Glockenbauch ragen.

Eine weitere Ausführungsform bezieht sich beispielsweise darauf, dass zumindest ein Kranz des Lagers für die Lagerung der Welle in der Stütze in die Strahllenkeinheit ragt, insbesondere wobei der in die Strahllenkeinheit ragende Kranz als Wälzlagerkranz ausgebildet ist und Wälzkörper des Wälzlagerkranzes zumindest teilweise in die Strahllenkeinheit ragen.

Eine weitere Ausführungsform bezieht sich beispielsweise darauf, dass die Welle axial entlang der Strahl-Drehachse ausschliesslich einen einzigen wirksamen Stabilisationsbereich umfasst, mittels welchem eine Stabilisation der Welle bezüglich einer Verkippung der Welle zur Stütze erwirkt wird, wobei die Strahllenkeinheit, das Glockenelement und die Welle derart ausgebildet und bezüglich einander angeordnet sind, dass ihr gemeinsamer Schwerpunkt axial entlang der Strahl-Drehachse im Stabilisationsbereich liegt, insbesondere wobei die Stabilisation ausschliesslich durch ein den Schwerpunkt im Wesentlichen axial-symmetrisch umfassendes Lager für die Lagerung der Welle in der Stütze erwirkt wird.

Eine weitere Ausführungsform bezieht sich beispielsweise darauf, dass am Glockenrücken ein Codierelement für den Winkelencoder angeordnet ist, insbesondere wobei das Codierelement mit dem Glockenelement einstückig ausgebildet ist.

Eine weitere Ausführungsform bezieht sich beispielsweise darauf, dass mindestens eine der folgenden Verbindungen ausschliesslich mittels einer Verklebung und/oder Verpressung erfolgt: eine Verbindung der Welle mit dem Stabilisationselement, eine Verbindung der Welle mit dem Glockenelement, eine Verbindung des passiven Magnetelements mit dem Glockenelement, und eine Verbindung des Codierelements mit dem Glockenelement.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Stütze, eine Strahllenkeinheit für die Distanzmessstrahlung, welche um eine Strahl-Drehachse, insbesondere eine schnelle Drehachse, drehbar an der Stütze befestigt ist, und einen Winkelencoder zur Erfassung von Winkeldaten bezüglich einer Drehung der Strahllenkeinheit um die Strahl-Drehachse.

Dieser optionale Aspekt ist dadurch gekennzeichnet, dass die Strahllenkeinheit über eine Welle axial entlang der Strahl-Drehachse in der Stütze gelagert ist, wobei die Strahllenkeinheit eine Spiegelfläche für eine Ablenkung der Distanzmessstrahlung umfasst, insbesondere eine bezüglich der Strahl-Drehachse um 45° verkippte plane oder eine verkippte parabolische Spiegelfläche, die Welle an einem Ende einen Eindringbereich aufweist, die Strahllenkeinheit einen Umfassungsbereich für eine Umfassung des Eindringbereichs der Welle im Rahmen einer Kopplung der Strahllenkeinheit mit der Welle aufweist, der Umfassungsbereich eine Form aufweist, die geeignet ist, die Welle im Rahmen der Kopplung über eine Länge des Eindringbereichs derart zu umfassen, dass in gekoppeltem Zustand zwischen der Welle und dem Umfassungsbereich der Strahllenkeinheit ein Spalt mit definierter Weite vorhanden ist, der Umfassungsbereich ein in dem Spalt verpressbares Stabilisationselement zum Toleranzausgleich und zum stabilen Verbinden von der Strahllenkeinheit mit der Welle umfasst, das Stabilisationselement in einem ungekoppelten Zustand eine Dicke aufweist, die grösser als die Weite des Spaltes ist, und die Strahllenkeinheit, insbesondere der Umfassungsbereich, die Welle und das Stabilisationselement derart ausgebildet sind und derart zusammenwirken, dass im Rahmen der Kopplung der Strahllenkeinheit mit der Welle das zwischen dem Umfassungsbereich und der Welle angeordnete Stabilisationselement in dem Spalt verpresst wird und in gekoppeltem Zustand derart deformiert im Spalt vorliegt, insbesondere wobei mindestens ein Teil des Stabilisationselements plastisch deformiert wird, dass definierte restelastische Kräfte radial zur Strahl-Drehachse auf die Strahllenkeinheit und die Welle wirken, dass die Strahllenkeinheit und die Welle bezüglich der Strahl-Drehachse in axialer Richtung stabilisiert zueinander vorliegen, die Strahllenkeinheit über einen durch die Länge des Eindringbereichs definierten Stabilisationsbereich bezüglich einer Verkippung zur Welle stabilisiert ist, und die restelastischen Kräfte bis auf einen definierten Toleranzbereich nicht auf die Spiegelfläche wirken.

Eine Ausführungsform bezieht sich beispielsweise darauf, dass das Stabilisationselement und die Welle im Rahmen der Kopplung zueinander verklebt werden.

Eine weitere Ausführungsform bezieht sich beispielsweise darauf, dass der Umfassungsbereich mindestens zwei bezüglich der Strahl-Drehachse in axialer Richtung beabstandete Stabilisationselemente umfasst.

Eine weitere Ausführungsform bezieht sich beispielsweise darauf, dass das Stabilisationselement ringförmig ist.

Eine weitere Ausführungsform bezieht sich beispielsweise darauf, dass das Stabilisationselement aus einem Material mit homogenen plastischen Eigenschaften, insbesondere mit einem homogenen plastischen Fliessbereich, besteht.

Eine weitere Ausführungsform bezieht sich beispielsweise darauf, dass das Stabilisationselement in die Strahllenkeinheit integriert ist, insbesondere wobei das Stabilisationselement an die Strahllenkeinheit angespritzt ist oder die Strahllenkeinheit und das Stabilisationselement einstückig ausgebildet sind.

Eine weitere Ausführungsform bezieht sich beispielsweise darauf, dass der definierte Toleranzbereich für eine Wirkung der restelastischen Kräfte auf die Spiegelfläche derart gewählt ist, dass eine Oberflächengenauigkeit der Spiegelfläche von plus/minus 5µm, insbesondere von plus/minus 3µm, im Speziellen von plus/minus 1µm oder von plus/minus 300 nm bezüglich eines definierten Idealdesigns für die Spiegelfläche gewährleistet wird.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von aus der Umgebung zurückkommenden Teilen der Distanzmessstrahlung, eine Stütze, eine Strahllenkeinheit für die Distanzmessstrahlung, welche um eine Strahl-Drehachse, insbesondere eine schnelle Drehachse, drehbar an der Stütze befestigt ist, wobei die Strahllenkeinheit eine Spiegelfläche für eine Ablenkung der Distanzmessstrahlung umfasst, insbesondere eine bezüglich der Strahl-Drehachse verkippte plane Spiegelfläche oder eine parabolische Spiegelfläche, und einen Winkelencoder zur Erfassung von Winkeldaten bezüglich einer Drehung der Strahllenkeinheit um die Strahl-Drehachse, wobei die Distanzmessdaten und die Winkeldaten, nachfolgend Messdaten genannt, im Rahmen eines Messvorgangs erfasst werden, welcher eine scannende Abtastung mittels der Distanzmessvorrichtung umfasst mit einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Dieser optionale Aspekt ist dadurch gekennzeichnet, dass eine Empfangsoptik für über die Spiegelfläche zurückkommende Teile der Distanzmessstrahlung an der Stütze angeordnet ist, insbesondere wobei die optische Achse der Empfangsoptik gleichgerichtet, im Speziellen koaxial, zur Strahl-Drehachse ist, ein Austrittsbereich für das Aussenden der Distanzmessstrahlung in Richtung der Spiegelfläche an der Stütze angeordnet ist und der Austrittsbereich bezüglich der optischen Achse der Empfangsoptik einen lateralen Versatz aufweist und die durch den Austrittsbereich ausgesendete Distanzmessstrahlung parallel zur optischen Achse der Empfangsoptik auf die Spiegelfläche ausgesendet wird.

Eine Ausführungsform bezieht sich beispielsweise darauf, dass die Empfangsoptik eine Aussparung oder ein Fenster, insbesondere ein planes Glasfenster, aufweist, in welche sich der Austrittsbereich legt bzw. welches den Austrittsbereich bildet.

Eine weitere Ausführungsform bezieht sich beispielsweise darauf, dass der Austrittsbereich neben der Empfangsoptik angeordnet ist, insbesondere unmittelbar angrenzend an die Empfangsoptik.

Eine weitere Ausführungsform bezieht sich beispielsweise darauf, dass der Austrittsbereich derart ausgebildet, ist, dass durch die Geometrie und Orientierung des Austrittsbereichs der am Austrittsbereich maximale Strahldurchmesser der ausgehenden Distanzmessstrahlung vom Austrittsbereich im Wesentlichen umfasst wird, insbesondere wobei die Geometrie und Orientierung des Austrittsbereichs im Wesentlichen der Geometrie und Orientierung der Strahltaille (des Strahlquerschnitts) der ausgehenden Distanzmessstrahlung beim Austrittsbereich entspricht.

Eine weitere Ausführungsform bezieht sich beispielsweise darauf, dass die Sendeeinheit eine Laserdiode zur Erzeugung der Distanzmessstrahlung als Laserstrahlung umfasst und der Strahlquerschnitt der ausgehenden Distanzmessstrahlung in Höhe des Austrittsbereichs eine ovale Form, insbesondere elliptische Form, aufweist, insbesondere mit einer kurzen Halbachse ausgerichtet in Richtung des lateralen Versatzes.

Eine weitere Ausführungsform bezieht sich beispielsweise darauf, dass die Empfangsoptik ferner eine Korrekturoptik für eine Berücksichtigung eines durch den lateralen Versatz des Austrittsbereichs zur Strahl-Drehachse verursachten Parallaxeneffekts für aus einer Distanz kürzer als eine definierte Nahfelddistanz zurückkommende Teile der Distanzmessstrahlen umfasst, insbesondere wobei die Korrekturoptik als zylindrische Linse ausgebildet ist.

Eine weitere Ausführungsform bezieht sich beispielsweise darauf, dass ein Kompensationsalgorithmus vorgesehen ist, um von den Winkeldaten abhängige Kompensationsparameter für einen im Rahmen der fortlaufenden Drehung der Strahllenkeinheit um die Strahl-Drehachse und durch den lateralen Versatz des Austrittsbereichs zur Strahl-Drehachse verursachten Parallaxeneffekt bezüglich ausgehenden und zurückkommenden Teilen der Distanzmessstrahlung zu kompensieren, insbesondere wobei die Kompensationsparameter im Rahmen einer Referenzierung der Messdaten bezüglich eines gemeinsamen Koordinatensystems berücksichtig werden.

Eine weitere Ausführungsform bezieht sich beispielsweise darauf, dass der Austrittsbereich und der Kompensationsalgorithmus derart ausgelegt sind, dass im Rahmen einer definierten Messtoleranz für die Referenzierung der Messdaten bezüglich des gemeinsamen Koordinatensystems für die Kompensation des Parallaxeneffekts nebst dem Kompensationsalgorithmus keine weitere Justierung des Laserscanners erforderlich ist.

Eine weitere Ausführungsform bezieht sich beispielsweise darauf, dass der Austrittsbereich und die Empfangsoptik derart angeordnet sind, dass zwischen einer fiktiven Verlängerung der optischen Achse der Empfangsoptik und einer zentralen Ausbreitungsachse der Distanzmessstrahlung auf Höhe des Auftreffens der Distanzmessstrahlung auf die Strahllenkeinheit ein lateraler Versatz von mindestens 0.5 cm vorliegt.

Eine weitere Ausführungsform bezieht sich beispielsweise darauf, dass die Sendeeinheit und die Empfangseinheit auf einer gemeinsamen Leiterplatte angeordnet sind.

Ein weiterer optionaler Aspekt betrifft ein elektronisches Laserdistanzmessmodul für eine Distanzmessung zu einem Zielobjekt, insbesondere zur Verwendung in einem Laserscanner, wobei das Laserdistanzmessmodul umfasst eine Sendeeinheit zur Erzeugung von Sendesignalen, insbesondere wobei die Sendesignale durch gepulste Lasermessstrahlung erzeugt werden, eine Empfangseinheit zum Empfang von vom Zielobjekt zurückkommenden Teilen der Sendesignale als Empfangssignale, eine Empfangsschaltung zur Konditionierung und Digitalisierung der Empfangssignale, sodass letztlich eine Distanz zum Zielobjekt basierend auf dem Signallaufzeitverfahren ableitbar ist, und eine Steuerung für die Sendeeinheit und die Empfangsschaltung.

Dieser optionale Aspekt ist dadurch gekennzeichnet, dass die Empfangsschaltung umfasst eine Komparatorstufe zur Ableitung einer Signalstärke eines Empfangssignals, eine Verstärkerstufe zur Anpassung einer Signalstärke, insbesondere mittels Verstärkung oder Abschwächung eines Eingangssignals, eine erste und eine zweite Analog-Digital-Wandlungsstufe, wobei die Empfangsschaltung sowie die Sendeeinheit derart durch die Steuerung angesteuert werden, dass eine fortlaufende Abfolge von Distanzmessungen unter alternierender Verwendung der ersten und zweiten Analog-Digital-Wandlungsstufe umfasst erste Distanzmessung mittels der ersten Analog-Digital-Wandlungsstufe, insbesondere basierend auf einem ersten Signalpaket von aufeinander folgenden Empfangssignalen, zweite Distanzmessung mittels der zweiten Analog-Digital-Wandlungsstufe, insbesondere basierend auf einem zweiten Signalpaket von aufeinander folgenden Empfangssignalen, Verwendung eines ersten Empfangssignals als Probesignal, Verwendung eines zweiten Empfangssignals als Messsignal, Zuführung des Probesignals zur Komparatorstufe und Ableitung einer Signalstärke des Probesignals durch die Komparatorstufe, Einstellung der Verstärkerstufe für zumindest Teile der das Messsignal enthaltenden Empfangssignale basierend auf der abgeleiteten Signalstärke des Probesignals, sodass zumindest das Messsignal als ein Eingangssignal im Aussteuerbereich der der Verstärkereinheit nachgeschalteten ersten und/oder zweiten Analog-Digital-Wandlungsstufe vorliegt.

Eine Ausführungsform bezieht sich beispielsweise darauf, dass die Empfangsschaltung ferner eine Aktivierungseinheit umfasst, mittels welcher eine erste Einstellung erfolgt, wobei das Probesignal für die Ableitung der Distanz zum Zielobjekt berücksichtigt wird, und eine zweite Einstellung erfolgt, wobei das Probesignal für die Ableitung der Distanz zum Zielobjekt verworfen wird, insbesondere wobei ein Wertebereich für eine nutzbare Signalstärke des Probesignals definiert ist, ein Abgleich der durch die Komparatorstufe abgeleiteten Signalstärke des Probesignals mit dem Wertebereich erfolgt, und eine Ansteuerung der Aktivierungseinheit erfolgt, basierend auf dem Abgleich der Signalstärke mit dem Wertebereich, dass falls die Signalstärke des Probesignals innerhalb des Wertebereichs liegt, das Probesignal für die Ableitung der Distanz zum Zielobjekt berücksichtigt wird, und falls die Signalstärke des Probesignals ausserhalb des Wertebereichs liegt, das Probesignal für die Ableitung der Distanz zum Zielobjekt verworfen wird.

Eine weitere Ausführungsform bezieht sich beispielsweise darauf, dass die Einstellung der Verstärkereinheit und die Ableitung der Distanz zum Zielobjekt im Rahmen einer einzelnen Distanzmessung auf einem Signalpaket bestehend aus maximal drei aufeinander folgenden Empfangssignalen basiert.

Eine weitere Ausführungsform bezieht sich beispielsweise darauf, dass jeweils ein Empfangssignal einer unmittelbar vorhergehenden Distanzmessung aus der Vielzahl von Distanzmessungen als aktuelles Probesignal für eine aktuelle Distanzmessung aus der Vielzahl von Distanzmessungen verwendet wird, insbesondere wobei jeweils das zeitlich letzte Empfangssignal der unmittelbar vorhergehenden Distanzmessung als aktuelles Probesignal verwendet wird.

Ein weiterer optionaler Aspekt betrifft ein elektronisches Laserdistanzmessmodul für eine Distanzmessung zu einem Zielobjekt, insbesondere zur Verwendung in einem Laserscanner, wobei das Laserdistanzmessmodul umfasst eine Sendeeinheit zur Erzeugung von Sendesignalen, wobei die Sendesignale durch gepulste Lasermessstrahlung erzeugt werden, eine Empfangseinheit zum Empfang von vom Zielobjekt zurückkommenden Teilen der Sendesignale als Empfangssignale, eine Empfangsschaltung zur Konditionierung und Digitalisierung der Empfangssignale, sodass letztlich eine Distanz zum Zielobjekt basierend auf dem Signallaufzeitverfahren ableitbar ist, und eine Steuerung für die Sendeeinheit und die Empfangsschaltung.

Dieser optionale Aspekt ist dadurch gekennzeichnet, dass die Empfangsschaltung umfasst mehrere, und dabei mindestens eine erste und eine zweite, Analog-Digital-Wandlungsstufen, wobei die Steuerung zur derartigen Ansteuerung der Empfangsschaltung und der Sendeeinheit konfiguriert ist, dass eine fortlaufende Abfolge von Distanzmessungen umfasst eine alternierende, als hintereinander gestaffelte und sich gegenseitig abwechselnde, Verwendung der mehreren Analog-Digital-Wandlungsstufen für jeweils eine Distanzmessung, wobei jede Analog-Digital-Wandlungsstufe der mehreren Analog-Digital-Wandlungsstufen pro Distanzmessung eine in sich geschlossene Samplingphase für eine Abtastung eines einkommenden Signals, insbesondere eines Pulspakets, und daraufhin eine in sich geschlossene Ausgabephase zur Ausgabe von während der Samplingphase abgetasteten Werten aufweist, wobei im Rahmen der alternierenden Verwendung die jeweiligen Ausgabephasen der ersten Analog-Digital-Wandlungsstufe zeitlich jeweils in den jeweiligen Samplingphasen mindesten der zweiten Analog-Digital-Wandlungsstufe liegen, und die jeweiligen Ausgabephasen der zweiten Analog-Digital-Wandlungsstufe zeitlich in den jeweiligen Samplingphase der ersten oder einer weiteren der mehreren Analog-Digital-Wandlungsstufen liegen.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Basis, eine Stütze, welche um eine Stütz-Drehachse, insbesondere eine langsame Drehachse, drehbar auf der Basis befestigt ist, eine Strahllenkeinheit für die Distanzmessstrahlung, welche um eine zur Stütz-Drehachse im Wesentlichen orthogonale Strahl-Drehachse, insbesondere eine schnelle Drehachse, drehbar an der Stütze befestigt ist, einen ersten Winkelencoder zur Erfassung von ersten Winkeldaten bezüglich einer Drehung der Stütze um die Stütz-Drehachse, und einen zweiten Winkelencoder zur Erfassung von zweiten Winkeldaten bezüglich einer Drehung der Strahllenkeinheit um die Strahl-Drehachse, wobei die Distanzmessdaten und die ersten und zweiten Winkeldaten, nachfolgend Messdaten genannt, im Rahmen eines Messvorgangs erfasst werden, welcher eine scannende Abtastung mittels der Distanzmessvorrichtung umfasst mit einer definierten fortlaufenden, insbesondere kontinuierlichen, Drehung der Stütze um die Stütz-Drehachse, einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Dieser optionale Aspekt ist dadurch gekennzeichnet, dass die Stütze einen skelettartigen Aufbau bestehend aus mindestens zwei separat voneinander lösbaren Tragestrukturen als Skelettteile aufweist, eine erste der zwei Tragestrukturen gegenüber der Basis drehbar gelagert ist, eine zweite Tragestruktur lediglich an die erste Tragestruktur gekoppelt ist, insbesondere basierend auf einer Verbindung mittels Normalstiften, die erste Tragestruktur einen sich in Stütz-Drehachse erstreckenden Hochbau aufweist, mittels welchem eine stabile Befestigung der zweiten Tragestruktur bezüglich einer Verkippung der zweiten Tragestruktur zur Stütz-Drehachse erwirkbar ist, und die Strahllenkeinheit ausschliesslich in und drehbar gegenüber der zweiten Tragestruktur gelagert ist.

Eine Ausführungsform bezieht sich beispielsweise darauf, dass die erste Tragestruktur auf einer auf dem Kopf stehenden T-Gestalt basiert, nämlich wobei eine mit der Basis verbundene Kreisscheibe oder eine mit der Basis verbundene Ringscheibe den T-Querstrich bildet, und der Hochbau den T-Längsstrich bildet.

Eine weitere Ausführungsform bezieht sich beispielsweise darauf, dass die Stütze eine dritte Tragestruktur als weiteres Skelettteil umfasst, die am Hochbau der ersten Tragestruktur separat lösbar befestigt ist, die zweite und dritte Tragestruktur jeweils im Wesentlichen auf einer Plattengestalt mit einer planen Seite basieren, und der Hochbau mit zwei gegenüberliegend voneinander wegzeigenden Anlageseiten eine Aufnahme einerseits für die plane Seite der zweiten Tragestruktur und andererseits für die plane Seite der dritten Tragestruktur bildet.

Eine weitere Ausführungsform bezieht sich beispielsweise darauf, dass der Laserscanner einen flächigen Sensor zur Erfassung von Flächensensordaten umfasst, insbesondere mindestens eine Farb-Kamera zur Aufnahme von Bilddaten, wobei durch den Sensor eine optische Achse des Sensors und eine Blickrichtung des Sensors entlang der optischen Achse definiert ist, die Distanzmessvorrichtung in der zweiten Tragestruktur angeordnet ist, der flächige Sensor in der dritten Tragestruktur angeordnet ist, und dass die Distanzmessvorrichtung und/oder der flächige Sensor modulartig austauschbar ist, insbesondere wobei die erste oder zweite oder dritte oder eine weitere Tragestruktur eine Energieversorgungseinheit für die Distanzmessvorrichtung und/oder den flächigen Sensor umfasst.

Ein weiterer optionaler Aspekt betrifft einen Laserscanner zur optischen Vermessung einer Umgebung, umfassend eine optische Distanzmessvorrichtung zur Erfassung von Distanzmessdaten umfassenden Messdaten, mit einer Sendeeinheit zum Aussenden einer Distanzmessstrahlung und einer Empfangseinheit zum Empfangen von zurückkommenden Teilen der Distanzmessstrahlung, eine Basis, eine Stütze, welche um eine Stütz-Drehachse, insbesondere eine langsame Drehachse, drehbar auf der Basis befestigt ist, eine Strahllenkeinheit für die Distanzmessstrahlung, welche um eine zur Stütz-Drehachse im Wesentlichen orthogonale Strahl-Drehachse, insbesondere eine schnelle Drehachse, drehbar an der Stütze befestigt ist, und einen ersten Winkelencoder zur Erfassung von ersten Winkeldaten bezüglich einer Drehung der Stütze um die Stütz-Drehachse, und einen zweiten Winkelencoder zur Erfassung von zweiten Winkeldaten bezüglich einer Drehung der Strahllenkeinheit um die Strahl-Drehachse, wobei die Distanzmessdaten, die Flächensensordaten und die ersten und zweiten Winkeldaten, nachfolgend Messdaten genannt, im Rahmen eines Messvorgangs erfasst werden, welcher eine scannende Abtastung mittels der Distanzmessvorrichtung umfasst mit einer definierten fortlaufenden, insbesondere kontinuierlichen, Drehung der Stütze um die Stütz-Drehachse, einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Dieser optionale Aspekt ist dadurch gekennzeichnet, dass der Laserscanner eine Statusanzeige für eine Anzeige eines Gerätestatus umfasst, insbesondere für die Anzeige von einem Status des Messvorgangs, die Statusanzeige an der Stütze angeordnet ist, das heisst sich bei der Drehung der Stütze um die Stütz-Drehachse mitdreht, die Statusanzeige derart ausgebildet ist, dass sie bezüglich der Stütz-Drehachse umfänglich in alle azimutalen Richtungen im Wesentlichen gleichmässig aussieht, sodass unabhängig von einer Rotationsposition der Stütze um die Stütz-Drehachse für einen Benutzer des Laserscanners aus allen horizontalen Benutzerperspektiven dieselbe durch die Statusanzeige bereitgestellte Information sichtbar und ablesbar ist.

Eine Ausführungsform bezieht sich beispielsweise darauf, dass die Statusanzeige mittels einzelner Leuchten ausgebildet ist, welche - insbesondere direkt - benachbart mit einer im Wesentlichen identischen Elevation vollumfänglich an der Stütze angeordnet sind.

Eine weitere Ausführungsform bezieht sich beispielsweise darauf, dass die Statusanzeige mittels durchgängig und unterbruchfrei angeordneten Beleuchtungsmitteln ausgebildet ist, welche die Stütze und die Stütz-Drehachse im Wesentlichen vollständig umschliessen, insbesondere wobei die Beleuchtungsmittel als LED-Ring ausgebildet sind.

Eine weitere Ausführungsform bezieht sich beispielsweise darauf, dass die Statusanzeige mittels eines Lichtleiterrings mit mindestens einer Einkopplung von Licht ausgebildet ist, insbesondere mittels zwei oder vier Einkopplungen, wobei mit zunehmendem Abstand von der Einkoppelposition entlang des Lichtleiterrings der Quotient von Abstrahlung, nämlich die radiale Licht-Auskopplung, zu Weiterleitung des Lichts entlang des Lichtleiterrings zunimmt.

Eine weitere Ausführungsform bezieht sich beispielsweise darauf, dass die Statusanzeige derart ausgebildet ist, dass der Gerätestatus einem Benutzer mittels einer visuellen Codierung offenbart wird, insbesondere mittels einer definierten Farbcodierung der Statusanzeige und/oder mittels einer definierten Blinkcodierung der Statusanzeige.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, einen flächigen Sensor zur Erfassung von Flächensensordaten, insbesondere mindestens eine Farb-Kamera zur Aufnahme von Bilddaten, wobei durch den Sensor eine optische Achse des Sensors und eine Blickrichtung des Sensors entlang der optischen Achse definiert ist, eine Stütze, eine Strahllenkeinheit für die Distanzmessstrahlung, welche um eine Strahl-Drehachse, insbesondere eine schnelle Drehachse, drehbar an der Stütze befestigt ist, und einen Winkelencoder zur Erfassung von Winkeldaten bezüglich einer Drehung der Strahllenkeinheit um die Strahl-Drehachse.

Dieser optionale Aspekt ist dadurch gekennzeichnet, dass die Stütze mittels eines skelettartigen Aufbaus ausgebildet ist, die Stütze ein vom skelettartigen Aufbau getragenes und davon lösbares Cover als Hüllenelement umfasst, und der flächige Sensor am Hüllenelement befestigt ist und vom Hüllenelement getragen wird.

Eine Ausführungsform bezieht sich beispielsweise darauf, dass der Laserscanner eine Mehrzahl von flächigen Sensoren umfasst, welche jeweils einzeln am Hüllenelement befestigt sind und einzeln vom Hüllenelement getragen werden, insofern, dass jeder flächige Sensor der Mehrzahl von flächigen Sensoren separat und für sich genommen vom Hüllenelement getragen wird, insbesondere wobei das Hüllenelement mit Aperturöffnungen für die flächigen Sensoren ausgebildet ist, die einzelnen flächigen Sensoren der Mehrzahl von flächigen Sensoren an der Innenseite des Hüllenelements befestigt sind, und die einzelnen flächigen Sensoren der Mehrzahl von flächigen Sensoren jeweils durch eine der Aperturöffnungen des Hüllenelements blicken.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Basis, eine Stütze, welche um eine Stütz-Drehachse, insbesondere eine langsame Drehachse, drehbar auf der Basis befestigt ist, eine Strahllenkeinheit für die Distanzmessstrahlung, welche um eine zur Stütz-Drehachse im Wesentlichen orthogonale Strahl-Drehachse, insbesondere eine schnelle Drehachse, drehbar an der Stütze befestigt ist, einen ersten Winkelencoder zur Erfassung von ersten Winkeldaten bezüglich einer Drehung der Stütze um die Stütz-Drehachse, und einen zweiten Winkelencoder zur Erfassung von zweiten Winkeldaten bezüglich einer Drehung der Strahllenkeinheit um die Strahl-Drehachse, wobei die Distanzmessdaten und die ersten und zweiten Winkeldaten, nachfolgend Messdaten genannt, im Rahmen eines Messvorgangs erfasst werden, welcher umfasst eine scannende Abtastung mittels der Distanzmessvorrichtung mit einer definierten fortlaufenden, insbesondere kontinuierlichen, Drehung der Stütze um die Stütz-Drehachse, einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Dieser optionale Aspekt ist dadurch gekennzeichnet, dass die Distanzmessvorrichtung derart ausgebildet ist, dass ein Messstrahlen-Ensemble, gebildet aus einer Mehrzahl von einzelnen Distanzmessstrahlen, ausgesendet wird, insbesondere wobei das Messstrahlen-Ensemble im Rahmen des Messvorgangs über eine für die Mehrzahl von Distanzmessstrahlen gemeinsame Spiegelfläche der Strahllenkeinheit abgelenkt wird.

Eine Ausführungsform bezieht sich beispielsweise darauf, dass die maximale Divergenz zwischen benachbarten Einzelstrahlen des Messstrahlen-Ensembles kleiner als 15 Grad ist, insbesondere kleiner als 1 Grad.

Eine weitere Ausführungsform bezieht sich beispielsweise darauf, dass die Einzelstrahlen des Messstrahlen-Ensembles aus der Stütze in Richtung der Strahllenkeinheit als Strahlfächer, eine Einzelstrahlen-Zeile bildend, ausgesendet werden, insbesondere wobei die Einzelstrahlen-Zeile sich entlang einer senkrecht zur Strahl-Drehachse und senkrecht zur Stütz-Drehachse erstreckt, insbesondere wobei der Strahlfächer aus maximal zehn Einzelstrahlen besteht.

Ein weiterer optionaler Aspekt betrifft einen Laserscanner zur optischen Vermessung einer Umgebung, umfassend eine optische Distanzmessvorrichtung zur Erfassung von Distanzmessdaten, mit einer Sendeeinheit zum Aussenden einer Distanzmessstrahlung und einer Empfangseinheit zum Empfangen von zurückkommenden Teilen der Distanzmessstrahlung, eine Stütze, eine Strahllenkeinheit für die Distanzmessstrahlung, welche um eine Strahl-Drehachse, insbesondere eine schnelle Drehachse, drehbar an der Stütze befestigt ist, und einen Winkelencoder zur Erfassung von Winkeldaten bezüglich einer Drehung der Strahllenkeinheit um die Strahl-Drehachse, wobei die Messdaten die Distanzmessdaten und die Winkeldaten umfassen, welche im Rahmen eines Messvorgangs erfasst werden, welcher eine scannende Abtastung mittels der Distanzmessvorrichtung umfasst mit einer definierten fortlaufenden, insbesondere kontinuierlichen Drehung der Strahllenkeinheit um die Strahl-Drehachse, und einem fortlaufenden Aussenden der Distanzmessstrahlung und einem fortlaufenden Empfangen von zurückkommenden Teilen der Distanzmessstrahlung.

Dieser optionale Aspekt ist durch ein Aufnahmeelement zur Aufnahme der Basis gekennzeichnet, wobei das Aufnahmeelement mittels einer Rasteinrichtung von der Basis lösbar ist, und wobei die Rasteinrichtung an der Basis eine Auslassung umfasst, in welche ein Ring eingelassen ist, welcher Ring im Inneren eine umfänglich fortlaufende Kavität aufweist, und am Aufnahmeelement einen Zapfen umfasst, wobei der Zapfen zumindest drei Rastkörper umfasst, wobei die Rastkörper in einer Grundstellung einer Freigabeeinrichtung radial herausdrängen, um die Lösbarkeit des Aufnahmeelements von der Basis dadurch zu sperren, dass die Rastkörper in die Kavität greifen, und den Rastkörpern durch Betätigung der Freigabeeinrichtung ein radiales Entweichen in den Zapfen hinein ermöglicht wird, um die Lösbarkeit des Aufnahmeelements von der Basis zu gewähren.

Eine Ausführungsform bezieht sich beispielsweise darauf, dass die Auslassung zylindrisch ausgebildet ist.

Eine weitere Ausführungsform bezieht sich beispielsweise darauf, dass das Aufnahmelement ein Stativkopf ist oder zur Anbringung an einen Stativkopf ausgebildet ist.

Eine weitere Ausführungsform bezieht sich beispielsweise darauf, dass ein Rastkörper als ein Rotationskörper, insbesondere als eine Kugel oder ein Ellipsoid, ein Trapez, eine Pyramide, ein Abrundungen aufweisendes Trapez, oder eine Abrundung aufweisende Pyramide ausgebildet ist.

Eine weitere Ausführungsform bezieht sich beispielsweise darauf, dass die Rastkörper und die Kavität derart ausgebildet und aufeinander abgestimmt sind, dass durch das Eingreifen der Rastkörper in die Kavität eine Selbstzentrierung der Basis erfolgt, insbesondere eine Selbstzentrierung hinsichtlich der Stütz-Drehachse.

Eine weitere Ausführungsform bezieht sich beispielsweise darauf, dass die Freigabeeinrichtung im Zapfen angeordnet ist und zumindest einen Radialstift zur Betätigung der Freigabeeinrichtung, einen Axialstift zur Sperrung oder Gewährung der Lösbarkeit, und eine Vorspannfeder zur Aufrechterhaltung der Grundstellung, aufweist, wobei der Radialstift, der Axialstift und die Vorspannfeder in einer derartigen Wirkverbindung stehen, dass in Grundstellung der Freigabeeinrichtung der Axialstift die Rastkörper radial nach aussen drängt, und bei Betätigung der Freigabeeinrichtung ein Verschieben des Radialstifts den Axialstift entgegen der Vorspannfeder verschiebt, und der Axialstift durch seine Verschiebung Raum freigibt und damit das radiale Entweichen der Rastkörper in den Zapfen hinein ermöglicht.

Eine weitere Ausführungsform bezieht sich beispielsweise darauf, dass der Axialstift in Grundstellung mittels einer Vorspannkraft aus der Vorspannfeder die Rastkörper in die Kavität des Rings presst.

Eine weitere Ausführungsform bezieht sich beispielsweise darauf, dass jeder Rastkörper zumindest zwei Kontaktpunkte mit der Kavität aufweist, insbesondere mindestens eine Kontaktlinie mit der Kavität aufweist.

Ein weiterer optionaler Aspekt betrifft einen Laserscanner, wobei ein Achslagen-Kalibrationsvorgang vorgesehen ist zur Ableitung von Achslagen-Kalibrationsparametern, welche im Rahmen einer Referenzierung der Messdaten in einem gemeinsamen Koordinatensystem berücksichtigt werden, insbesondere wobei der Achslagen-Kalibrationsvorgang eine Vermessung einer bereits bekannten Umgebung und/oder bekannter Objekte in der zu vermessenden Umgebung umfasst, insbesondere wobei der Laserscanner für den Achslagen-Kalibrationsvorgang in einem hohlen Prüfkörper mit bekannten räumlichen Dimensionen angeordnet wird, und/oder in einer Prüfumgebung und/oder in der im Rahmen des effektiven Messvorgangs vorgesehenen Umgebung ein Satz von Prüfobjekten mit relativ zueinander bekannter Positionierung und/oder Dimensionierung angebracht und im Rahmen des Achslagen-Kalibrationsvorgangs vermessen werden.

Ein weiterer optionaler Aspekt betrifft einen Laserscanner, wobei die Strahllenkeinheit im Rahmen des Messvorgangs mit einer Rotationsgeschwindigkeit von mindestens 50 Hz, insbesondere von mindestens 100 Hz, im Speziellen von mindestens 250 Hz, um die Strahl-Drehachse rotiert, und/oder die Basis im Rahmen des Messvorgangs mit einer Rotationsgeschwindigkeit von mindestens 0.01 Hz, insbesondere von mindestens 0.02 Hz, im Speziellen von mindestens 0.03 Hz, um die Stütz-Drehachse rotiert.

Ein weiterer optionaler Aspekt betrifft einen Laserscanner, wobei im Rahmen des Messvorgangs, basierend auf der Rotationsgeschwindigkeit der Strahllenkeinheit um die Strahl-Drehachse und basierend auf einer Pulsfrequenz der Distanzmessstrahlung, eine minimale Abtastpunkt-Dichte von mindestens 3 Punkten pro 1° Drehwinkel eingestellt wird.

Das erfindungsgemässe System und der erfindungsgemässe Laserscanner werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1:: einen typischen Laserscanner nach dem Stand der Technik zur Vermessung eines Raumes;
- Fig. 2:: typische Gerätekomponenten für eine Abtastung mittels eines gängigen Laserscanners;
- Fig. 3:: ein erfindungsgemässes System zur optischen Vermessung mit einem Laserscanner und einer (drahtlosen) Kontroll-, Verarbeitungs- und Darstellungseinheit;
- Fig. 4:: eine weitere Ausführungsform eines erfindungsgemässen Systems zur optischen Vermessung mit einem Laserscanner und einer (drahtlosen) Kontroll-, Verarbeitungs- und Darstellungseinheit;
- Fig. 5:: eine beispielhafte Kameraanordnung von mehreren im Laserscanner integrierten Kameras bezüglich eines zentralen Bezugspunkts;
- Fig. 6:: eine beispielhafte Kameraanordnung mit spezifischen Beleuchtungsmitteln für einzelne Kamera-Blickrichtungen;
- Fig. 7:: eine beispielhafte Nutzung derselben rotierenden Strahllenkeinheit für die Sendestrahlung und die Empfangsstrahlung mittels einer biaxialen Anordnung des Strahlaustritts bezüglich der optischen Achse der Objektiveinheit;
- Fig. 8:: eine weitere beispielhafte Nutzung derselben rotierenden Strahllenkeinheit für die Sendestrahlung und die Empfangsstrahlung mittels eines in der Objektiveinheit integrierten Fensters für den Sendestrahl;
- Fig. 9:: eine beispielhafte Objektiveinheit mit einem in der Objektiveinheit integrierten Fenster für den Sendestrahl und einer Korrekturoptik für eine Messung im Nahbereich;
- Fig. 10:: eine beispielhafte Empfangsschaltung mit einer Komparatorstufe und zwei Analog-Digital-Wandlungsstufen für eine Einstellung einer Signalstärke eines Messsignals und eine Erhöhung der Messrate;
- Fig. 11:: beispielhafte Darstellung von Pulspaketen und von Probe- und Messsignalen im Rahmen einer erfindungsgemässen Empfangsschaltung mit zwei Analog-Digital-Wandlungsstufen;
- Fig. 12:: eine erfindungsgemässe Anordnung eines Laserscanners mit einer bezüglich Abtastung und Datenerfassung passiven Basis mit einer kurzen Stehachse und einer Integration des Motors in der Stütze für die Drehung der Stütze;
- Fig. 13a,b:: beispielhafte Integration des Motors für die Drehung der Stütze in der Stütze und erfindungsgemässe Lagerung basierend auf einer kurzen Stehachse mittels eines Vierpunkt-Wälzlagers (a) oder eines Gleitslagers (b);
- Fig. 14a,b:: eine beispielhafte Lagerung und einen erfindungsgemässen kompakten Antrieb der Strahllenkeinheit um die schnelle Achse mittels eines Glockenelements;
- Fig. 15:: eine weitere beispielhafte Ausführungsform des Glockenelements mit einer im Glockenelement integrierten Encoderscheibe für einen Winkelencoder;
- Fig. 16a,b:: eine beispielhafte Kopplung einer Strahllenkeinheit mit einer Welle entlang der Strahl-Drehachse mittels verpressbaren Stabilisationselementen;
- Fig. 17a,b:: eine beispielhafte Anordnung eines Laserscanners mittels einer skelettartigen, dreiteiligen Stütze;
- Fig. 18:: eine typische Verwendung eines Referenz-Elements in der Stütze eines Laserscanners;
- Fig. 19:: eine beispielhafte Multistrahl-Anordnung eines Laserscanners;
- Fig. 20:: einen Laserscanner mit einem beispielhaften Aufnahme-Element (Quick-Release), beispielsweise für die Befestigung des Laserscanners auf einem Stativ.

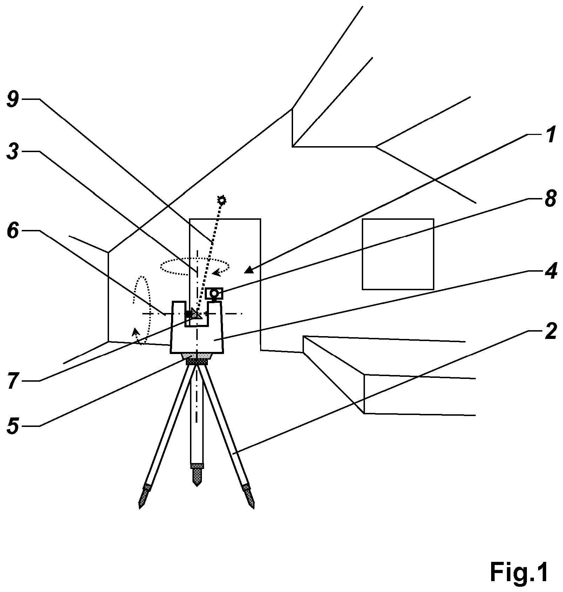

**Figur 1** zeigt einen typischen Laserscanner 1 nach dem Stand der Technik, hier mit zwei Drehachsen, beispielsweise montiert auf einem Stativ 2, wobei der Laserscanner 1 eine langsame (vertikale) Drehachse umfasst - auch Stütz-Drehachse 3 genannt - für eine azimutale Drehung des Laserscanners 1, respektive eine Drehung einer Stütze 4 des Laserscanners um eine Basis 5 des Laserscanners 1 und eine schnelle (horizontale) Drehachse - auch Strahl-Drehachse 6 genannt - bezüglich eines schnell drehenden Strahlumlenkelements 7, montiert in der Stütze 4 des Laserscanners 1.

Für eine Abtastung von linearen oder linear befahrbaren Strukturen und Umgebungen, wie beispielsweise Gleisanlagen, Strassen, Tunnelsysteme oder Flugfelder, wird oft auf eine Basis, respektive eine Azimutdrehachse, verzichtet und stattdessen wird der Laserscanner auf einem Fortbewegungsmittel montiert, beispielsweise ein boden- oder luftgestütztes Trägerfahrzeug. Solche Laserscanner mit bloss einer Strahl-Drehachse 6 werden auch Profiler genannt.

Insbesondere Profiler, aber auch zweiachsige Laserscanner für eine zusammenhängende Vermessung eines grossen Gebiets, weisen oft auch ein Positions- und Orientierungssystem auf, beispielsweise direkt im Laserscanner integriert, um lokale Abtastdaten automatisch mit einem globalen 3D-Koordinatensystem zu referenzieren.

Der Laserscanner 1 weist hier zudem eine Kamera 8 auf, beispielsweise zur Erfassung von RGB-Daten, wobei die Kamerabilder der Umgebung mit den mittels des rotierenden Distanzmessstrahls 9 und zugehörigen Winkelencoderdaten für die Richtung des Distanzmessstrahls 9 erzeugten Abtastdaten verknüpft werden können. Die Kamera kann insbesondere individuell bewegbar sein, beispielsweise um unterschiedliche Gesichtsfelder zu erfassen und/oder um die Kamerabilder und die Abtast-Daten bezüglich einer gemeinsamen Referenzfläche oder eines gemeinsamen Koordinatensystems zu orientieren.

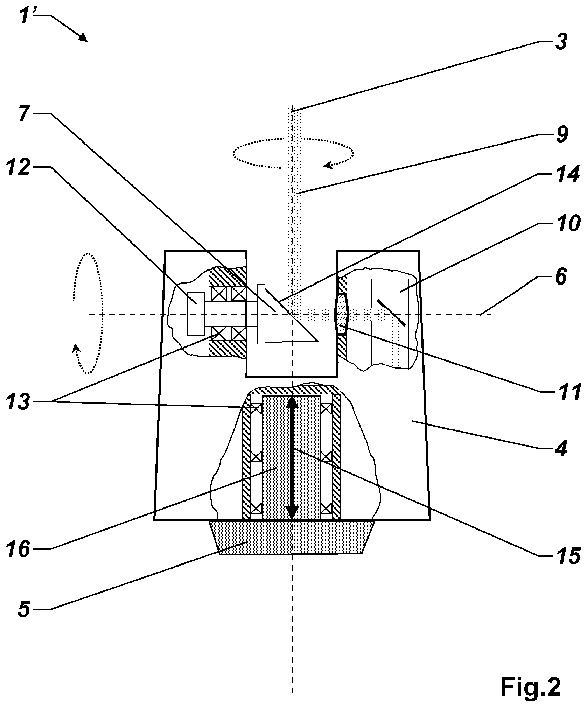

**Figur 2** zeigt typische Hauptkomponenten eines gängigen Laserscanners 1', hier beispielsweise mit zwei Drehachsen, wobei der Laserscanner 1' auf einem Aufbau mittels einer Basis 5 und einer Stütze 4 basiert, wobei die Stütze 5 um eine Stütz-Drehachse 3, insbesondere eine langsame Drehachse, drehbar auf der Basis 5 gelagert 13 ist. Oft wird die Drehung der Stütze 4 um die Stütz-Drehachse 3 auch *azimutale Drehung* genannt, unabhängig davon, ob der Laserscanner 1', respektive die Stütz-Drehachse 3, exakt vertikal ausgerichtet sind.

Kernstück des Laserscanners 1' bildet eine in der Stütze 4 angeordnete optische Distanzmessvorrichtung 10 zur Erfassung von Distanzmessdaten, mit einer Sendeeinheit zum Aussenden einer Distanzmessstrahlung 9, beispielsweise gepulste Laserstrahlung, und einer Empfangseinheit mit Empfangsoptik, insbesondere einem Objektiv 11, und einem lichtempfindlichen Sensor zum Empfangen von zurückkommenden Teilen der Distanzmessstrahlung 9, wobei ein Echo von einem rückstreuenden Oberflächenpunkt der Umgebung empfangen wird und beispielsweise anhand der Laufzeit, der Form, und/oder der Phase des Pulses eine Distanz zum Oberflächenpunkt abgeleitet wird.

Eine Abtastung der Umgebung erfolgt durch eine Ausrichtungsvariation der Emissionsrichtung des Distanzmessstrahls 9 mittels einer rotierenden Strahllenkeinheit 7 für die Distanzmessstrahlung, welche um eine zur Stütz-Drehachse 3 im Wesentlichen orthogonale Strahl-Drehachse 6, insbesondere eine schnelle Drehachse, drehbar in der Stütze 4 gelagert 13 ist. Mittels Winkelencodern 12 für die Erfassung von Winkeldaten, beispielsweise feste Winkelstellungen und/oder relative Winkeländerungen, bezüglich einer Drehung der Stütze 4 um die Stütz-Drehachse 3 und von Winkeldaten bezüglich einer Drehung der Strahllenkeinheit 7 um die Strahl-Drehachse 6, wird die Emissionsrichtung des Distanzmessstrahls 9 erfasst und mit entsprechend erfassten Distanzmessdaten verknüpft. Durch eine Vielzahl von derartigen Messpunkten kann somit im Wesentlichen die gesamte Umgebung räumlich vermessen werden, wobei beispielsweise eine gewünschte Punkt-Zu-Punkt-Auflösung mittels Einstellung der Pulsrate des Distanzmessstrahls 9 und/oder mittels Anpassung der Rotationsgeschwindigkeit der Strahllenkeinheit 7 erfolgt. Eine anschliessende Darstellung der Daten kann beispielsweise auf gängigen Datenverarbeitungsschritten und/oder Darstellungsmöglichkeiten basieren, beispielsweise zur Darstellung der erfassten Daten in Form einer 3D-Punktwolke.

Die Strahllenkeinheit 7 weist eine Spiegelfläche 14 für eine Ablenkung der Distanzmessstrahlung 9 auf, insbesondere eine bezüglich der Strahl-Drehachse 6 verkippte Spiegelfläche, beispielsweise eine plane oder parabolische Spiegelfläche, welche aufgrund der schnellen Rotation der Strahllenkeinheit 7 und den dabei auftretenden grossen Fliehkräften typischerweise integral ausgestaltet ist mit dem Drehkörper der Strahllenkeinheit 7, seltener mittels Anbringung eines separaten Optikbauteils wie z.B. ein separater Spiegel.

Eine definierte Abtastbewegung des Distanzmessstrahls 9 mit einer möglichst geringen Toleranz für die Führung des Distanzmessstrahls 9 mit einer hohen Winkelgenauigkeit erfordert typischerweise eine möglichst spielfreie Lagerung 13 der Stütze 4 und der Strahllenkeinheit 7, das heisst mit einer möglichst geringen Toleranz für eine Verkippung der Stütze 4 bezüglich der Stütz-Drehachse 3, respektive für eine Verkippung der Strahllenkeinheit 7 bezüglich der Strahl-Drehachse 6. Zudem weist die Spiegelfläche 14 typischerweise eine hohe Oberflächengenauigkeit auf, um beispielsweise eine optimale Strahlkollimation und Intensitäts-Sensitivität zu gewährleisten.

Um eine spielfreie Lagerung 13 mit einer möglichst geringen Verkippung der Strahllenkeinheit 7 und der Stütze 4 zu gewährleisten, erfolgt die Lagerung 13 typischerweise jeweils entlang eines axial möglichst ausgedehnten wirksamen Stabilisationsbereichs 15. Aufgrund des Gewichts der Stütze 4 basiert die Lagerung 13 der Stütze 4 um die Stütz-Drehachse 3 im Stand der Technik typischerweise auf einer relativ zum Gesamtvolumen der Stütze 4 möglichst lang (respektive hoch) ausgebildeten Stehachse 16, welche in Kombination mit der Lagerung 13 der Stütze 4 einen möglichst ausgedehnten axialen Stabilisierungsbereich 15 definiert.

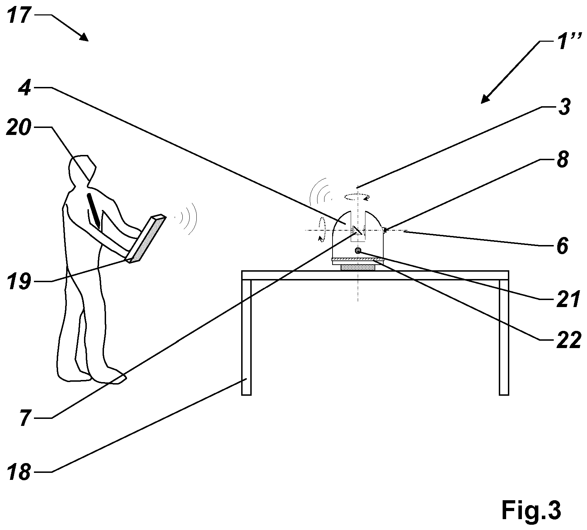

**Figur 3** zeigt ein erfinderisches System 17 zur optischen Vermessung und zur Darstellung einer Umgebung, hier beispielsweise im Bereich der Innenraumvermessung, wobei ein Laserscanner 1", beispielsweise für eine Minimierung von möglichen Abschattungen und/oder toten Winkeln, beliebig im Raum platziert werden kann, hier auf einem Tisch 18 im Raum. Das System 17 weist den Laserscanner 1" zur Erfassung von Messdaten auf, das heisst Distanzmessdaten und Winkeldaten, bereitgestellt durch eine Distanzmesseinheit und Winkelencoder für die Bestimmung der Emissionsrichtung des Distanzmessstrahls. Die Messdaten umfassen ferner Flächensensordaten, bereitgestellt durch einen an der Stütze 4 angeordneten und sich mit der Stütze 4 mitdrehenden Sensor, beispielsweise eine Kamera 8, insbesondere eine RGB-Kamera oder eine Infrarotkamera.

Die Messdaten werden durch den Laserscanner 1" im Rahmen eines Messvorgangs erfasst, definiert durch eine scannende Abtastung mittels der Distanzmessvorrichtung mit einer definierten fortlaufenden Drehung der Stütze 4 um die Stütz-Drehachse 3, einer definierten fortlaufenden Drehung der Strahllenkeinheit 7 um die Strahl-Drehachse 6 und einem fortlaufenden Aussenden der Distanzmessstrahlung und einem fortlaufenden Empfangen von zurückkommenden Teilen der Distanzmessstrahlung, sowie ein mehrmaliges Auslesen des flächigen Sensors 8 bezüglich unterschiedlichen azimutalen Blickrichtungen des Sensors 8.

Das erfinderische System 17 umfasst ferner eine Verarbeitungseinheit, angeordnet auf einem zum Laserscanner 1" separaten Rechengerät 19, insbesondere ein Computer oder Tablet, zur Verarbeitung von Teilen der Messdaten bezüglich einer Verknüpfung der Flächensensordaten mit den Distanzmessdaten und den Winkeldaten, wobei das erfinderische System 17 derart ausgebildet ist, dass noch während der Datenerfassung der Messdaten im Rahmen des Messvorgangs zumindest eine initiale Verarbeitung von Teilen der Messdaten bezüglich einer Verknüpfung der Flächensensordaten mit den Distanzmessdaten und den Winkeldaten erfolgt, insbesondere möglichst zeitnah, das heisst im Wesentlichen zeitlich parallel zur Datenaufnahme, und fortlaufend für einen Benutzer 20 dargestellt wird, beispielsweise als fortlaufend wachsende eingefärbte 3D-Punktwolke, beispielsweise mittels eines mit dem Rechengerät 19 gekoppelten oder integrierten Displays.

Im Speziellen sind der Laserscanner 1" und das Rechengerät 19 derart konfiguriert, dass die Übertragung der Messdaten vom Laserscanner 1" auf das Rechengerät 19, welche mittels eines gleichzeitig oder zumindest zeitnah zum Messvorgang gestarteten Datenstreamings im Wesentlichen zeitlich parallel zur Datenerfassung erfolgt, mittels einer drahtlosen Übertragung erfolgt, beispielsweise mittels WLAN- oder Bluetooth-Verbindung. Insbesondere sind der Laserscanner 1" und das Rechengerät 19 derart konfiguriert, dass vom Rechengerät 19 Kontroll- und Steuersignale an den Laserscanner 1" übertragen werden und der Laserscanner 1" somit mittels der externen Recheneinheit 19 kontrolliert wird und beispielsweise ein definierter Messvorgang des Laserscanners 1" vom Rechengerät 19 aus gestartet, gestoppt, unterbrochen und/oder angepasst werden kann.

In Laserscannern ist die Abtastung mittels der Distanzmessvorrichtung zentral und Kameradaten werden im Stand der Technik deshalb typischerweise erst nach einer kompletten Raum-Abtastung (360 Grad Azimutdrehung) durch die Distanzmessvorrichtung erfasst, beispielsweise als ergänzende Informationen und oft auch nur für ausgewählte Bereiche der Umgebung, beispielsweise zur verbesserten Darstellung eines Interessenbereichs für einen Benutzer.

In Laserscannern zur räumlichen Vermessung verwendete Distanzmessmodule weisen typischerweise keine Farbempfindlichkeit auf, weshalb die erzeugte 3D-Punktwolke ohne Zuhilfenahme von zusätzlichen Daten in Graustufen dargestellt wird. Dadurch bleiben für einen menschlichen Betrachter aufgrund der fehlenden Farbwirkung und der fehlenden durch Farben unterstützten Tiefenwirkung viele Details verborgen. Mit RGB-Daten einer Farbkamera kann zum Beispiel eine "farbige" 3D-Punktwolke erzeugt werden, wodurch beispielsweise die Darstellung für das menschliche Auge deutlich erleichtert wird. Eine solche Referenzierung von unterschiedlichen Daten und Datensätzen erfolgt heutzutage beispielsweise mittels gängigen Datenverabeitungsalgorithmen zunehmend standardisiert.

Im Stand der Technik sind Laserscanner oft derart ausgebildet, dass das Blickfeld einer Kamera, beispielsweise einer RGB-Kamera, im Wesentlichen eine durch eine fiktive 360-Grad-Drehung der Strahllenkeinheit um die Strahl-Drehachse definierte Abtastebene der Distanzmessstrahlung erfasst, beispielsweise mittels paralleler Ausrichtung der optischen Achse der Kamera zur Abtastebene oder über entsprechende koaxiale Einkopplung des Strahlengangs der Kamera in den Strahlengang der Distanzmessvorrichtung. Dies hat beispielsweise den Vorteil, dass zumindest für den Blickbereich der Kamera unmittelbar korrespondierende Kamera- und Distanzmessdaten erfasst werden können. Dies erlaubt zum Beispiel eine gleichzeitige Erfassung der Kameradaten mit zum Kamerablickfeld korrespondierenden Distanzmessdaten, was die Referenzierung der Kameradaten mit den Distanzmessdaten erleichtern kann. Zum Beispiel können so allfällige während des Messvorgangs auftretende Störeffekte in der Umgebung sowohl in den Kamera- wie auch in den Distanzmessdaten identifiziert werden.

Eine derartige Integration und Ausrichtung des Kamerablickfeldes ist jedoch oft mit einem gewissen Integrationsaufwand verbunden und insbesondere im Falle einer möglichst kompakten Bauweise des Laserscanners nur bedingt möglich.

Ein optionaler Aspekt betrifft eine Integration des flächigen Sensors 8, insbesondere einer RGB-Kamera, in den Laserscanner 1", so dass sich die Blickrichtung des flächigen Sensors deutlich von der Abtastebene unterscheidet, wobei sich beispielsweise eine fiktive rückwärtige Verlängerung der optischen Achse des flächigen Sensors mit der Abtastebene unter einem Schnittwinkel von mindestens 45 Grad schneidet, im Speziellen unter einem Winkel von 90 Grad, insbesondere wobei die Abtastebene nicht vom Gesichtsfeld des flächigen Sensors erfasst wird.

Diese Anordnung der Kamera 8 im Laserscanner ermöglicht zum Beispiel eine kompakte Bauweise des Laserscanners 1", hat jedoch den Nachteil, dass eine gleichzeitige Erfassung der Kameradaten mit zum Kamerablickfeld korrespondierenden Distanzmessdaten gegebenenfalls nicht möglich ist. Die erfinderische Anordnung ermöglicht hingegen ein zur Abtastung mit der Distanzmessvorrichtung paralleles Auslesen des flächigen Sensors 8, z.B. der RGB-Kamera, wodurch beispielsweise eine Ganzkuppelmessung in einem Aufwasch durch die abtastende Distanzmessvorrichtung und die Kamera 8 erfolgen kann, also beschleunigt wird, wobei beispielsweise die Distanzmessdaten, die Winkeldaten und die Kameradaten anschliessend rechnerisch entsprechend bezüglich einander referenziert werden können.

Eine komplette Raum-Abtastung (360 Grad Azimutdrehung) mittels der Distanzmessvorrichtung nimmt verglichen mit einer 360-Grad-Erfassung der Kameradaten relativ viel Zeit in Anspruch. Um dennoch eine unmittelbar mit dem Messvorgang gestartete Darstellung der Umgebung, insbesondere als farbige 3D-Punktwolke, zu gewährleisten, bezieht sich ein optionaler Aspekt darauf, dass zeitlich erst farbige Kameradaten der Umgebung erfasst werden, und erst anschliessend die Abtastung mittels der Distanzmessvorrichtung erfolgt. Eine zumindest initiale Verarbeitung erfolgt somit bereits basierend auf den vergleichsweise schnell erfassten Kameradaten, welche einem Benutzer 20 beispielsweise als 2D-Panoramadarstellung angezeigt werden; und eine Verknüpfung der Distanzmessdaten und den Winkeldaten mit den erfassten Kameradaten kann praktisch in Echtzeit mit der Erfassung der Distanzmessdaten erfolgen, wodurch zum Beispiel dem Benutzer 20 im Wesentlichen in Echtzeit eine stetig wachsende farbige 3D-Punktwolke angezeigt werden kann. Dies ermöglicht beispielsweise eine rasche Einschätzung der erfassten Daten durch den Benutzer 20 und gegebenenfalls eine unmittelbare Anpassung oder Änderung von Einstellungen des Laserscanners 1", beispielsweise eines definierten Messmodus mit unterschiedlicher Punktdichte.

Da der Laserscanner 1" im Rahmen des erfindungsgemässen Systems mittels einer externen Recheneinheit 19, insbesondere einem drahtlos mit dem Laserscanner 1" verbundenen Tablet, gesteuert werden kann, welche insbesondere auch die rechenintensive Verknüpfung der Distanzmessdaten mit den Kameradaten und den Winkeldaten sowie die Darstellung der Messdaten durchführt, kann der Laserscanner 1" sehr kompakt gebaut sein.

Im Speziellen benötigt der Laserscanner 1" selber nur eine minimale Anzahl an im Laserscanner 1" integrierten Bedienungselementen. Zum Beispiel weist ein erfindungsgemässer Laserscanner 1" lediglich ein einziges integriertes Bedienelement 21 auf, welches einen aktivierten und einen unaktivierten Zustand aufweist und über eine äussere Wirkung schaltbar ist um den aktivierten oder unaktivierten Zustand einzunehmen. Dabei sind den beiden Zuständen, respektive einem Wechsel des Zustands des Bedienelements 21 vom unaktiven in den aktiven Zustand, einem Wechsel des Zustands des Bedienelements 21 vom aktiven in den unaktiven Zustand, einem Schalten des Bedienelements 21 mittels einer andauernden äussere Wirkung während eines definierten Zeitraums (z.B. andauerndes Drücken eines Bedienknopfes), einer codierte Abfolge von Zustandsänderungen des Bedienelements 21 zwischen dem aktiven und unaktiven Zustand und/oder einer codierte Abfolge von zeitlich andauernden äusseren Wirkungen auf das Bedienelement 21 über definierte Zeiträume beispielsweise einzelne Messprogramme und/oder Aktionen des Laserscanners 1" zugeordnet, z.B. Aktivieren/Deaktivieren des Laserscanners 1", Start eines definierten Messvorgangs, oder Unterbruch/Abbruch/Neustart eines Messvorgangs.

Zum Beispiel kann der Laserscanner 1" zudem mit einem Positions- und Orientierungssystem ausgebildet sein, beispielsweise mittels eines Trägheitssystems, Neigungssensoren oder eines Empfängers für ein globales Satelliten-Navigationssystem, welches durch das Bedienelement 21 in einen aktiven Zustand versetzt wird, wonach fortlaufend die Position und/oder Orientierung des Laserscanners 1" bestimmt und in den Messdaten hinterlegt wird. In so einem Modus kann dann der Laserscanner 1" im Raum bewegt werden und beispielsweise lokale Abtastdaten automatisch mit einem globalen 3D-Koordinatensystem referenziert werden.

Der Laserscanner 1" kann ferner derart ausgestaltet sein, dass definierte Messprogramme und Aktionen auf dem Laserscanner 1" gespeichert sind und/oder dass neue Messprogramme und Aktionen, beispielsweise über eine entsprechende Eingabefunktionalität des externen Rechengeräts 19, definiert und den Zuständen/Zustandsänderungen des Bedienelements 21 zugeordnet werden können.

Ein weiterer optionaler Aspekt betrifft eine Statusanzeige 22 für eine Anzeige eines Gerätestatus, beispielsweise die Anzeige von einem Status eines aktuellen Messvorgangs, wobei die Statusanzeige 22 an der Stütze 4 angeordnet ist, das heisst sich bei der Drehung der Stütze 4 um die Stütz-Drehachse 3 mitdreht. Die Statusanzeige 22 ist dabei derart ausgebildet, dass sie bezüglich der Stütz-Drehachse 3 umfänglich in alle azimutalen Richtungen gleichmässig aussieht. Zum Beispiel kann somit einem Benutzer 20 des Laserscanners 1" unabhängig von dessen Blickrichtung auf den Laserscanner 1" (vom Scanner aus gesehen unabhängig von einer Azimutwinkel-Position des Benutzers 20) jeweils dieselbe Information bereitgestellt werden, insbesondere selbst dann, wenn ein Messvorgang läuft und sich der Scanner 1" dreht.

Zum Beispiel kann die Statusanzeige 22 mittels eines Lichtleiterrings mit zwei sich gegenüberliegenden Einkopplungen von Licht ausgebildet sein, wobei mit zunehmendem Abstand von der Einkoppelposition entlang des Lichtleiterrings der Quotient von Abstrahlung (radialer Auskopplung) zu Weiterleitung zunimmt, wobei der Gerätestatus einem Benutzer 20 mittels einer visuellen Codierung offenbart wird, beispielsweise einer definierten Farbcodierung der Statusanzeige 22 und/oder mittels einer definierten Blinkcodierung der Statusanzeige 22.

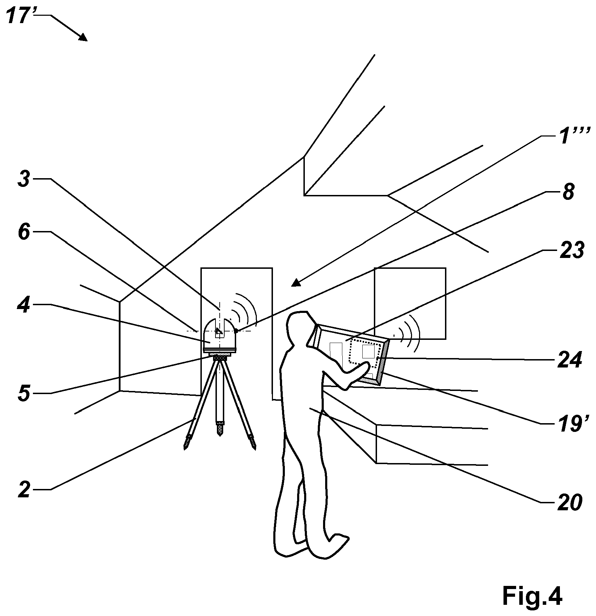

**Figur 4** zeigt eine weitere Ausführungsform eines erfinderischen Systems 17' zur optischen Vermessung und zur Darstellung einer Umgebung, hier beispielsweise wiederum im Bereich der Innenraumvermessung, wobei der Laserscanner 1‴ auf einem Stativ montiert ist. Wie zuvor (siehe Fig. 3) wird der Laserscanner 1‴ über ein externes Rechengerät 19' drahtlos gesteuert, hier z.B. durch ein Tablet, wobei in beide Richtungen (Laserscanner 1‴ auf Tablet 19' und umgekehrt) Daten sowie Kontroll- und Steuersignale übertragen werden.

In dieser Ausführungsform ist das Tablet 19' zudem mit einem Trägheitsmesssystem und/oder Neigungssensoren ausgestattet, sodass der Laserscanner 1‴ aufgrund einer Lage (Position, Orientierung) des Rechengeräts 19' gesteuert werden kann, beispielsweise im Wesentlichen synchron mit der Lageänderung des Rechengeräts 19'.

Das Tablet 19' weist zudem ein Display 23 auf, auf welchem beispielsweise ein aktueller Livestream der Kamera 8 angezeigt wird, sodass ein Benutzer 20 für unterschiedliche Azimutwinkelstellungen der Stütze 4 des Laserscanners 1‴ die Umgebung aus Sicht der Position und Orientierung des Laserscanners 1‴ betrachten kann. Dadurch kann beispielsweise vorgängig zur Messung überprüft werden, ob die gegenwärtige Position des Laserscanners 1‴ im Raum angepasst werden muss um tote Winkel zu vermeiden.

Zudem kann der Benutzer 20 beispielsweise über das Tablet 19', zum Beispiel über eine Touch-Screen Funktionalität, zu verschiedenen Azimutstellungen des Laserscanners 1‴ unterschiedliche Interessensbereiche 24 in der Umgebung definieren, und den Interessensbereichen 24 vorgängig zum Messvorgang definierte Einstellungen zuweisen für die Erfassung von Messdaten (z.B. Kameraauflösung, Distanzmessgenauigkeit, Abtast-Auflösung) und/oder definierte Einstellungen für die Darstellung von Teilen der verarbeiteten Messdaten (z.B. Farbeinstellung, Hervorhebungen).

Weiter kann das Tablet 19' (oder der Laserscanner 1‴) beispielsweise auf Daten für eine erweiterte Realität zugreifen, sodass dem Benutzer 20 zum Beispiel weitere, fürs menschliche Auge verborgene Details der Umgebung aus Sicht des Scanners 1‴ dargestellt werden, wie zum Beispiel in den Wänden verborgene Strom- oder Wasserleitungen, vorgesehene Montagepunkte, Möbel, etc.

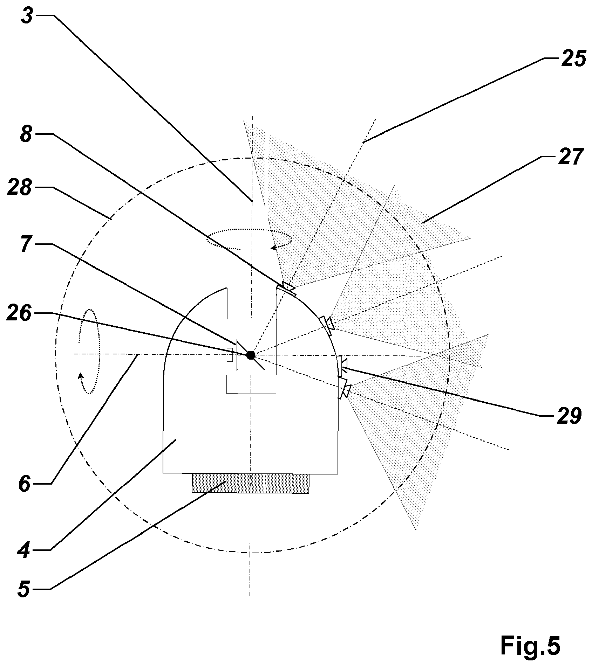

**Figur 5** zeigt einen erfindungsgemässen Laserscanner mit mehreren an der Stütze integrierten Kameras 8, insbesondere wobei die Kameras 8 derart angeordnet sind, dass ihre optischen Achsen 25 alle in derselben Azimutebene liegen - hier beispielsweise senkrecht zur durch eine fiktive 360-Grad-Drehung der Strahllenkeinheit 7 um die Strahl-Drehachse 6 definierten Abtastebene der Distanzmessstrahlung - und die Kameras 8 somit jeweils dieselbe azimutale Blickrichtung aufweisen.

Der Laserscanner weist einen zentralen Bezugspunkt 26 als Ursprung für die Distanz- und Winkelmessung der Distanzmessvorrichtung auf, beispielsweise den Schnittpunkt der optischen Achse des Objektivs mit der Strahllenkeinheit 7. Alternativ können die Distanzmessdaten auch rechnerisch bezüglich einem anderweitig definierten zentralen Bezugspunkt korrigiert werden.

Die Kameras 8 sind erfindungsgemäss nun derart an der Stütze 4 angeordnet, dass eine fiktive rückwärtige Verlängerung ihrer optischen Achsen 25 jeweils durch den zentralen Bezugspunkt 26 verlaufen, die Kameras 8 also bezüglich des zentralen Bezugspunkts 26 parallaxenfrei angeordnet sind. Dies erleichtert beispielsweise die Referenzierung der Kameradaten mit Distanz- und Winkeldaten für eine Darstellung der Messdaten als 3D-Punktwolke.

Zudem ist durch die parallaxenfreie Anordnung sichergestellt, dass die optische Achse 25 der Kamera 8 immer im Wesentlichen koaxial zu einer Ausrichtung (Azimut- und Elevationswinkel) des Distanzmessstrahls ist, nämlich insofern, dass die Kamera 8 im Rahmen des Messvorgangs (im Rahmen der Azimutdrehung der Stütze 4) früher oder später in eine vergangene oder zukünftige Blickrichtung der Distanzmessstrahlung gedreht wird, je nach dem ob die Kamera 8 bezüglich der Azimut-Drehrichtung und der sich azimutal drehenden Abtastebene der Distanzmessstrahlung "voraus" oder "zurück" schaut. Durch die parallaxenfreie Anordnung "sieht" die Kamera 8 also das gleiche wie die Distanzmessstrahlung und ist im Wesentlichen denselben (durch die Umgebung erzeugten) Abschattungen und Sichtfeldblockierungen unterworfen wie die Distanzmesssvorrichtung, erfasst also im Wesentlichen die gleichen Abtastpunkte wie die Distanzmessstrahlung. Dadurch werden beispielsweise Ecken und Kanten im Wesentlichen gleichartig durch die Kamera 8 und die Distanzmessvorrichtung erfasst, was wiederum deren Referenzierung und/oder Modellierung basierend auf den Kamera- und Abtastdaten verbessert.

Im Speziellen Fall können die Kameras 8 derart ausgebildet und angeordnet sein, dass sie unterschiedliche elevative Blickfelder abdecken, beispielsweise drei Kameras, wobei sich ihre Blickfeldkegel 27 ab einem minimalen Radius 28 um den zentralen Bezugspunkt 26 schneiden.

Insbesondere wenn die Kamera mit der steilsten elevativen Ausrichtung der optischen Achse derart ausgebildet ist, dass sich ihr Gesichtfeldkegel 27 mit der Stütz-Drehachse 3 schneidet, beispielsweise im Abstand des obigen minimalen Radius 28 vom zentralen Bezugspunkt 26, wird durch die Anordnung der Kameras ab dem minimalen Radius 28 eine Ganzkuppelmessung ermöglicht (Messung der durch die Stütz-Drehachse 3 und die Strahl-Drehachse 6 definierten Halbkugel über der Ebene welche senkrecht zur Stütz-Drehachse 3 und senkrecht zur Strahl-Drehachse 6 aufgespannt wird).

Ebenfalls in der Figur dargestellt ist eine Kamera 29 mit Parallaxe bezüglich des zentralen Bezugspunkts 26, beispielsweise eine Infrarot-Kamera zur Erfassung von Wärmedaten.

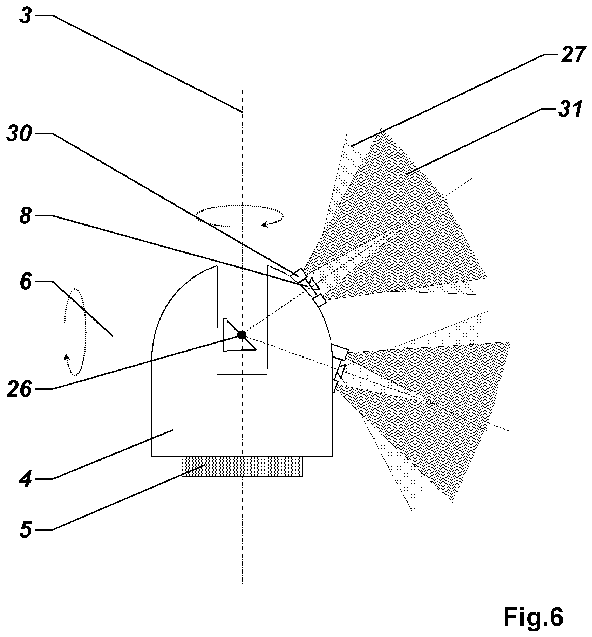

**Figur 6** zeigt eine weitere Ausführungsform eines erfindungsgemässen Laserscanners mit in der Stütze 4 angeordneten parallaxenfreien Kameras 8 bezüglich eines zentralen Bezugspunkts 26 des Laserscanners als Ursprung für die Distanz- und Winkelmessung der Distanzmessvorrichtung (siehe Fig. 5). Die Stütze 4 weist hier zusätzlich mehrere, jeweils das Blickfeld einzelner Kameras erhellende Leuchten 30 auf, wobei die Leuchten 30 derart ausgebildet und angeordnet sind, dass sie für eine spezifisch ansteuerbare, im Wesentlichen jeweils auf das Blickfeld einer spezifischen Kamera gerichtete Ausleuchtung eingesetzt werden.

Typischerweise sind die Leuchten 30 derart ausgebildet, dass die Divergenz ihres Lichtkegels 31 kleiner ist als der Blickfeldwinkel der Kameras, wobei jeder Kamera zum Beispiel je zwei oder vier unmittelbar an ihrer Seite angeordnete Leuchten 30 zugeordnet sind. Die Leuchten 30 sind zum Beispiel als LEDs ausgebildet, um weisses Licht auszusenden, oder jeweils als Dual-LED, d.h. als LED-Pärchen mit zwei sich bezüglich ihres ausgesendeten Spektralbereichs unterscheidenden LEDs, um fürs menschliche Auge möglichst realistische Farbdarstellungen der Kameraabbildungen zu erzielen.

Um eine optimale (individuelle) Ausleuchtung der einzelnen Kameras zu erzielen, kann beispielsweise erst eine 360-Grad (Azimutdrehung) Vor-Abtastung mittels der Kameras erfolgen, zum Beispiel mit ausgeschalteten Leuchten oder wobei die Leuchten mit einer einheitlichen Intensität eingestellt sind, um für unterschiedliche Azimutstellungen für die einzelnen Kameras jeweils optimierte Belichtungszeiten und Beleuchtungsintensitäten abzuleiten, welche anschliessend in einer effektiven Messabtastung berücksichtigt werden.

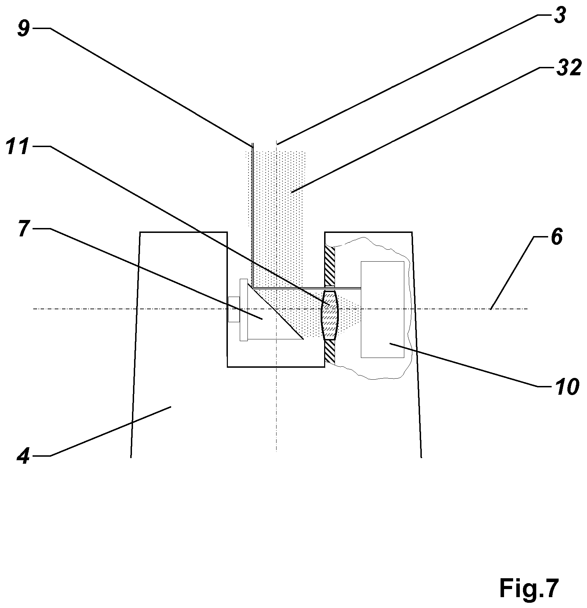

**Figur 7** zeigt eine weitere Ausführung eines Laserscanners mit einer biaxialen Anordnung bezüglich des ausgehenden Distanzmessstrahls 9 und der optischen Achse des Objektivs 11 oder des Empfängers der Distanzmessvorrichtung 10, wobei der ausgehende Distanzmessstrahl 9 und die zurückkommenden Teile 32 des Distanzmessstrahls über dasselbe optische Drehelement 7 in die Umgebung abgelenkt, respektive ins Objektiv 11 gerichtet werden. Dadurch wird beispielsweise eine kompakte, einfache und robuste Bauweise der Distanzmessvorrichtung 10 ermöglicht. Im gezeigten Beispiel ist die ausgehende Distanzmessstrahlung 9 derart angeordnet, dass sie unmittelbar neben dem Objektiv 11 der Empfangseinheit der Distanzmessvorrichtung 10 austritt.

Im Gegensatz zur oft verwendeten koaxialen Anordnung zwischen Distanzmessstrahl und Objektiv tritt keine zentrale Abschattung auf, beispielsweise verursacht durch einen im Zentrum des Objektivs angeordneten Einlenkspiegel für die Distanzmessstrahlung. Allerdings tritt, insbesondere für aus einem Nahfeld zurückkommende Teile der Distanzmessstrahlung, ein Parallaxeneffekt auf, verursacht durch den lateralen Versatz des Strahlaustritts zur optischen Achse des Objektivs. Zum Beispiel wird dadurch eine vertikale Wand durch den Distanzmessstrahl anstelle von im Wesentlichen vertikalen Abtastschnitten mit sinusförmigen Abtastschnitten abgetastet.

Dieser Effekt kann aber einerseits mit einer geeigneten Korrekturoptik im Objektiv 11 kompensiert werden, beispielsweise einer zylindrischen Linse und/oder andererseits im Rahmen einer Referenzierung der Messdaten bezüglich eines gemeinsamen Koordinatensystems rechnerisch mittels eines Kompensationsalgorithmus kompensiert werden, basierend auf der im Zeitpunkt der Erfassung der Distanzmessstrahlung hinterlegten Winkelstellung der Strahllenkeinheit 7 und der erfassten Distanz.

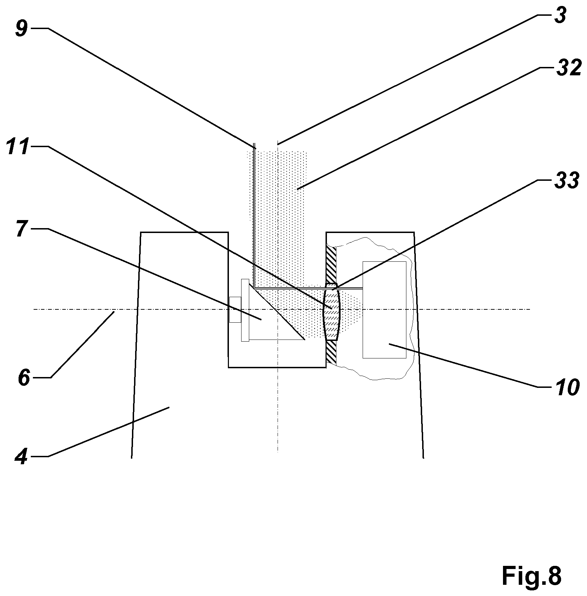

**Figur 8** zeigt eine weitere Ausführungsform eines erfinderischen Laserscanners mit einer biaxialen Anordnung bezüglich des ausgehenden Distanzmessstrahls 9 und der optischen Achse des Objektivs 11 oder des Empfängers der Distanzmessvorrichtung 10, wobei hier die Distanzmessstrahlung 9 durch einen im Objektiv 11 angeordneten Austrittsbereich 33 austritt, beispielsweise durch eine Aussparung oder ein Fenster im Objektiv 11. Dadurch wird zum Beispiel einerseits der durch den lateralen Versatz zwischen dem ausgehenden Distanzmessstrahl 9 und der optische Achse der Empfangseinheit verursachte Parallaxeneffekt reduziert und andererseits ist die effektive Lichtsammelfläche durch die Strahllenkeinheit 7 und das Objektiv 11 besser ausgenutzt.

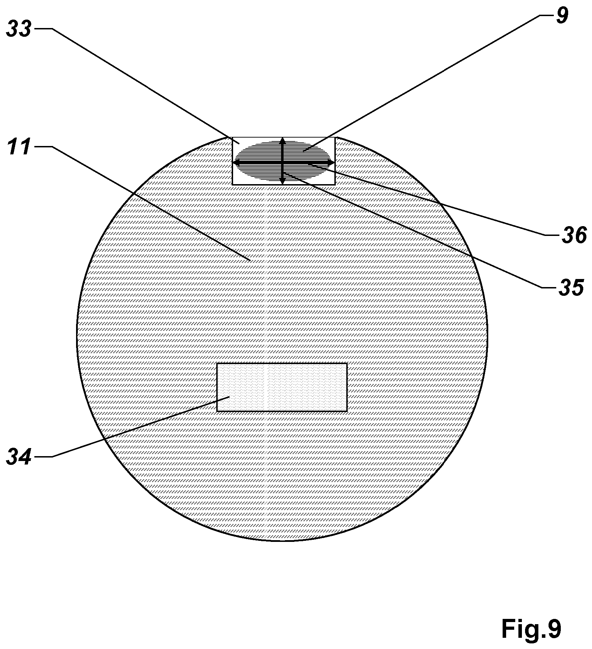

**Figur 9** zeigt eine Frontansicht einer Objektiveinheit 11 für eine erfinderische biaxiale Anordnung bezüglich des ausgehenden Distanzmessstrahls 9 und der optischen Achse des Objektivs 11 der Distanzmessvorrichtung, wobei die Distanzmessstrahlung 9 durch einen im Objektiv 11 angeordneten Austrittsbereich 33 austritt (siehe Fig. 8), hier zum Beispiel unmittelbar radial am Rand des Objektivs 11 angeordnet. Zudem ist weiter eine Korrekturoptik 34 zur Kompensation des Parallaxeneffekts für aus einem Nahfeld zurückkommende Teile der Distanzmessstrahlung 9 angedeutet.

Der Austrittsbereich 33 ist typischerweise derart dimensioniert und orientiert, dass die Geometrie des Austrittsbereichs 33 die minimale 35 und maximale 36 Ausdehnung der Strahltaille der ausgehenden Distanzmessstrahlung 9 - beispielsweise abhängig von der Geometrie, Anordnung und Orientierung einer die Distanzmessstrahlung 9 erzeugenden Diode - im Wesentlichen gerade noch umfasst, insbesondere wobei die Geometrie und Orientierung des Austrittsbereichs bezüglich der Geometrie und Orientierung des Strahlquerschnitts angepasst ist, z.B. in Form eines ovalen Fensters.

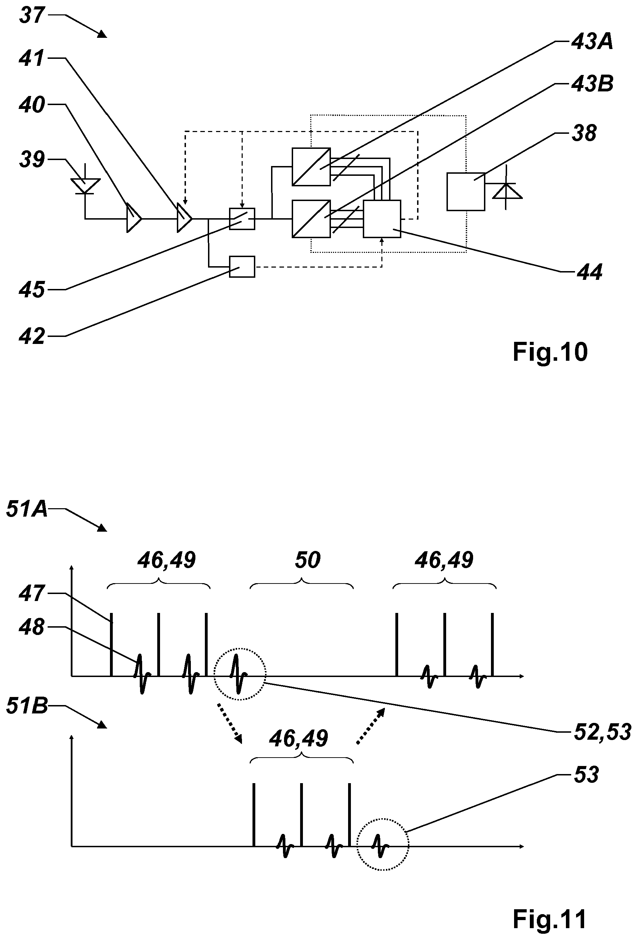

**Figur 10** zeigt eine schematische Darstellung einer beispielhaften Empfangsschaltung 37 eines Laserdistanzmessmoduls, geeignet zur Ableitung einer Distanz zu einem Zielobjekt basierend auf dem Signallaufzeitverfahren, welche hier mit einem Pulser 38 gekoppelt ist.

Zum Beispiel umfasst die Empfangsschaltung 37 ein Empfangselement 39, wie beispielsweise eine Empfängerdiode, einen Transimpedanzverstärker 40 und eine Verstärkereinheit 41 zur Anpassung einer Signalstärke, insbesondere mittels Verstärkung oder Abschwächung eines Eingangssignals, beispielsweise durch einen VGA (Variable Gain Amplifier). Die Empfangsschaltung 37 umfasst ferner eine Komparatorstufe 42 zur Ableitung einer Signalstärke eines erfassten Empfangssignals, hier angeordnet nach der Verstärkereinheit 41, wobei die Komparatorstufe 42 alternativ auch vor der Verstärkereinheit 41 angeordnet sein kann. Die Schaltung 37 weist zudem eine erste 43A und eine zweite 43B Analog-Digital-Wandlungsstufe auf, sowie eine Steuereinheit 44, beispielsweise einen Mikroprozessor oder ein FPGA (Field Programmable Gate Array).

Die Komparatorstufe 42, die Verstärkereinheit 41 und die erste 43A und zweite 43B Analog-Digital-Wandlungsstufe sind derart angeordnet, dass eine fortlaufende Abfolge von Distanzmessungen eine erste Distanzmessung mittels der ersten Analog-Digital-Wandlungsstufe 43A umfasst, beispielsweise basierend auf einem ersten Signalpaket von aufeinander folgenden Empfangssignalen, sowie eine zweite Distanzmessung mittels der zweiten Analog-Digital-Wandlungsstufe 43B, beispielsweise basierend auf einem zweiten Signalpaket von aufeinander folgenden Empfangssignalen. Dabei erfolgt eine alternierende Verwendung der ersten 43A und zweiten 43B Analog-Digital-Wandlungsstufe, wobei jeweils ein erstes Empfangssignal als Probesignal verwendet wird und ein zweites Empfangssignals als Messsignal. Das Probesignal wird der Komparatorstufe 42 zugeführt, mittels welcher eine Signalstärke des Probesignals abgeleitet wird, wobei eine Einstellung der Verstärkereinheit 41 für zumindest Teile der das Messsignal enthaltenden Empfangssignale basierend auf der abgeleiteten Signalstärke des Probesignals erfolgt, sodass zumindest das Messsignal als ein Eingangssignal im Aussteuerbereich der Analog-Digital-Wandlungsstufen 43A,B vorliegt.

Im gezeigten Beispiel weist die Empfangsschaltung 37 zudem eine Aktivierungseinheit 45 auf, mittels welcher beispielsweise eine Einstellung erfolgt, wonach das Probesignal für die Ableitung der Distanz zum Zielobjekt entweder mitberücksichtigt oder verworfen wird. Im Speziellen kann die Aktivierungseinheit 45 beispielsweise derart ausgestaltet sein, beispielsweise bei einer entsprechenden Hinterlegung der erfassten Empfangssignale, dass ein Wertebereich für eine nutzbare Signalstärke des Probesignals definiert ist und ein Abgleich der durch die Komparatorstufe abgeleiteten Signalstärke des Probesignals mit dem Wertebereich erfolgt; wobei eine Ansteuerung der Aktivierungseinheit 45 erfolgt, basierend auf dem Abgleich der Signalstärke mit dem Wertebereich, sodass falls die Signalstärke des Probesignals innerhalb des Wertebereichs liegt, das Probesignal für die Ableitung der Distanz zum Zielobjekt berücksichtigt wird, und falls die Signalstärke des Probesignals ausserhalb des Wertebereichs liegt, das Probesignal für die Ableitung der Distanz zum Zielobjekt verworfen wird.

**Figur 11** zeigt eine beispielhafte Darstellung von Pulspaketen 46 von als Probe- und Messsignale verwendeten Sendesignalen 47 und Empfangssignalen 48 im Rahmen einer beispielhaften Empfangsschaltung 37 (siehe Fig. 10) mit zwei Analog-Digital-Wandlungsstufen 43A,B (siehe Fig. 10), wobei jede Analog-Digital-Wandlungsstufe eine Samplingphase 49 für eine Aufnahme eines einkommenden Signals und eine Ausgabephase 50 für eine Auswertung des einkommenden Signals aufweist, wobei im Rahmen der alternierenden Verwendung der ersten 51A und zweiten 51B Analog-Digital-Wandlungsstufe die Ausgabephase 50 der ersten Analog-Digital-Wandlungsstufe jeweils zeitnah oder zeitgleich mit der Samplingphase 49 der zweiten Analog-Digital-Wandlungsstufe erfolgt und die Ausgabephase 50 der zweiten Analog-Digital-Wandlungsstufe jeweils zeitnah oder zeitgleich mit der Samplingphase 49 der ersten Analog-Digital-Wandlungsstufe erfolgt.

Dadurch kann beispielsweise jeweils im Rahmen einer einzelnen Distanzmessung durch die zweite Analog-Digital-Wandlungsstufe ein Empfangssignal 52 eines Empfangspakets einer unmittelbar vorhergehenden Distanzmessung durch die erste Analog-Digital-Wandlungsstufe als aktuelles Probesignal 53 für die Distanzmessung der zweiten Analog-Digital-Wandlungsstufe verwendet werden (und umgekehrt). Dadurch kann ein geeignetes Eingangssignal im Aussteuerbereich der Analog-Digital-Wandlungsstufen bereits nach wenigen Iterationen eingestellt werden, wobei durch die alternierende Verwendung der Analog-Digital-Wandlungsstufen hohe Distanzmessraten erzielt werden.

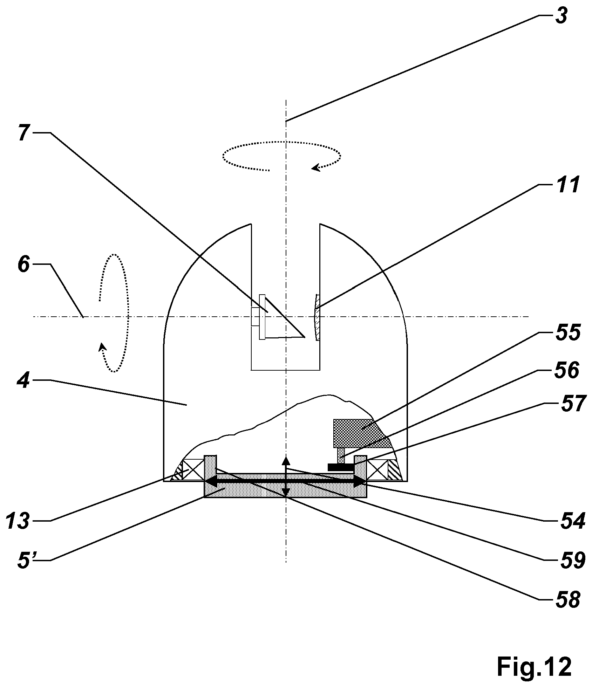

**Figur 12** zeigt einen erfindungsgemässen Laserscanner mit einer bezüglich Abtastung und Datenerfassung "passiven" Basis 5', hier mit einer im Vergleich zur radialen Ausdehnung kurzen axialen Stehachse 54 und einer Integration des Motors 55 für die Drehung der Stütze 4 in der Stütze 4.

Die Basis 5' ist insofern passiv, als dass sämtliche für die Motorisierung der Drehung um die Stütz-Drehachse 3 benötigte aktive Elektronik - beispielsweise für einen Direktantrieb, Piezoantrieb oder Reibrad-Antrieb - ausschliesslich in der Stütze 4 angeordnet ist und mit der Stütze 4 um die Stütz-Drehachse 3 mitdreht, wobei beispielsweise ein aktives Antriebselement 55 für die Drehung der Stütze 4 um die Stütz-Drehachse 3, hier ein Drehmotor mit einer an den Motor gekoppelten Antriebswelle 56, und eine Energieversorgungseinheit für das aktive Antriebselement 55 jeweils als Ganzes in der Stütze 4 angeordnet sind.

Im gezeigten Beispiel ist der Antrieb für die Drehung der Stütze 4 um die Stütz-Drehachse 3 als Reibradantrieb ausgebildet, wobei eine Antriebswelle 56 eines Drehmotors 55 mit einem Versatz zur Stütz-Drehachse 3 parallel zur Stütz-Drehachse 3 zur Basis 5' verläuft, wobei am Abtriebsbereich der Antriebswelle 56 beispielsweise ein mit einem Gummiring ausgebildetes Laufrad 57 angeordnet ist, welches entlang einer kreissymmetrischen Lauffläche 58 der Basis 5' abrollt.

Durch die kompakte Bauweise, insbesondere die kurze axiale Stehachse 54, ist hier die radiale Ausdehnung 59 der Stehachse möglichst gross gewählt und die Antriebswelle 56, respektive das Laufrad 57, läuft auf einer Lauffläche 58 definiert durch die Innenseite eines Basisrings. Alternativ kann der Antrieb auch derart ausgebildet sein, dass die Antriebswelle 56 ausserhalb eines Basisrings angeordnet ist, also auf einer Aussenseite des Basisrings der Basis abrollt.

In einer speziellen Ausführungsform weist der Laserscanner insgesamt nur eine Energieversorgungseinheit auf, nämlich die Energieversorgungseinheit für das aktive Antriebselement 55, welche in der Stütze 4 angeordnet ist, wobei die Basis 5' dauerhaft und unüberwindbar elektrisch von der Stütze 4 entkoppelt ist und keine elektrische Leistungsübertragung zwischen der Stütze 4 und der Basis 5' erfolgt.

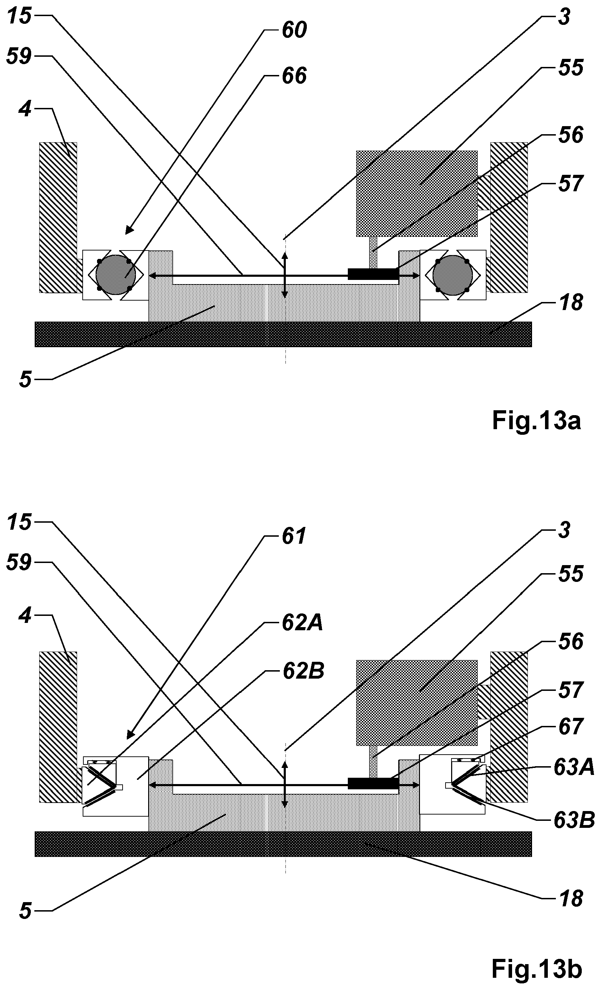

Die **Figuren 13a,b** zeigen zwei Ausführungsformen einer erfindungsgemässen Lagerung einer axial kompakten Stehachse, das heisst einer im Vergleich zur radialen Ausdehnung 59 kurzen axialen Stehachse. In den gezeigten Beispielen steht der Laserscanner beispielsweise jeweils auf einem Tisch 18.

Durch die axial kompakte (kurze) Bauweise weist die Stehachse entlang der Stütz-Drehachse 3 ausschliesslich einen kurzen insgesamt wirksamen Stabilisationsbereich 15 auf, mittels welchem eine Stabilisation der Stütze 4 bezüglich einer Verkippung der Stütze 4 zur Basis 5, respektive zur Stütz-Drehachse 3, erwirkt wird. Um trotzdem eine Verkippung der Stütze 4 zur Basis 5 zu verhindern ist deshalb erfindungsgemäss die zur Stütz-Drehachse 3 senkrechte, im Wesentlichen radialsymmetrische, Ausdehnung 59 der Stehachse grösser als ihre axiale Ausdehnung.

Gemäss einem Aspekt der Erfindung ist die Stütze 4 ferner mit einem einzigen Lagerkranz um die Stütz-Drehachse drehbar am Stabilisationsbereich 15 der Basis 5 gelagert, wobei die Stabilisation ausschliesslich durch den einzigen Lagerkranz erwirkt wird.

Der Lagerkranz kann als ein einreihiges Vierpunkt-Wälzlager 60 mit einem Wälzkörper 66 **(****Fig. 13a****)** oder als ein einreihiges Gleitlager 61 mit einem Aussen- 62A und Innenring 62B ausgebildet sein **(****Fig. 13b****),** wobei der Aussen- mit dem Innenring zwei bezüglich der Stütz-Drehachse 3 axial beabstandete Kontaktläufe 63A,B bildet. Zum Beispiel kann einer Kontaktläufe 63A gefedert 67 angeordnet sein, um für die Drehung um die Stütz-Drehachse 3 ausreichend Spiel zu gewährleisten.

Die Stabilisation kann dann beispielsweise mittels einer zur Stütz-Drehachse 3 radial wirkenden Vorspannung auf den Lagerkranz erzeugt werden.

Ein weiterer Aspekt richtet sich darauf, dass Lager-Schmiermittel nicht aus dem Lager in übrige Teile des Laserscanners austritt. Dies ist beispielsweise wichtig bei einem als Drehmotor 55 mit einer zur Stütz-Drehachse 3 versetzten Antriebswelle 56 und mit einem mit einem Gummiring ausgebildeten Laufrad 57 ausgestalteten Antrieb (siehe Beschreibung zu Fig. 12) für die Drehung der Stütze 4 um die Stütz-Drehachse 3, da durch Schmiermittel beispielsweise die Haftung des Laufrads 57 auf dem Basisring 58 (siehe Fig. 12) reduziert wird.

Einerseits kann dies dadurch erreicht werden, dass zum Beispiel das Lager als ein Vierpunkt-Wälzlager in Form eines Trockenlaufringlagers mit Keramik-Wälzkörpern ausgebildet ist.

Andererseits kann zum Beispiel entlang eines zu einem Kontaktlauf verlaufenden Grenzbereichs eine Schmiermittel abweisende Emulsion aufgebracht werden, sodass eine Ausbreitung eines Schmiermittels durch die Oberflächenspannung der Schmiermittel abweisenden Emulsion im Wesentlichen durch den Grenzbereich begrenzt ist.

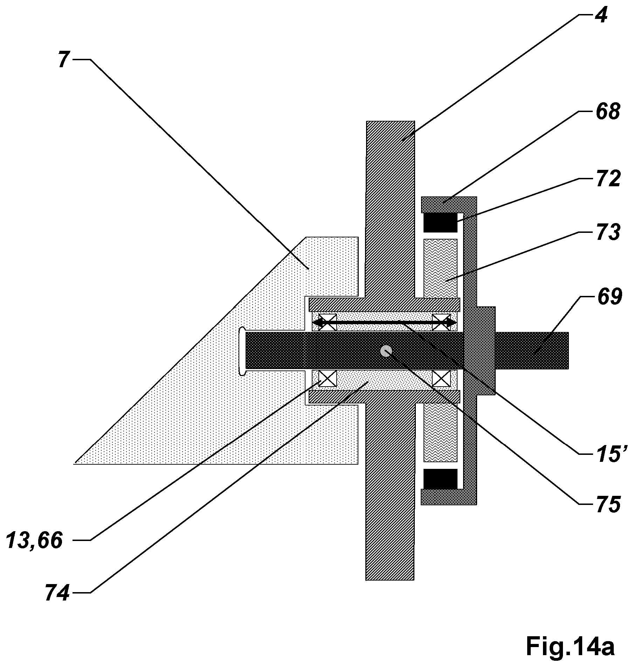

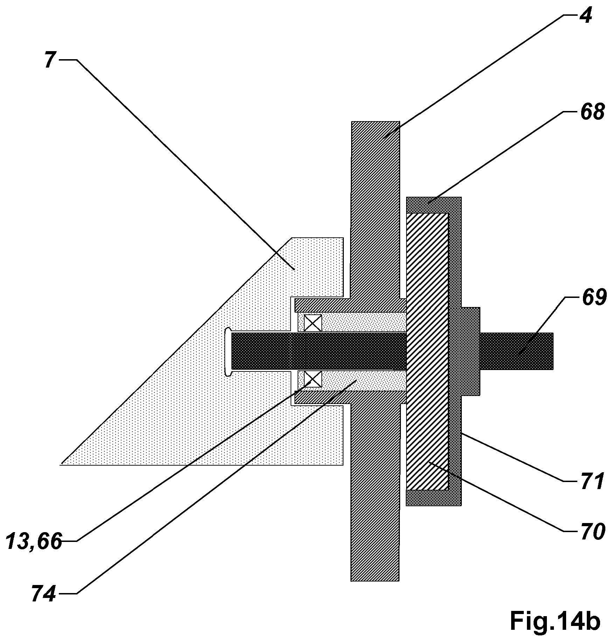

Die Figuren 14a,b zeigen eine beispielhafte Lagerung 13 und einen kompakten Antrieb der Strahllenkeinheit 7 um die schnelle Achse mittels eines Glockenelements 68.

**Figur 14a** zeigt die Strahllenkeinheit 7, welche mit einer in der Stütze 4 gelagerten 13 Welle 69 entlang der Strahl-Drehachse verbunden ist, insbesondere wobei die Welle 69 mit einer definierten Eindringtiefe in die Strahllenkeinheit 7 eindringt oder mit der Strahllenkeinheit 7 einstückig ausgebildet ist. Die Welle 69 ist ferner mit einem Glockenelement 68 verbunden, wobei durch das Glockenelement 68 ein Glockenbauch 70 und ein Glockenrücken 71 (siehe **Fig. 14b****)** definiert ist. Im Glockenbauch 70 ist ein passives Magnetelement 72 angeordnet, welches mit dem Glockenelement 68 verbunden ist und an der Stütze 4 ist ein aktives Antriebselement 73 zur Erzeugung einer elektro-magnetischen Wechselwirkung mit dem passiven Magnetelement 72 angeordnet, beispielsweise ein elektrisches Spulenelement, wobei das aktive Antriebselement 73 zumindest teilweise in den Glockenbauch 70 ragt, sodass die Strahllenkeinheit 7 durch eine radiale Wechselwirkung zwischen dem aktiven Antriebselement 73 und dem passiven Magnetelement 72 in eine definierte Drehbewegung um die Strahl-Drehachse versetzt werden kann.

Für eine möglichst kompakte Bauweise sind beispielsweise das aktive Antriebselement 73 komplett und die Lagerbuchse 74 für die Lagerung 13 der Welle 69 in der Stütze 4 zumindest teilweise im Glockenbauch 70 angeordnet, insbesondere wobei das Lager als ein Wälzlager ausgebildet ist und Wälzkörper 66 des Wälzlagers zumindest teilweise in den Glockenbauch 70 ragen. Zudem kann ein Teil der Lagerbuchse 74 in die Strahllenkeinheit 7 ragen, insbesondere wobei Teile der Wälzkörper 66 des Wälzlagers zumindest teilweise in die Strahllenkeinheit 7 ragen.

Ein weiterer optionaler Aspekt bezieht sich darauf, dass die Welle 69 axial entlang der Strahl-Drehachse ausschliesslich einen einzigen wirksamen Stabilisationsbereich 15' umfasst, mittels welchem eine Stabilisation der Welle 69 bezüglich einer Verkippung der Welle 69 zur Stütze 4, respektive zur Strahl-Drehachse, erwirkt wird, wobei die Strahllenkeinheit 7, das Glockenelement 68 und die Welle 69 derart ausgebildet und bezüglich einander angeordnet sind (beispielsweise auch mithilfe von Auswuchtelementen), dass ihr gemeinsamer Schwerpunkt 75 axial entlang der Strahl-Drehachse im Stabilisationsbereich 15' liegt, insbesondere wobei die Stabilisation ausschliesslich durch ein den Schwerpunkt 75 im Wesentlichen axial-symmetrisch umfassendes Lager erwirkt wird.

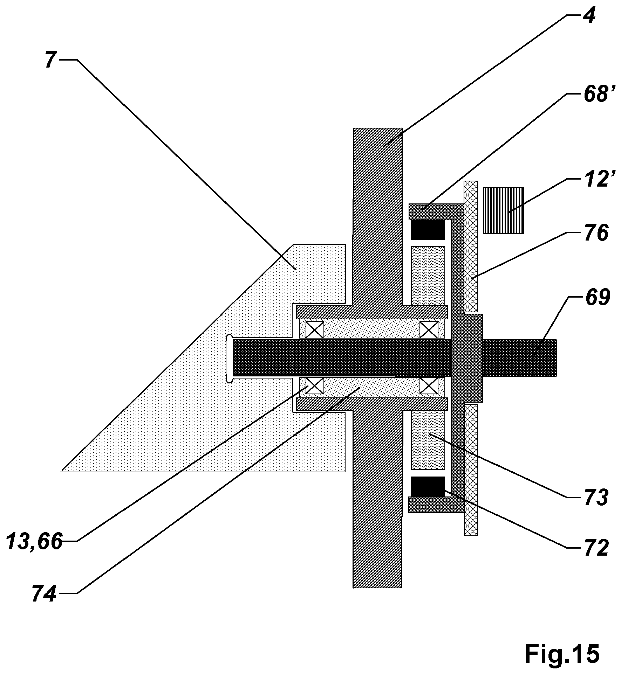

**Figur 15** zeigt weitere Ausführungsform des erfinderischen Glockenelements 68', wobei hier am Glockenrücken eine Encoderscheibe 76 angeordnet ist, insbesondere integriert oder einstückig mit dem Glockenelement 68', zur Erfassung von Winkelencoderdaten bezüglich der Drehung der Strahllenkeinheit 7 um die Strahl-Drehachse mittels eines in der Stütze 4 angeordneten Winkelencoders 12'.

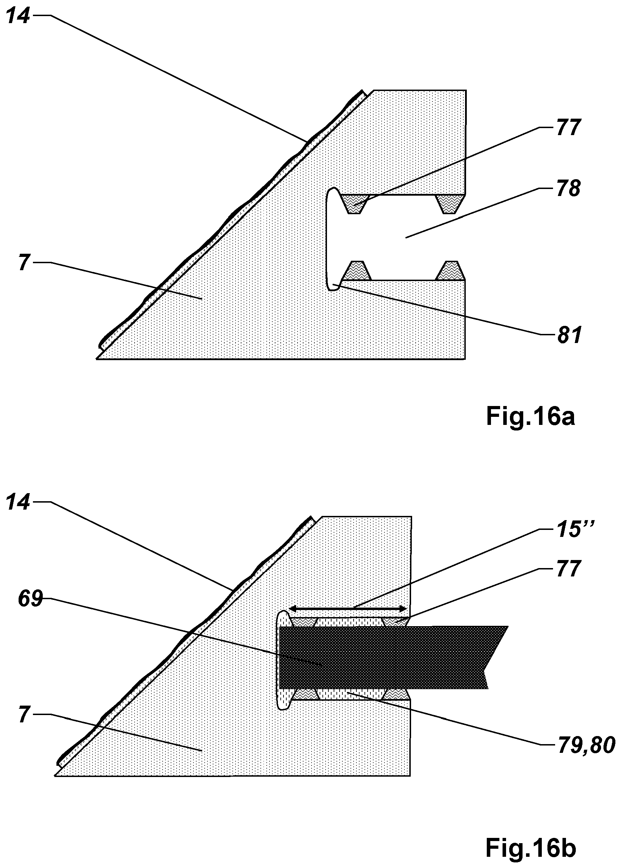

Die Figuren 16a,b zeigen eine beispielhafte Kopplung einer Strahllenkeinheit 7 mit der Welle 69 entlang der Strahl-Drehachse mittels verpressbaren Stabilisationselementen 77 in gekoppeltem und ungekoppeltem Zustand.

**Figur 16a** zeigt die ungekoppelte Strahllenkeinheit 7, welche eine Spiegelfläche 14 für eine Ablenkung der Distanzmessstrahlung umfasst, insbesondere eine bezüglich der Strahl-Drehachse verkippte Spiegelfläche. Typischerweise ist die Spiegelfläche 14 aufgrund der hohen Fliehkräfte durch die schnelle Rotation der Strahllenkeinheit 7 mit der Strahllenkeinheit einstückig ausgebildet.

Die Strahllenkeinheit 7 weist einen Umfassungsbereich 78 auf für ein Eindringen der Welle 69 im Rahmen einer Kopplung der Strahllenkeinheit 7 mit der Welle 69, sodass in gekoppeltem Zustand zwischen der Welle 69 und dem Umfassungsbereich 78 der Strahllenkeinheit 7 ein Spalt 79 mit definierter Weite vorhanden ist (siehe **Fig. 16b****,** welche die Strahllenkeinheit 7 in mit der Welle 69 gekoppeltem Zustand zeigt). Der Umfassungsbereich 78 weist ferner ein in dem Spalt 79 verpressbares Stabilisationselement 77 zum Toleranzausgleich und zum stabilen Verbinden von der Strahllenkeinheit 7 mit der Welle 69 auf, wobei das Stabilisationselement 77 im ungekoppelten Zustand eine Dicke aufweist, die grösser ist als die Weite des Spaltes 79 und die Welle 69 in gekoppeltem Zustand beispielsweise durchgehend ringförmig umschliesst.

Gemäss einem optionalen Aspekt sind die Strahllenkeinheit 7, die Welle 69 und das Stabilisationselement 77 derart ausgebildet und wirken derart zusammen, dass im Rahmen der Kopplung der Strahllenkeinheit 7 mit der Welle 69 das zwischen dem Umfassungsbereich 78 und der Welle 69 angeordnete Stabilisationselement 77 verpresst wird und in gekoppeltem Zustand derart deformiert im Spalt 79 vorliegt, beispielsweise wobei mindestens ein Teil des Stabilisationselements 77 plastisch deformiert wird, dass lediglich kleine restelastische Kräfte radial zur Strahl-Drehachse auf die Strahllenkeinheit 7 und die Welle 69 wirken; und die Strahllenkeinheit 7 und die Welle 69 bezüglich der Strahl-Drehachse in axialer Richtung stabilisiert zueinander vorliegen, die Strahllenkeinheit 7 über einen durch die Länge des Eindringbereichs definierten Stabilisationsbereich 15" bezüglich einer Verkippung zur Welle 69 stabilisiert ist und die restelastischen Kräfte bis auf einen definierten Toleranzbereich nicht auf die Spiegelfläche 14 wirken, insofern, dass die restelastischen Kräfte auf die Spiegelfläche 14 derart klein sind, dass eine hohe Oberflächengenauigkeit der Spiegelfläche 14 erhalten bleibt.

Das Stabilisationselement 77 kann beispielsweise ringförmig und aus einem Material mit homogenen plastischen Eigenschaften, beispielsweise einem homogenen plastischen Fliessbereich, ausgebildet sein, wobei das Stabilisationselement 77 in die Strahllenkeinheit 7 integriert ist, beispielsweise an die Strahllenkeinheit 7 angespritzt.

Zusätzlich werden die Strahllenkeinheit 7 und die Welle 69 typischerweise im Rahmen ihrer Kopplung zueinander verklebt 80, wobei für überschüssigen Kleber oder zur Anbringung des Klebers in der Strahllenkeinheit 7 definierte Öffnungen 81 oder Zugänge vorgesehen sind.

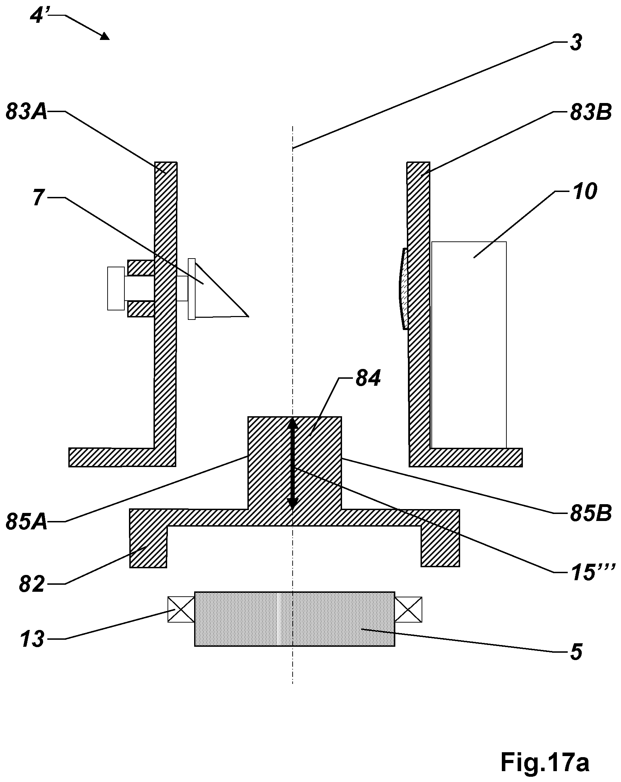

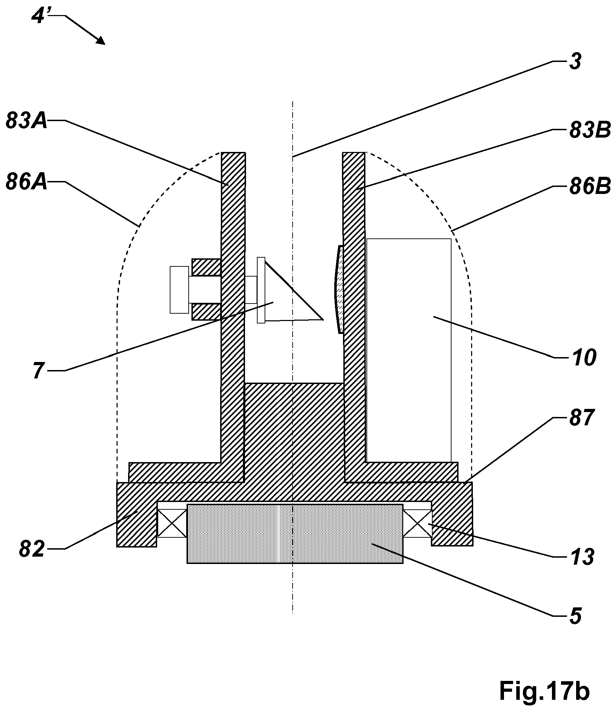

Die Figuren 17a,b zeigen eine Anordnung eines Laserscanners mittels einer skelettartigen, dreiteiligen Stütze 4' und einer Basis 5, wobei die Stütze 4' hier mittels eines skelettartigen Aufbaus bestehend aus drei separat lösbaren Tragestrukturen 82,83A,B ausgebildet ist, welche beispielsweise mittels einer Verbindung basierend auf Normalstiften aneinander gekoppelt sind. **Figur 17a** zeigt die einzelnen Elemente der Stütze 4' und die Basis 5, wohingegen **Figur 17b** die zusammengesetzten Elemente darstellt.

Eine zentrale Tragestruktur 82 ist koaxial zur Stütz-Drehachse 3 auf der Basis 5 gelagert und zwei weitere separate Tragestrukturen 83A,B sind mit der zentralen Tragestruktur 82 verbunden, nicht aber mit der Basis 5, wobei die Strahllenkeinheit 7 ausschliesslich in einer der weiteren Tragestrukturen 83A angeordnet ist. Insbesondere wird durch die zentrale Tragestruktur 82 eine Stehachse 84 mit einem wirksamen Stabilisationsbereich 15‴ definiert, mittels welchem eine Stabilisation der weiteren Tragestrukturen 83A,B bezüglich einer Verkippung der Tragestrukturen 83A,B zur Stehachse 84 und somit zur Stütz-Drehachse 3 erwirkt wird. Weiter umfasst die Stehachse 84 zwei Aufnahmen 85A,B zur Aufnahme und Kopplung der weiteren, insbesondere plattenartig ausgebildeten, Tragestrukturen 83A,B.

Ein solcher Aufbau der Stütze 4' erlaubt beispielsweise einen modularen Einsatz des Laserscanners, insbesondere hinsichtlich Service, das heisst Wartung oder Austausch einzelner modularer Teile, oder hinsichtlich Upgrade-Möglichkeiten des Laserscanners. Zum Beispiel können die Tragestrukturen derart ausgebildet sein, dass die eine Tragestruktur 83A die Strahllenkeinheit aufnimmt und eine weitere Tragestruktur 83B die Distanzmessvorrichtung 10 aufnimmt, wodurch diese beiden Kernelemente des Laserscanners jeweils modular austauschbar sind.

Um trotz des skelettartigen Aufbaus eine ausreichende Achslagen-Stabilität, insbesondere bezüglich einer Verkippung der die Strahllenkeinheit 7 tragenden Tragestruktur 83A zur Stütz-Drehachse 3 zu gewährleisten, sind die Tragestrukturen 82,83A,B, insbesondere die zwei weiteren Tragestrukturen 83A,B, beispielsweise jeweils mittels eines Vollaluminiumgehäuses 86A,B ausgebildet (angedeutet durch die gestrichelte Linie in Fig. 17b), welches beispielsweise zusätzlich direkt auf einer horizontalen Fläche 87 der zentralen Tragestruktur 82 aufliegt.

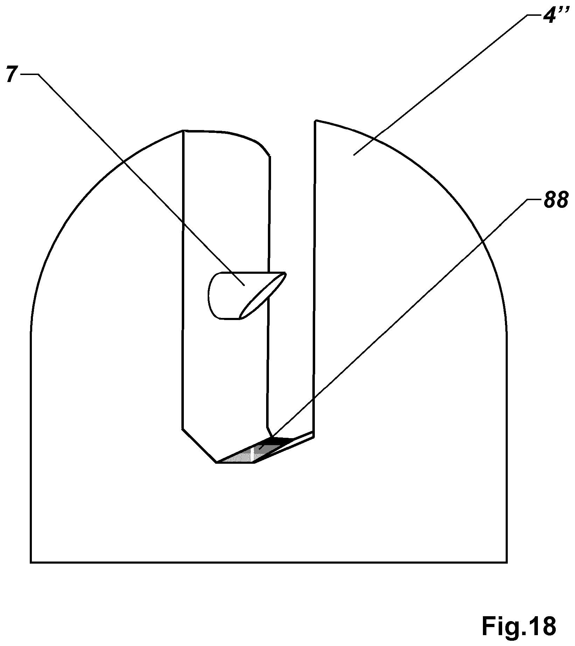

**Figur 18** zeigt ein typisches Referenz-Element 88 in der Stütze 4" für die Einstellung und/oder Kalibration der Distanzmessvorrichtung, beispielsweise für eine Intensitäts-, Kontrast- und/oder Distanz-Referenz. Typischerweise kann die Reflektivität und/oder Farbe des Referenzelements 88 mit der durch die drehende Strahllenkeinheit 7 definierten Strahldrehrichtung variieren, beispielsweise um eine dynamische Distanz- und Intensitätskalibrierung zu ermöglichen. Im gezeigten Beispiel variiert die Reflektivität des Referenzelements 88 in drei fixen Stufen. Alternativ dazu kann auch ein Referenz-Element mit einem Reflektivitätsverlauf und/oder mit einem Farbverlauf verwendet werden.

Die Distanzmesseinheit und die Abtastung können sowohl auf einem einzelnen Distanzmessstrahl als auch auf einer Mehrzahl von gleichzeitig ausgesendeten Distanzmessstrahlen basieren.

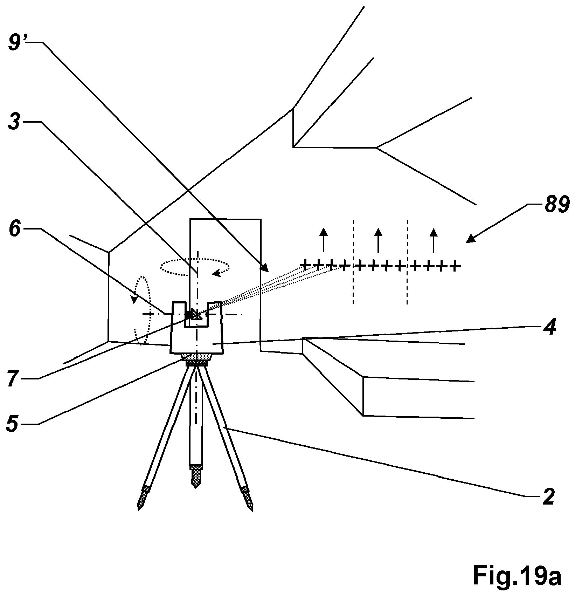

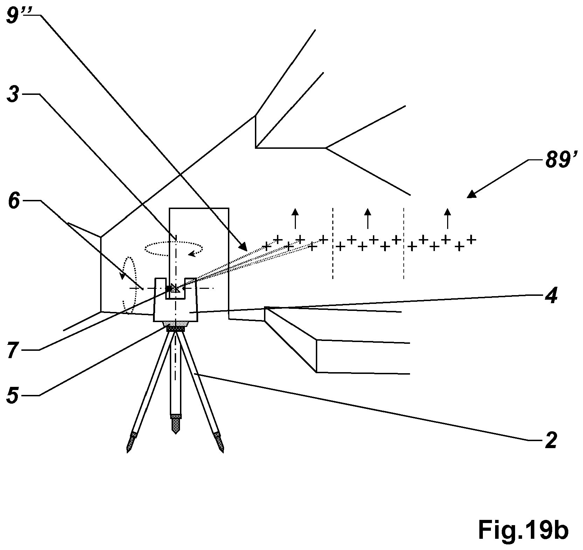

Die **Figur 19a** und die **Figur 19b** zeigt einen Laserscanner, wobei die Distanzmesseinheit und die Abtastung auf einem mehrstrahligen Abtastmuster 89,89', beispielsweise einer Mehrzahl von gleichzeitig ausgesendeten Distanzmessstrahlen basieren. Dies hat beispielsweise den Vorteil, dass mit einer geringeren Rotationsgeschwindigkeit der Strahllenkeinheit um die schnelle Achse eine höhere Punktrate und/oder eine höhere Punktdichte erzielt wird. Zum Beispiel kann anstelle eines einzelnen Distanzmessstrahls ein Strahlfächer 9' verwendet werden, beispielsweise bestehend aus vier nebeneinander angeordneten Einzelstrahlen mit jeweils kleiner Divergenz.

Zum Beispiel werden die Einzelstrahlen dabei von einem in der Stütze 4 angeordneten elektronischen Distanzmessmodul mit mehreren Sendestrahlen erzeugt und auf die Strahllenkeinheit 7 gerichtet, beispielsweise mit einer Divergenz von weniger als 15 Grad zwischen den Einzelstrahlen. Beispielsweise werden die Strahlen derart ausgerichtet, dass durch die Einzelstrahlen im Rahmen des Abtastvorgangs in einem Abtastbereich Nahe zur horizontalen Abtastebene(zur Strahl-Drehachse 3 und Stütz-Drehachse 6 senkrechten Ebene) jeweils im Wesentlichen ähnlich ausgerichtete Abtastmuster 89,89' erzeugt werden, beispielsweise eine Abtastzeile, insbesondere eine im Horizont waagrechte Abtastzeile 89 (Fig. 19a) oder eine im Wesentlichen - in der Figur 19b durch sechs Abtastpunkte gebildete - waagrechte Abtastzeile 89' (Fig. 19b) mit alternierend vertikal versetzten Abtastpunkten. Alternativ können die Einzelstrahlen derart ausgesendet werden, dass sie komplexe flächige Abtastmuster bilden.

Zumindest in einem definierten Abtastbereich, beispielsweise nahe der Horizontebene, können die Strahlfächer 89,89' derart ausgesendet werden, dass im Rahmen der Rotation der Stütze 4 und der Strahllenkeinheit 7, zum Beispiel komplementäre Abtastzeilen oder überlappende Abtastzeilen erzeugt werden. Die Punktdichte steigt in Richtung Zenit, wo beispielsweise die einzelnen Abtastpunkte, respektive Abtastzeilen, zunehmend überlappen. Die Verdrehung des Abtastmusters (90 Grad Drehung bezüglich Ausrichtung am Horizont) und Überbestimmung der 3D-Punktwolke im Zenit kann beispielsweise mittels entsprechender Datenreduktion und/oder Datenselektion berücksichtigt werden. Zudem kann eine Synchronisierung der Rotationsgeschwindigkeiten der Stütze 4 um die Stütz-Drehachse 3 und der Strahllenkeinheit 7 um die Strahl-Drehachse 6 erfolgen, um beispielsweise die Abtastung hinsichtlich Scanspuren zu optimieren.

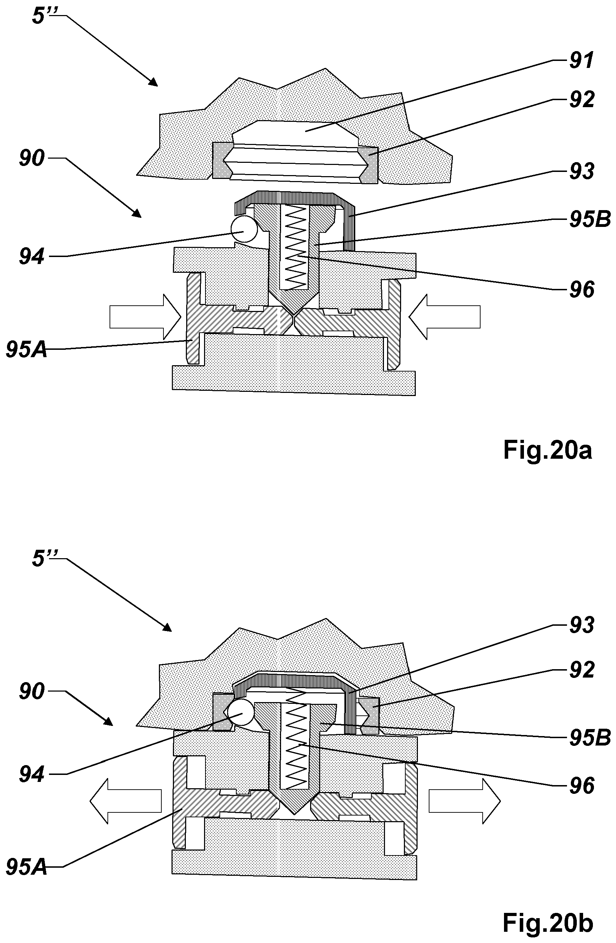

Die **Figur 20a,b** zeigt ein Aufnahmeelement 90 zur Aufnahme der Basis 5" eines Laserscanners, beispielsweise für die Befestigung des Laserscanners auf einem Stativ, wobei das Aufnahmeelement 90 mittels einer Rasteinrichtung von der Basis 5" lösbar ist. Figur 20a zeigt das Aufnahmeelement 90 im mit der Basis 5" ungekoppeltem Zustand und Figur 20b zeigt das Aufnahmeelement 90 im mit der Basis 5" gekoppeltem Zustand.

Die Rasteinrichtung umfasst an der Basis 5" eine Auslassung 91, in welche ein Ring 92 eingelassen ist, welcher Ring 92 im Inneren eine umfänglich fortlaufende Kavität aufweist und am Aufnahmeelement 90 einen Zapfen 93 umfasst, wobei der Zapfen 93 zumindest drei Rastkörper 94 aufweist, welche in einer Grundstellung einer Freigabeeinrichtung, bestehend aus einem Radialstift 95A, einem Axialstift 95B und einer Feder 96 radial herausdrängen, beispielsweise mittels einer vorspannenden Feder, um die Lösbarkeit des Aufnahmeelements 90 von der Basis 5" dadurch zu sperren, dass die Rastkörper 94 in die Kavität des Rings 92 greifen. Um das Aufnahmeelement 90 von der Basis 5" zu lösen, wird durch Betätigung der Freigabeeinrichtung ein radiales Entweichen der Rastkörper 94 in den Zapfen 93 hinein ermöglicht.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Laserscanner (1", 1‴) zur optischen Vermessung einer Umgebung, umfassend
• eine optische Distanzmessvorrichtung (10) zur Erfassung von Distanzmessdaten, mit
∘ einer Sendeeinheit zum Aussenden einer Distanzmessstrahlung und
∘ einer Empfangseinheit zum Empfangen von zurückkommenden Teilen der Distanzmessstrahlung,
• eine Basis (5, 5'),
• eine Stütze (4), welche um eine Stütz-Drehachse (3), insbesondere eine langsame Drehachse, drehbar auf der Basis befestigt ist,
• eine Strahllenkeinheit (7) für die Distanzmessstrahlung, welche um eine zur Stütz-Drehachse im Wesentlichen orthogonale Strahl-Drehachse (6), insbesondere eine schnelle Drehachse, drehbar an der Stütze befestigt ist,
• einen ersten Winkelencoder zur Erfassung von ersten Winkeldaten bezüglich einer Drehung der Stütze um die Stütz-Drehachse, und
• einen zweiten Winkelencoder zur Erfassung von zweiten Winkeldaten bezüglich einer Drehung der Strahllenkeinheit um die Strahl-Drehachse,
wobei der Laserscanner (1", 1‴) dazu ausgebildet ist, die Distanzmessdaten und die ersten und zweiten Winkeldaten, nachfolgend Messdaten genannt, im Rahmen eines Messvorgangs zu erfassen, welcher umfasst
• eine scannende Abtastung mittels der Distanzmessvorrichtung mit
∘ einer definierten fortlaufenden, insbesondere kontinuierlichen, Drehung der Stütze um die Stütz-Drehachse,
∘ einer definierten fortlaufenden Drehung der Strahllenkeinheit um die Strahl-Drehachse und
∘ einem fortlaufenden Aussenden der Distanzmessstrahlung und einem fortlaufenden Empfangen von zurückkommenden Teilen der Distanzmessstrahlung,
wobei
• die Basis axial entlang der Stütz-Drehachse ausschliesslich einen insgesamt wirksamen Stabilisationsbereich umfasst mittels welchem eine Stabilisation der Stütze bezüglich einer Verkippung der Stütze zur Basis erwirkt wird,
• der Stabilisationsbereich eine erste Ausdehnung (54) axial entlang der Stütz-Drehachse und eine zweite zur Stütz-Drehachse senkrechte und bezüglich der Stütz-Drehachse im Wesentlichen radialsymmetrische Ausdehnung (59) hat und
• die zweite Ausdehnung (59) grösser ist als die erste Ausdehnung (54),
**dadurch gekennzeichnet, dass**
die Basis bezüglich einer Drehung der Stütze um die Stütz-Drehachse ausschliesslich als passives Element ausgebildet ist, insofern, als dass sämtliche für die Motorisierung der Drehung um die Stütz-Drehachse benötigte aktive Elektronik ausschliesslich in der Stütze angeordnet ist und mit der Stütze um die Stütz-Drehachse mitdreht.

2. Laserscanner nach Anspruch 1,
**dadurch gekennzeichnet, dass**
die zweite Ausdehnung mindestens um einen Faktor zwei grösser ist als die erste Ausdehnung, insbesondere wobei die zweite Ausdehnung mindestens um einen Faktor fünf grösser ist als die erste Ausdehnung, im Speziellen wobei die zweite Ausdehnung mindestens um einen Faktor zehn grösser ist als die erste Ausdehnung.

3. Laserscanner nach Anspruch 1 oder 2,
**dadurch gekennzeichnet, dass**
die Stütze durch einen einzigen Lagerkranz um die Stütz-Drehachse gegenüber der Basis drehbar gelagert ist, wobei die Stabilisation ausschliesslich durch den einzigen Lagerkranz erwirkt wird.

4. Laserscanner nach Anspruch 3,
**dadurch gekennzeichnet, dass**
• der Lagerkranz als einreihiges Vierpunkt-Wälzlager ausgebildet ist, oder
• der Lagerkranz als einreihiges Gleitlager mit einem Aussen- und Innenring ausgebildet ist und der Aussen- mit dem Innenring zwei bezüglich der Stütz-Drehachse axial beabstandete Kontaktläufe, insbesondere zwei Lauflinien oder zwei Laufflächen, bildet.

5. Laserscanner nach einem der Ansprüche 3 oder 4,
**dadurch gekennzeichnet, dass**
die Stabilisation mittels einer zur Stütz-Drehachse radial wirkenden Vorspannung auf den Lagerkranz erzeugt wird.

6. Laserscanner nach einem der Ansprüche 3 bis 5,
**dadurch gekennzeichnet, dass**
der Lagerkranz als ein Vierpunkt-Wälzlager in Form eines Trockenlaufringlagers mit Keramik-Wälzkörpern ausgebildet ist.

7. Laserscanner nach einem der Ansprüche 1 bis 6,
**dadurch gekennzeichnet, dass**
die Strahllenkeinheit im Rahmen des Messvorgangs mit einer Rotationsgeschwindigkeit von mindestens 50 Hz, insbesondere von mindestens 100 Hz, um die Strahl-Drehachse rotiert und/oder
die Basis im Rahmen des Messvorgangs mit einer Rotationsgeschwindigkeit von mindestens 0.01 Hz, insbesondere von mindestens 0.02 Hz, um die Stütz-Drehachse rotiert.

8. Laserscanner nach einem der vorangehenden Ansprüche,
**dadurch gekennzeichnet, dass**
folgende Komponenten jeweils als Ganzes in der Stütze angeordnet sind und mit der Stütze um die Stütz-Drehachse mitdrehen
• ein aktives Antriebselement für die Drehung der Stütze um die Stütz-Drehachse, insbesondere ein Drehmotor mit einer an den Motor gekoppelten Antriebswelle oder ein elektrisches Spulenelement für eine bezüglich der Stütz-Drehachse radiale Wechselwirkung zwischen dem elektrischen Spulenelement und einem passiven Magnetelement in der Basis, und
• eine Energieversorgungseinheit für das aktive Antriebselement.

9. Laserscanner nach einem der vorangehenden Ansprüche,
**dadurch gekennzeichnet, dass**
• für die Drehung der Stütze um die Stütz-Drehachse ein in der Stütze angeordneter Drehmotor mit einer an den Motor gekoppelten Antriebswelle ausgebildet ist,
• die Antriebswelle mit einem Versatz zur Stütz-Drehachse axial im Wesentlichen parallel zur Stütz-Drehachse verläuft,
• die Basis eine um die Stütz-Drehachse kreissymmetrische Lauffläche umfasst,
• an der Antriebswelle ein Laufrad angeordnet ist, insbesondere mit Gummiring, das derart mit der Lauffläche in Wirkverbindung steht, dass bei Drehung der Antriebswelle das Laufrad entlang der Lauffläche läuft und sich damit die Stütze gegenüber der Basis um die Stütz-Drehachse dreht,
insbesondere wobei die Lauffläche einen fiktiven Kreis definiert und das Laufrad innerhalb des Kreises angeordnet ist.

10. Laserscanner nach einem der vorangehenden Ansprüche,
**dadurch gekennzeichnet, dass**
ferner folgende Komponenten jeweils als Ganzes in der Stütze angeordnet sind und mittels der Energieversorgungseinheit betrieben werden
• die optische Distanzmessvorrichtung,
• eine Kamera,
• eine Kontroll- und Steuereinheit, und
• Elektronik des ersten und zweiten Winkelencoders,
insbesondere wobei die Basis und die Stütze derart ausgebildet sind, dass im Rahmen des Messvorgangs zwischen der Basis und der Stütze keine elektrische Leistungsübertragung und keine elektrische Signalübertragung erfolgt.

11. Laserscanner nach einem der vorangehenden Ansprüche,
**dadurch gekennzeichnet, dass**
• der Laserscanner insgesamt nur die eine Energieversorgungseinheit umfasst, nämlich die Energieversorgungseinheit für das aktive Antriebselement, welche in der Stütze angeordnet ist,
insbesondere wobei die Basis dauerhaft und unüberwindbar elektrisch von der Stütze entkoppelt ist, dass keine elektrische Leistungsübertragung zwischen der Stütze und der Basis erfolgt.

12. Laserscanner nach einem der vorangehenden Ansprüche,
**dadurch gekennzeichnet, dass**
der Laserscanner eine drahtlose Signalübertragungseinheit umfasst, insbesondere basierend auf einer WLAN- oder Bluetooth-Verbindung, wobei die Signalübertragungseinheit als Ganzes in der Stütze angeordnet ist, wobei
• zwischen dem Laserscanner und einer externen Kontrolleinheit ein beidseitiger Austausch von Steuersignalen vorgesehen ist und/oder
• eine Übertragung eines Teils der Messdaten vom Laserscanner auf eine externe Rechen- und/oder Speichereinheit vorgesehen ist, insbesondere wobei eine beidseitige Übertragung von Messdaten und/oder Hilfsdaten zwischen dem Laserscanner und der externen Rechen- und/oder Speichereinheit vorgesehen ist.

13. Laserscanner nach Anspruch 12,
**dadurch gekennzeichnet, dass**
die Übertragung der Mess- und/oder Hilfsdaten mittels eines bezüglich des Starts des Messvorgangs gleichzeitig oder zumindest zeitnah gestarteten Datenstreamings von Teilen der Messdaten im Wesentlichen parallel zum Messvorgang erfolgt.

## Claims

1. A laser scanner (1",1‴) for optical measurement of an environment, comprising
• an optical distance measuring device (10) for detecting distance measurement data, having
∘ a transmitter unit for emitting a distance measurement radiation and
∘ a receiver unit for receiving returning parts of the distance measurement radiation,
• a base (5,5'),
• a support (4), which is fixed on the base such that it can rotate about a support axis of rotation (3), in particular a slow axis of rotation,
• a beam steering unit (7) for the distance measurement radiation, which is fixed to the support such that it can rotate about a beam axis of rotation (6) substantially orthogonal to the axis of rotation of the support, in particular a fast axis of rotation,
• a first angle encoder for recording first angle data with respect to a rotation of the support about the support axis of rotation, and
• a second angle encoder for recording second angle data with respect to a rotation of the beam steering unit about the beam axis of rotation,
wherein laser scanner (1",1‴) is configured such that the distance measurement data and the first and second angle data, hereafter designated as measurement data, are detected during a measurement process which comprises
• a scanning sampling by means of the distance measuring device with
∘ a defined continuous rotation of the support about the support axis of rotation,
∘ a defined ongoing rotation of the beam steering unit about the beam axis of rotation, and
∘ a continuous emission of the distance measurement radiation and a continuous reception of returning parts of the distance measurement radiation,
wherein
• the base comprises a only one overall effective stabilization region axially along the support axis of rotation, which is used to stabilize the support against a tilting of the support relative to the base,
• the stabilization region has a first extension (54) axially along the support axis of rotation and a second extension (59) perpendicular to the support axis of rotation and substantially radially symmetric with respect to the support axis of rotation, and
• the second extension (59) is larger than the first extension (54)
**characterized in that**
with respect to a rotation of the support about the support axis of rotation the base is designed exclusively as passive element, in the sense that all active electronics required for the motorization of the rotation around the support axis of rotation is arranged exclusively in the support and co-rotates with the support around the axis of rotation of the support.

2. The laser scanner as claimed in claim 1,
**characterized in that**
the second extension is greater than the first extension by at least a factor of two, in particular wherein the second extension is greater than the first extension by at least a factor of five.

3. The laser scanner as claimed in claim 1 or 2,
**characterized in that**
the support is mounted by means of a single bearing rim such that it can pivot relative to the base about the support axis of rotation, wherein the stabilization is achieved exclusively by the single bearing rim.

4. The laser scanner as claimed in claim 3,
**characterized in that**
• the bearing rim is designed as a single-row four-point roller bearing, or
• the bearing rim is designed as a single-row sliding bearing with an outer and inner ring and the outer ring forms two contact bearings with the inner ring, in particular two bearing lines or two bearing surfaces, axially spaced apart with respect to the support axis of rotation.

5. The laser scanner as claimed in claim 3,
**characterized in that**
the stabilization is generated by means of a spring loading acting on the bearing rim radially with respect to the support axis of rotation.

6. The laser scanner as claimed in one of claims 3 to 5,
**characterized in that**
the bearing rim is designed as a four-point roller bearing in the form of a dry-running ring bearing with ceramic roller elements.

7. The laser scanner according to claim 1 to 6,
**characterized in that**
during the measurement process the beam steering unit rotates about the beam axis of rotation with a rotation speed of at least 50 Hz, in particular of at least 100 Hz, and/or
during the measurement process the base rotates about the support axis of rotation with a rotation speed of at least 0.01 Hz, in particular of at least 0.02 Hz.

8. The laser scanner according to any one of the preceding claims,
**characterized in that**
each of the following components is arranged entirely in the support and co-rotates with the support about the support axis of rotation:
• an active drive element for the rotation of the support about the support axis of rotation, in particular a rotary motor with a drive shaft coupled to the motor or an electrical coil element for a radial interaction with respect to the support axis of rotation between the electrical coil element and a passive magnetic element in the base, and
• a power supply unit for the active drive element.

9. The laser scanner as claimed in one of the preceding claim,
**characterized in that**
• for the rotation of the support about the support axis of rotation, a rotary motor arranged in the support is designed with a drive shaft coupled to the motor,
• the drive shaft runs axially with an offset relative to the support axis of rotation substantially parallel to the support axis of rotation,
• the base comprises a circular symmetrical bearing surface around the support axis of rotation,
• an idle wheel is arranged on the drive shaft, in particular with a rubber ring, which is operatively connected to the bearing surface in such a way that during rotation of the drive shaft the idle wheel runs along the bearing surface and therefore the support rotates about the support axis of rotation with respect to the base,
in particular, wherein the bearing surface defines a virtual circle and the idle wheel is arranged inside the circle.

10. The laser scanner as claimed in one of the preceding claims,
**characterized in that**
in addition the following components are arranged entirely in the support and are operated by means of the power supply unit
• the optical distance measuring device,
• a camra,
• a monitoring and control unit, and
• electronics of the first and second angle encoders,
in particular wherein the base and the support are designed in such a way that during the measurement process no electrical power transmission and no electrical signal transmission takes place between the base and the support.

11. The laser scanner as claimed in one of the preceding claims,
**characterized in that**
• the laser scanner comprises a total of only one power supply unit, namely the power supply unit for the active drive element, which is arranged in the support,
in particular wherein the base is permanently and irreversibly electrically decoupled from the support, such that no electrical power transmission takes place between the support and the base.

12. The laser scanner as claimed in one of the preceding claims,
**characterized in that**
the laser scanner comprises a wireless signal transmission unit, in particular based on a WLAN or Bluetooth connection, wherein the signal transmission unit as a whole is arranged in the support, wherein
• a two-way exchange of control signals is provided between the laser scanner and an external monitoring unit and/or
• a transmission of a portion of the measurement data from the laser scanner to an external computing and/or storage unit is provided, in particular wherein a two-way transmission of measurement data and/or auxiliary data is provided between the laser scanner and the external computing and/or storage unit.

13. The laser scanner as claimed in claim 12, **characterized in that**
the transmission of the measurement and/or auxiliary data is carried out substantially parallel to the measurement process by means of a data streaming of parts of the measurement data which is started simultaneously with respect to the start of the measurement process, or at least almost simultaneously.

## Revendications

1. Scanner laser (1", 1‴) pour la mesure optique d'un environnement, comprenant :
• un dispositif optique de mesure de distance (10) pour l'acquisition de données de mesure de distance, avec
∘une unité d'émission pour émettre un rayonnement de mesure de distance et
∘ une unité de réception pour recevoir des parties renvoyées du rayonnement de mesure de distance,
• une base (5, 5'),
• un support (4) qui est fixé de manière à pouvoir tourner sur la base autour d'un axe de rotation de support (3), en particulier un axe de rotation lent,
• une unité de guidage de faisceau (7) pour le rayonnement de mesure de distance, qui est fixée de manière à pouvoir tourner sur le support autour d'un axe de rotation de faisceau (6) essentiellement orthogonal à l'axe de rotation de support, en particulier un axe de rotation rapide,
• un premier codeur angulaire pour l'acquisition de premières données angulaires relatives à une rotation du support autour de l'axe de rotation de support, et
• un deuxième codeur angulaire pour l'acquisition de deuxièmes données angulaires relatives à une rotation de l'unité de guidage de faisceau autour de l'axe de rotation de faisceau,
le scanner laser (1", 1‴) étant conçu pour acquérir les données de mesure de distance ainsi que les premières et deuxièmes données angulaires, ci-après dénommées données de mesure, dans le cadre d'un processus de mesure qui comprend
• une détection par balayage au moyen du dispositif de mesure de distance avec
∘ une rotation définie continue, en particulier ininterrompue, du support autour de l'axe de rotation de support,
∘ une rotation définie continue de l'unité de guidage de faisceau autour de l'axe de rotation de faisceau et
∘ une émission continue du rayonnement de mesure de distance et une réception continue des parties renvoyées du rayonnement de mesure de distance,
dans lequel
• la base comprend, axialement le long de l'axe de rotation de support exclusivement, une zone de stabilisation globalement efficace au moyen de laquelle une stabilisation du support concernant un basculement du support par rapport à la base est obtenue,
• la zone de stabilisation présente une première extension (54) axialement le long de l'axe de rotation de support et une deuxième extension (59) perpendiculaire à l'axe de rotation de support et essentiellement symétrique radialement par rapport à celui-ci, et
• la deuxième extension (59) est plus grande que la première extension (54),
**caractérisé en ce que**
la base est conçue exclusivement comme un élément passif concernant une rotation du support autour de l'axe de rotation de support, en ce sens que toute l'électronique active nécessaire à la motorisation de la rotation autour de l'axe de rotation de support est disposée exclusivement dans le support et tourne avec le support autour de l'axe de rotation de support.

2. Scanner laser selon la revendication 1,
**caractérisé en ce que**
la deuxième extension est au moins deux fois plus grande que la première extension, en particulier la deuxième extension étant au moins cinq fois plus grande que la première extension, et plus particulièrement la deuxième extension étant au moins dix fois plus grande que la première extension.

3. Scanner laser selon la revendication 1 ou 2,
**caractérisé en ce que**
le support est monté de manière à pouvoir tourner par rapport à la base autour de l'axe de rotation de support au moyen d'une seule couronne de palier, la stabilisation étant assurée exclusivement par cette seule couronne de palier.

4. Scanner laser selon la revendication 3,
**caractérisé en ce que**
• la couronne de palier est conçue comme un roulement à rouleaux à quatre points à une rangée, ou
• la couronne de palier est conçue comme un palier lisse à une rangée comportant une bague extérieure et une bague intérieure, et la bague extérieure forme avec la bague intérieure deux chemins de contact espacés axialement par rapport à l'axe de rotation de support, en particulier deux lignes de roulement ou deux surfaces de roulement.

5. Scanner laser selon l'une des revendications 3 ou 4,
**caractérisé en ce que**
la stabilisation est obtenue au moyen d'une précontrainte agissant radialement sur la couronne de palier par rapport à l'axe de rotation de support.

6. Scanner laser selon l'une des revendications 3 à 5,
**caractérisé en ce que**
la couronne de palier est conçue comme un roulement à quatre points de contact sous la forme d'un roulement à bague de roulement à sec avec des éléments roulants en céramique.

7. Scanner laser selon l'une des revendications 1 à 6,
**caractérisé en ce que**
l'unité de guidage de faisceau tourne, dans le cadre du processus de mesure, à une vitesse de rotation d'au moins 50 Hz, en particulier d'au moins 100 Hz, autour de l'axe de rotation de faisceau et/ou la base tourne, dans le cadre du processus de mesure, à une vitesse de rotation d'au moins 0,01 Hz, en particulier d'au moins 0,02 Hz, autour de l'axe de rotation de support.

8. Scanner laser selon l'une des revendications précédentes,
**caractérisé en ce que**
les composants suivants sont chacun disposés dans leur ensemble dans le support et tournent avec le support autour de l'axe de rotation de support :
• un élément d'entraînement actif pour la rotation du support autour de l'axe de rotation de support, en particulier un moteur rotatif avec un arbre d'entraînement couplé au moteur ou un élément de bobine électrique pour une interaction radiale par rapport à l'axe de rotation de support entre l'élément de bobine électrique et un élément magnétique passif dans la base, et
• une unité d'alimentation en énergie pour l'élément d'entraînement actif.

9. Scanner laser selon l'une des revendications précédentes, **caractérisé en ce que**
• pour la rotation du support autour de l'axe de rotation de support, il est prévu un moteur rotatif disposé dans le support et comportant un arbre d'entraînement couplé au moteur,
• l'arbre d'entraînement s'étend axialement, essentiellement parallèlement à l'axe de rotation de support, avec un décalage par rapport à l'axe de rotation de support,
• la base comprend une surface de roulement à symétrie circulaire autour de l'axe de rotation de support,
• une roue de roulement, en particulier dotée d'un anneau en caoutchouc, est disposée sur l'arbre d'entraînement et est en liaison active avec la surface de roulement de telle sorte que, lors de la rotation de l'arbre d'entraînement, la roue de roulement roule le long de la surface de roulement et que le support tourne ainsi par rapport à la base autour de l'axe de rotation de support,
la surface de roulement définissant en particulier un cercle fictif et la roue de roulement étant disposée à l'intérieur de ce cercle.

10. Scanner laser selon l'une des revendications précédentes, **caractérisé en ce que**
les composants suivants sont en outre disposés dans leur ensemble dans le support et sont alimentés par l'unité d'alimentation en énergie :
• le dispositif optique de mesure de distance,
• une caméra,
• une unité de contrôle et de commande, et
• l'électronique des premier et deuxième codeurs angulaires,
en particulier la base et le support étant conçus de telle sorte que, dans le cadre du processus de mesure, aucun transfert de puissance électrique ni aucune transmission de signal électrique n'a lieu entre la base et le support.

11. Scanner laser selon l'une des revendications précédentes, **caractérisé en ce que**
• le scanner laser ne comprend globalement qu'une seule unité d'alimentation en énergie, à savoir l'unité d'alimentation en énergie pour l'élément d'entraînement actif, qui est disposée dans le support,
en particulier la base étant découplée électriquement de manière durable et irréversible du support, de telle sorte qu'aucun transfert de puissance électrique n'a lieu entre le support et la base.

12. Scanner laser selon l'une des revendications précédentes, **caractérisé en ce que**
le scanner laser comprend une unité de transmission de signaux sans fil, en particulier basée sur une connexion Wi-Fi ou Bluetooth, l'unité de transmission de signaux étant disposée dans son ensemble dans le support, dans lequel
• un échange bidirectionnel de signaux de commande est prévu entre le scanner laser et une unité de contrôle externe et/ou
• une transmission d'une partie des données de mesure du scanner laser vers une unité de calcul et/ou de stockage externe est prévue, en particulier une transmission bidirectionnelle de données de mesure et/ou de données auxiliaires entre le scanner laser et l'unité de calcul et/ou de stockage externe étant prévue.

13. Scanner laser selon la revendication 12,
**caractérisé en ce que**
la transmission des données de mesure et/ou auxiliaires a lieu essentiellement en parallèle avec le processus de mesure au moyen d'un flux de données de parties des données de mesure démarré simultanément ou au moins quasi simultanément par rapport au début du processus de mesure.
